# FASCICULE DE BREVET EUROPEEN

(11) **EP 2 109 632 B1**
(45) Date de publication et mention de la délivrance du brevet: **29.02.2012**
(21) Numéro de dépôt: 08761933.4
(22) Date de dépôt: 14.01.2008
(51) Int. Cl.: C08F 255/02, C08F 8/30, C08F 226/06, C02F 1/26, G21F 9/12

(54) **MATERIAU COMPRENANT DES POLYAZACYCLOALCANES, GREFFES SUR DES FIBRES DE POLYPROPYLENE, SON PROCEDE DE PREPARATION, ET PROCEDE D'ELIMINATION DE CATIONS METALLIQUES D'UN LIQUIDE**
MATERIAL MIT POLYAZACYCLOALKANEN, DIE AUF POLYPROPYLENFASERN AUFGESETZT SIND, VERFAHREN ZUR HERSTELLUNG DAVON UND VERFAHREN ZUR ENTFERNUNG VON METALLKATIONEN AUS EINER FLÜSSIGKEIT
MATERIAL COMPRISING POLYAZACYCLOALKANES GRAFTED ONTO POLYPROPYLENE FIBRES METHOD FOR PRODUCTION THEREOF AND METHOD FOR REMOVAL OF METAL CATIONS FROM A LIQUID

(30) Priorité: 16.01.2007 FR 0752696
(43) Date de publication de la demande: 21.10.2009
(73) Titulaire: Commissariat à l'Énergie Atomique et aux Énergies Alternatives, 75015 Paris (FR)
(72) Inventeur: RASCALOU, Frédéric, F-76000 Rouen (FR); DENAT, Franck, F-21000 Dijon (FR); GUILARD, Roger, F-21121 Fontaine Les Dijon (FR); BABOUHOT, Jean-Louis, F-21121 Fontaine Les Dijon (FR); CHOLLET, Hervé, F-21000 Dijon (FR); MEYER, Michel, F-21000 Dijon (FR)
(74) Mandataire: Ilgart, Jean-Christophe
(86) Numéro de dépôt international: PCT/FR2008/050062
(87) Numéro de publication internationale: WO 2008/099114

(56) Documents cités:
- EP-A- 0 287 436
- WO-A-01/15806
- WO-A-96/28433
- FR-A1- 2 774 092
- US-B1- 6 410 143

## Description

### DOMAINE TECHNIQUE

La présente invention concerne un matériau comprenant, de préférence constitué par, des polyazacycloalcanes, greffés sur des fibres de polypropylène. L'invention concerne en outre un procédé de préparation de ce matériau.

L'invention a trait enfin à un procédé d'élimination des cations métalliques d'un liquide notamment aqueux par mise en contact dudit liquide avec ledit matériau.

Lesdits cations métalliques peuvent être des cations de métaux lourds tels que le cuivre, le zinc, le cadmium, le tantale ou l'or, mais il s'agit plus particulièrement de cations d'éléments radioactifs de la famille des actinides ou des lanthanides, et la présente invention s'applique ainsi, plus particulièrement à la décontamination totale des effluents aqueux contaminés alpha.

Le domaine technique de l'invention peut être, de manière plus générale, défini comme celui des matériaux utilisés dans l'ultrapurification des liquides et plus spécifiquement dans la technique de l'extraction solide-liquide de métaux polluants dissous dans des effluents.

L'utilisation de matériaux élaborés suite au greffage de ligands polyazamacrocyliques et notamment tétraazamacrocycliques sur un support dans une technique d'extraction solide-liquide est connue pour des applications de purification poussée d'effluents aqueux. La sélectivité de ces molécules complexantes pour les métaux de transition, de post-transition, les lanthanides et actinides au détriment des métaux alcalins et alcalino-terreux, présents en quantité majoritaire, en font de très bons candidats pour la récupération de ces éléments présents à l'état de traces. Ainsi a déjà été décrit le greffage de molécules polyazamacrocycliques et notamment tétraazamacrocycliques sur un support silice et sur des résines organiques de type Merrifield.

### Greffage sur un support silice

Le greffage de ligands macrocycliques sur silice (essentiellement des éthers-couronnes et calixarènes, mais aussi des poly-aza-oxa-macrocycles et quelques polyazamacrocycles^{[1]}) a déjà fait l'objet de développements et des procédés d'extraction solide-liquide pour des applications analytiques de laboratoire (dosage du plomb^{[2]}), industrielles (récupération de métaux précieux tels que le platine^{[2]}) ou environnementales (dépollution d'effluents de l'industrie nucléaire : piégeage du strontium^{[2]} ou du plutonium et de l'américium^{[3]}) ont été commercialisés.

Divers polyazacycloalcanes fonctionnalisés ont été greffés sur un support minéral^{[4][5][6][7][8]}.

Les travaux ci-avant ont permis de valider à l'échelle semi-industrielle cette technique de purification ultime. Le traitement final de 50 m³ d'effluents radioactifs par un matériau constitué d'un ligand tétraaazamacrocyclique greffé sur une silice a été atteint^{[8]}.

Le matériau développé ci-dessus sera donc, dans les exemples donnés plus bas, considéré comme le matériau de référence pour comparer les performances d'extraction des matériaux selon l'invention.

Cependant, ce matériau chélatant à base de silice présente des faiblesses, davantage liées à sa viabilité dans une utilisation industrielle qu'à ses performances d'extraction propres. Le support silice est à l'origine des inconvénients suivants :
- une mise en forme limitée du matériau, sous forme de poudre, qui restreint quasiment sa mise en oeuvre à un procédé en colonne ;
- des pertes de charge élevées du procédé en colonne, qui induisent un débit de traitement modéré (50 L/h) ;
- le conditionnement fastidieux du matériau comprenant de nombreuses opérations telles que l'élimination des bulles d'air, le tassement du gel de silice, etc ;
- l'attrition de la silice, source de colmatage.

### Greffage sur des résines organiques

Le 1,4,8,11-tétraazacyclotétradécane (cyclame) a été greffé sur des résines polystyrène^{[9]} pour la récupération dans des solutions aqueuses essentiellement du cuivre, du nickel, du cobalt, du zinc^{[10, 11]} ou de l'or^{[12]}.

Les mêmes propriétés extractives sont observées avec des résines chélatantes obtenues par polymérisation radicalaire de N-(4-vinylbenzyl)-cyclame^{[13-15]}. Il a été également testé les performances d'extraction de radioéléments par des tétraazamacrocycles fonctionnalisés greffés sur résines de Merrifield^{[e]}.

Les matériaux élaborés à base de résines de Merrifield ont montré des performances extractives plus faibles, attribuées à l'hydrophobie et la forte réticulation du support^{[6]} conduisant à des cinétiques de complexation lentes.

Les deux seuls supports connus sur lesquels sont greffées des molécules polyazamacrocycliques et notamment tétraazamacrocycliques, sont donc la silice et les résines organiques. Chacun de ces supports ne présente pas toutes les propriétés souhaitées, soit en terme d'efficacité de piégeage des polluants, soit en terme de performance du procédé associé, pour une utilisation industrielle dans une technique d'extraction solide-liquide.

Par ailleurs, les fibres organiques, en revanche, présentent des avantages certains en tant que support de ligands, tels que : une variété de mises en forme possible du matériau, une intégration aisée dans un procédé d'extraction solide-liquide, une incinération possible du matériau en fin de vie.

L'utilisation de fibres organiques greffées pour des applications dans le traitement de l'eau est rapportée dans de nombreux cas mais le recours à un tel support est de manière générale inconnu pour fixer des ligands macrocycliques polyazotés, par exemple tétraazotés. A fortiori, le greffage de tels macrocycles sur des fibres de polypropylène n'est ni mentionné si suggéré dans l'art antérieur.

L'état de la technique fait donc référence à la préparation de fibres ou membranes chélatantes pour des applications de purification de solutions aqueuses contaminées par des métaux lourds ou des radioéléments. Par exemple, pour la récupération de l'uranyle présent dans l'eau de mer, des « filtres réactifs » ont été préparés par introduction de fonctions amidoxime sur fibre de polyéthylène^{[16]}, de polypropylène^{[17]}, de cellulose^{[18]}. Ce dernier matériau a également été élaboré afin de fixer le Cr(III) et le Cu(II)^{[19]}.

De même, de nombreux matériaux à texture fibreuse sont élaborés pour piéger globalement l'ensemble des métaux lourds : ces matériaux généralement préparés par modification d'un support par introduction en grande quantité de fonctions coordinantes. Ainsi, ont été greffés sur la cellulose, des acides polycarboxyliques^{[20]}, des polycarboxyamines^{[21]}, des fonctions amine^{[22]}, amide^{[23]}; sur le polyacrylonitrile des fonctions amide^{[24]}, imidazole^{[25]} et hydrazine^{[26]} ; sur le polyéthylène des fonctions iminodiacétique^{[27]}.

En revanche, le greffage sur des fibres organiques de molécules sélectives (notamment les molécules macrocycliques) pour des applications extractives spécifiques, est beaucoup plus rare. La fixation du ligand linéaire EGTA sur cellulose assure une certaine sélectivité dans la récupération du cadmium vis-à-vis de celle du zinc^{[28]}. Des α, β, γ cyclodextrines ont été fixées sur fibre de polypropylène pour piéger des molécules organiques dans la cavité macrocyclique^{[29, 30]}. Le colorant CIBACRON Blue F3GA, présentant une affinité pour différents métaux lourds et une sélectivité prononcée envers le cadmium, a été immobilisé sur une fibre creuse de polypropylène par adsorption^{[31]}. Des applications en catalyse hétérogène sont décrites par greffage de phthalocyanine sur fibre de polypropylène^{[32]} ou de taddol sur fibre de polyéthylène^{[33]}.

Il existe donc au vu de ce qui précède un besoin pour un matériau qui tout en conservant une excellente sélectivité de piégeage des molécules polyazamacrocyliques en particulier tétraazamacrocycliques vis-à-vis des métaux lourds, lanthanides, actinides, puisse être mis en oeuvre facilement sur le plan industriel, ne présente pas les défauts cités plus haut des matériaux comprenant un polyazamacrocycle tel qu'un polyazacycloalcane greffé sur la silice en termes de mise en forme limitée, de perte de charge élevée, de conditionnement fastidieux et d'adhésion, et ne présente pas non plus les défauts en termes de faible performance d'extraction des matériaux dans lesquelles un polyazamacrocycle est immobilisé sur un support en résine organique telle qu'une résine dite de Merrifield.

Autrement dit, il existe un besoin pour un matériau qui tout en présentant d'excellentes performances d'extraction d'un matériau constitué par un ligand polyazacycloalcane greffé sur silice n'en présente pas tous les inconvénients lors de la mise en oeuvre notamment au stade industriel.

Le but de la présente invention est de fournir un matériau comprenant des polyazamacrocycles qui répondent entre autres aux besoins mentionnés ci-dessus.

Le but de la présente invention est encore de fournir un matériau comprenant des polyazamacrocycles, principalement destiné à l'élimination des ions de métaux d'un liquide qui ne présente pas les inconvénients, défauts, limitations et désavantages des matériaux de l'art antérieur tels que les matériaux constitués par des polyazamacrocycles greffés sur de la silice ou des résines de Merrifield.

Le but de la présente invention est encore de fournir un tel matériau qui résolve les problèmes des matériaux de l'art antérieur.

Ce but, et d'autres encore, sont atteints, conformément à l'invention par un matériau comprenant, de préférence constitué par, un polyazacycloalcane greffé sur des fibres de polypropylène.

On notera que dans la présente, le terme « greffage » désigne un greffage par une liaison chimique covalente par opposition à une fixation physique ou électrostatique telle qu'une adsorption.

Le greffage de ligands macrocycliques polyazotés tels que les polyazacycloalcane sur des fibres organiques, et qui plus est sur des fibres de polypropylène, n'a jamais été mentionné ,ni suggéré dans l'art antérieur.

On peut dire que l'invention repose sur l'élaboration de nouveaux matériaux, issus du greffage de molécules polyazamacrocycliques, par exemple tétraazamacrocycliques sur un support à base de fibres de polypropylène. Les ligands macrocycliques polyazotés en particulier, tétraazotés sont très sélectifs pour le piégeage de métaux lourds, lanthanides, actinides et les fibres de propylène, matériau organique donc incinérable, présentent une grande diversité de mises en oeuvres possibles, ce qui rend leur intégration facile dans un procédé et leur confèrent des avantages certains pour une application industrielle. Les propriétés extractives de ces nouveaux matériaux sont très satisfaisantes vis-à-vis de métaux lourds tel que le cadmium et de radioéléments tels que l'uranium et le plutonium. L'intégration de ces matériaux dans un procédé permet des applications dans le traitement d'effluents liquides industriels.

Le matériau selon l'invention présente de manière étonnante tous les avantages des matériaux de type polyazacycloalcanes greffés sur support de silice ainsi que tous les avantages des matériaux de type polyazacycloalcaines greffés sur support de résine organique mais sans présenter aucun des inconvénients de ces deux types de matériaux.

Le matériau selon l'invention résoud les problèmes présentés par les matériaux de l'art antérieur.

Selon un premier mode de réalisation, le matériau selon l'invention est susceptible d'être préparé par polymérisation radicalaire d'un monomère de polyazacycloalcane porteur d'un groupement polymérisable radicalairement, en présence de fibres de polypropylène porteuses de fonctions peroxyde et/ou hydroperoxyde, éventuellement suivie d'une fonctionnalisation des éventuelles fonctions amine libres du polyazacycloalcane et/ou d'une saponification, hydrolyse, des fonctions esters éventuellement portées par le polyazacycloalcane.

Ledit monomère de polyazacycloalcane répond à l'une des trois formules : 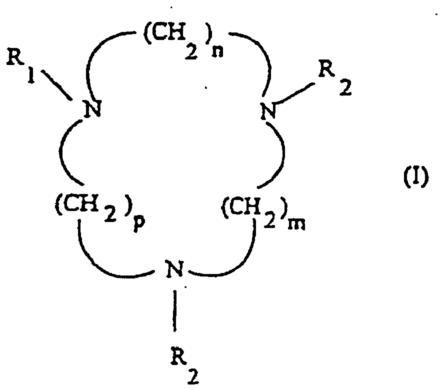 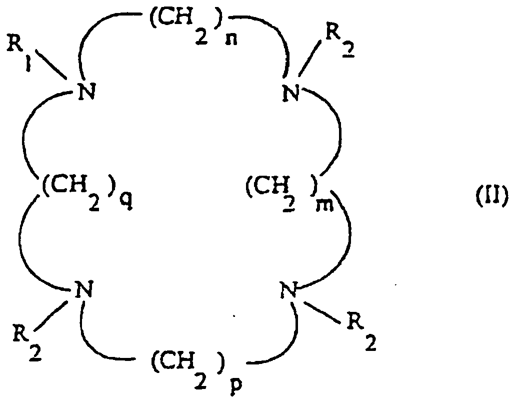 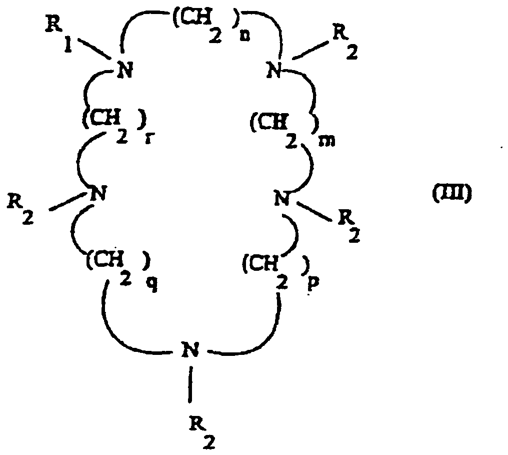 dans lesquelles n, m , p, q, r qui peuvent être identiques ou différents sont égaux à 2 ou 3 ; R₁ est un groupement polymérisable radicalairement ; R₂ représente un atome d'hydrogène ou un groupe (CH₂)₂-R₃, R₃ étant un groupement choisi dans le groupe constitué par CONH₂, CH₂OH, CN ou COOR₄, R₄ représentant H, un cation tel que Na, ou un groupe alkyle de 1 à 10C ou benzyle ; ou R₂ représente le groupe -(CH₂)-R₅, R₅ représentant COOR₆ ou PO₃R₆, R₆ représentant un groupe alkyle de 1 à 10C, un atome d'hydrogène ou un cation tel que Na.

Le groupement polymérisable radicalairement est choisi de préférence parmi les groupements comprenant un groupe vinylique, styrénique, ou acrylique.

Ainsi, le groupement polymérisable radicalairement peut être choisi parmi les groupements acrylonitrile, acrylate, acide acrylique, vinyl pyridine, vinylalcoxysilane et 4-vinylbenzyle.

Des monomères de polyazacycloalcanes préférés sont choisis parmi le N-(4-vinylbenzyl)-cyclame et le N,N',N"-tris(2-éthoxycarbonyléthyl)-N"'-(4-vinylbenzyl)-cyclame.

Le matériau selon l'invention dans ce premier mode de réalisation peut répondre à la formule suivante : 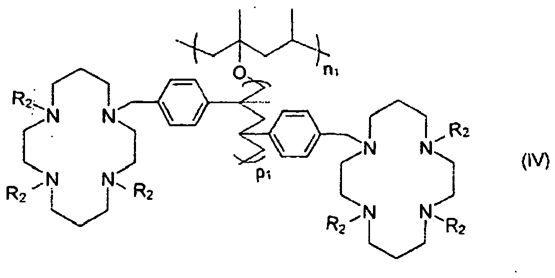 dans laquelle :
- R₂ a la signification déjà donnée ci-dessus ;
- n₁ est un nombre entier de 100 à 3000 ;
- p₁ est un nombre entier de 10 à 1000.
   - R₂ représente de préférence H ou CH₂CH₂COOEt ou CH₂CH₂COOH ou CH₂CH₂COONa ou CH₂COOEt ou CH₂COOH ou CH₂COONa.

Le matériau de formule (IV) est issu d'un monomère de polyazacycloalcane de formule (II). L'homme du métier peut facilement déterminer les formules correspondantes auxquelles peuvent répondre les matériaux issus des monomères de polyazacycloalcane de formule (I) ou (III).

Selon un second mode de réalisation, le matériau selon l'invention est susceptible d'être préparé par les étapes successives suivantes :
a) - on effectue la polymérisation radicalaire, en présence de fibres de polypropylène porteuses de fonctions peroxyde et/ou hydroperoxyde, d'un ou plusieurs monomères polymérisables radicalairement, au moins l'un desdits monomères comprenant au moins une fonction capable de réagir avec une fonction amine libre (il s'agit généralement de fonctions amine du cycle, faisant partie intégrante du cycle du polyazacycloalcane, le N de l'amine fait partie du cycle du polyazacycloalcane, ces fonctions sont généralement considérées comme des fonctions amines secondaires) d'un polyazacycloalcane ; moyennant quoi l'on obtient un polymère, comprenant lesdites fonctions capables de réagir avec une fonction amine libre d'un polyazacycloalcane, greffé sur le polypropylène ;
b) - on fait réagir ledit polymère avec un polyazacycloalcane.
c) éventuellement on effectue une fonctionnalisation de la ou des fonctions amines libres, éventuellement encore présentes, du polyazacycloalcane,
d) éventuellement on effectue une saponification, hydrolyse, des fonctions esters éventuellement portées par le polyazacycloalcane

La fonction susceptible de réagir avec la fonction amine du polyazacycloalcane peut être choisie parmi les carbones électrophiles, par exemple les carbones porteurs de fonctions halogénure, OTs, OTf... ou les dérivés d'acide carboxyliques par exemple les halogénures d'acyle, les anhydrides, les esters...

Les monomères qui polymérisent peuvent être choisis parmi les monomères vinyliques, styréniques, acryliques, .... Des exemples de ces monomères sont le chlorométhylstyrène et l'anhydride maléique.

On peut ne polymériser qu'un seul monomère, auquel cas à l'issue de la première étape on obtient un homopolymère dudit monomère par exemple un homopolymère de chlorométhylstyrène greffé sur des fibres de polypropylène.

Ou bien on peut polymériser, lors de la première étape, un mélange de monomères auquel cas à l'issue de la première étape on obtient un copolymère par exemple un copolymère alterné de chlorométhylstyrène et d'anhydride maléique : poly(anhydride maléique-alt-chlorométhylstyrène).

Le polyazacycloalcane mis en jeu dans l'étape b) selon ce second mode de réalisation peut être choisi parmi les polyazacycloalcanes comprenant à l'une des trois formules (V), (VI), (VII) suivantes : 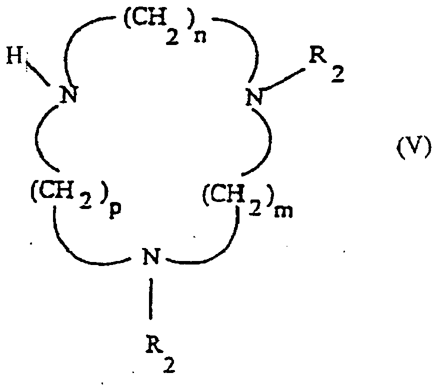 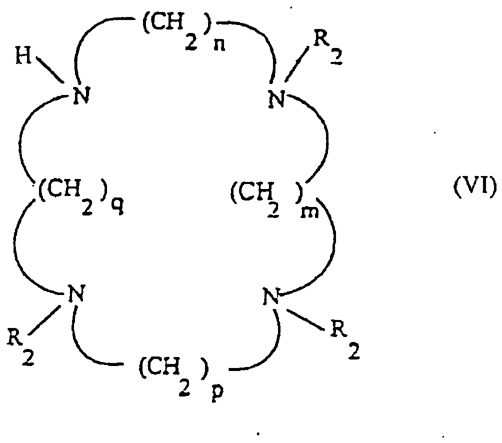 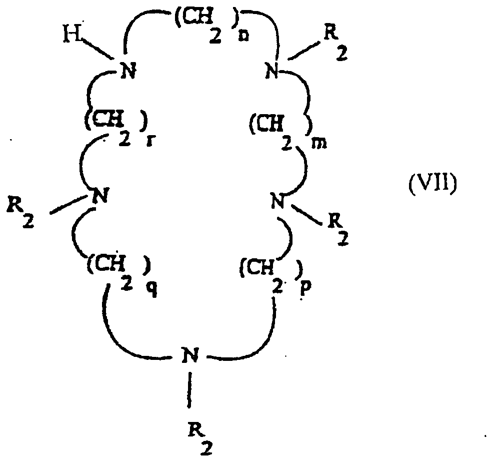 dans lesquelles n, m, p, q, r qui peuvent être identiques ou différents sont égaux à 2 ou 3 ; R₂ représente un atome d'hydrogène ou un groupe (CH₂)₂-R₃, R₃ étant un groupement choisi dans le groupe constitué par CONH₂, CH₂OH, CN ou COOR₄, R₄ représentant H, un cation tel que Na, ou un groupe alkyle de 1 à 10C ou benzyle ; ou R₂ représente le groupe -(CH₂)-R₅, R₅ représentant COOR₆ ou PO₃R₆, R₆ représentant un groupe alkyle de 1 à 10C, un atome d'hydrogène ou un cation tel que Na.

Ce polyazacycloalcane est choisi de préférence parmi les composés suivants :

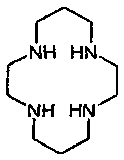

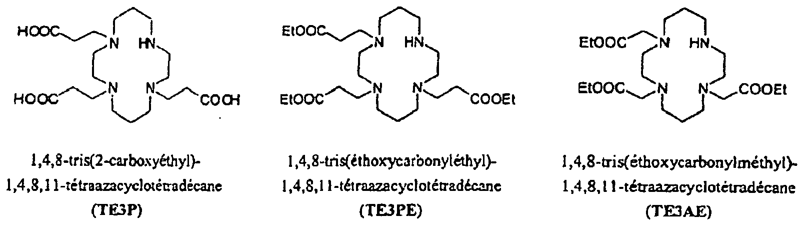

Le matériau selon ce second mode de réalisation de l'invention peut répondre à la formule (VIII) ou à la formule (IX) suivantes : 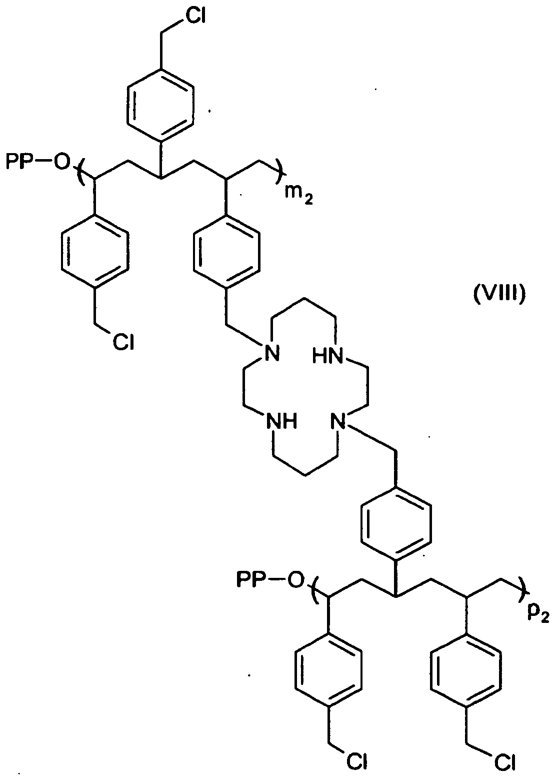 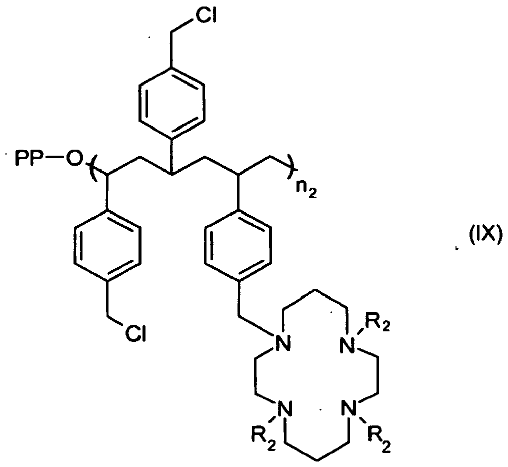 où :
- R₂ a la signification déjà donnée plus haut ;
- m₂ est un nombre entier de 10 à 1000 ;
- n₂ est un nombre entier de 10 à 1000 ;
- p₂ est un nombre entier de 10 à 1000. Dans les formules (VIII) et (IX), R₂ représente de préférence (CH₂)₂ COONa, -CH₂ COOEt, -(CH₂)₂-COOEt, -(CH₂)₂-COOH, -CH₂-COOH, ou -CH₂-COONa.

Le matériau de la formule (VIII) ou de la formule (IX) est issu d'un polyazacycloalcane de formule (VI). L'homme du métier peut facilement déterminer les formules correspondantes auxquelles peuvent correspondre les matériaux issus des polyazacycloalcanes de formule (V) ou (VII).

La fonctionnalisation dans les premier et second modes de réalisation du matériau et du procédé concerne les matériaux dans lesquels le polyazacycloalcane (qui est déjà fixé immobilisé, sur les fibres de PP) comporte des fonctions amine libres (fonction amine secondaire du cycle du polyazacycloalcane) et l'on souhaite le pourvoir de fonctions chélatantes, complexantes, coordinantes telles que des fonctions carboxyles ou carboxylates, sous la forme de bras à terminaison carboxyle ou carboxylate.

Cette fonctionnalisation éventuelle de la ou des fonctions amine libres du polyazacycloalcane peut être réalisée en faisant réagir la ou lesdites fonctions amine libres avec un composé comprenant une fonction capable de réagir avec une fonction amine libre d'un polyazacycloalcane et une autre fonction telle qu'une fonction choisie parmi les groupes R₃ et R₅ déjà définis plus haut qui est généralement une fonction coordinante, chélatante.

Ce composé peut notamment être choisi parmi le bromoacétate d'éthyle et l'acrylate d'éthyle.

Lorsque, le polyazacycloalcane (greffé, immobilisé, sur les fibres de polypropylène) comporte des fonctions esters, il est préférable de réaliser une hydrolyse, saponification, de ces fonctions esters afin d'obtenir des fonctions carboxyle et/ou carboxylate par exemple COONa qui présentent de meilleures propriétés chélatantes, complexantes, coordinantes que les fonctions esters.

Cette hydrolyse/saponification peut être réalisée en présence de soude dans un milieu eau/alcool.

Cette hydrolyse/saponification conduit simultanément à une hydrolyse en grande partie, par exemple à environ 75%, des terminaisons chlorées résiduelles telles que les fonctions chlorométhyle résiduelles, dans le cas où l'on se place dans le second mode de réalisation du matériau et où le polymère obtenu à l'issue de la première étape a) est un homopolymère de chlorométhylstyrène ou un copolymère alterné de chlorométhylstyrène et d'anhydride maléique greffé sur les fibres de polypropylène.

De préférence, on réalise la saponification, hydrolyse, des fonctions esters dans des conditions telles qu'elles permettent une hydrolyse complète des fonctions esters.

Les conditions sont par exemple les suivantes : réduction à 40°C pendant 18 heures avec de la soude 0,5N. De telles conditions permettent une hydrolyse complète des fonctions esters alors qu'une hydrolyse très partielle des fonctions amide est observée.

Le fait que l'hydrolyse/saponification généralement de la totalité des fonctions esters conduise simultanément à l'hydroxylation d'une grande partie (par exemple 75%) des terminaisons chlorées résiduelles, augmente ainsi fortement l'hydrophilie et la mouillabilité des fibres greffées.

L'hydrophobie intrinsèque des fibres de polypropylène est donc contrebalancée par l'introduction d'un nombre conséquent de fonctions hydrophiles, à savoir : les terminaisons hydroxyles et les fonctions carboxylates du ligand.

Les fibres de polypropylène peuvent notamment se présenter sous la forme d'un non-tissé.

Les fibres de polypropylène porteuses de fonctions peroxyde et/ou hydroperoxyde sont préparées par exemple par irradiation électronique de fibres de polypropylène sous une atmosphère oxydante, par exemple d'air ou d'oxygène.

L'invention a trait en outre à un procédé de préparation des matériaux décrits plus haut.

Dans un premier mode de réalisation de ce procédé, dans lequel on prépare le matériau selon le premier mode de réalisation du matériau décrit plus haut, on réalise la polymérisation radicalaire d'un monomère de polyazacycloalcane porteur d'un groupement polymérisable radicalairement, en présence de fibres de polypropylène porteuses de fonctions peroxydes et/ou hydroperoxyde, éventuellement suivie d'une fonctionnalisation des éventuelles fonctions amine libres du polyazacycloalcane et/ou d'une saponification, hydrolyse, des fonctions esters éventuellement portées par le polyazacycloalcane.

Le monomère de polyazacycloalcane porteur d'un groupement polymérisable mis en oeuvre dans ce procédé répond généralement à l'une des trois formules (I), (II), (III) suivantes : 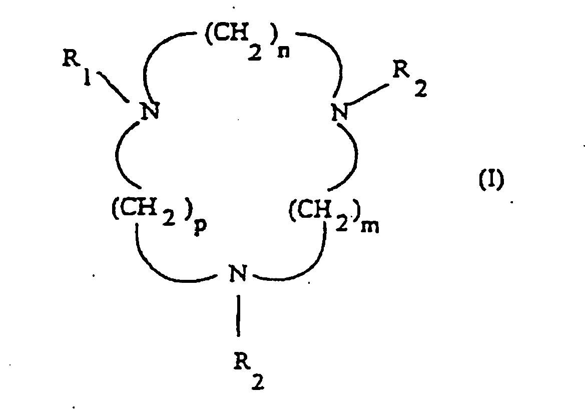 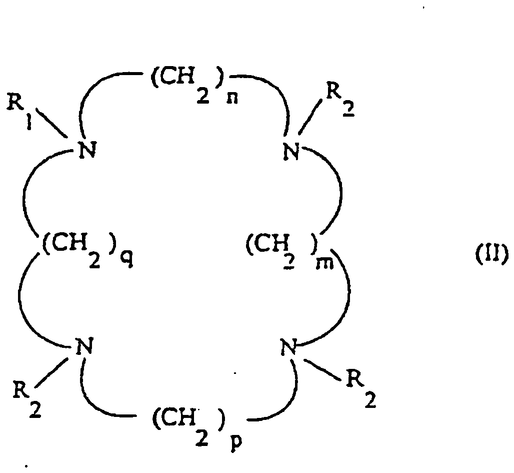 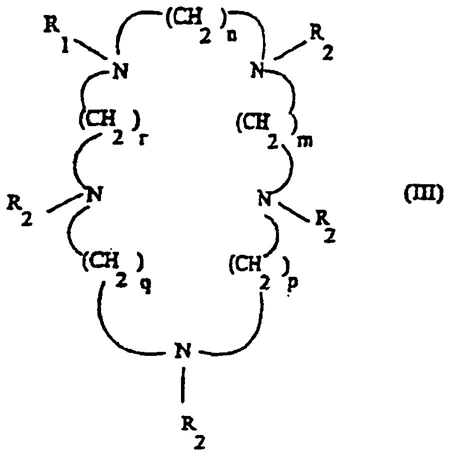 dans lesquelles n, m , p, q, r qui peuvent être identiques ou différents sont égaux à 2 ou 3, R₁ est un groupement polymérisable radicalairement ; R₂ représente un atome d'hydrogène ou un groupe (CH₂)₂-R₃, R₃ étant un groupement choisi dans le groupe constitué par CONH₂, CH₂OH, CN ou COOR₄, R₄ représentant H, un cation tel que Na, ou un groupe alkyle de 1 à 10C ou benzyle, ou R₂ représente le groupe - (CH₂) -R₅, R₅ représentant COOR₆ ou PO₃R₆, R₆ représentant un groupe alkyle de 1 à 10C, un atome d'hydrogène ou un cation tel que Na.

Ledit groupement polymérisable radicalairement du monomère de polyazacycloalcane est généralement choisi parmi les groupements comprenant un groupe vinylique, acrylique, styrénique en particulier ce groupement peut être choisi parmi les groupements acrylonitrile, acrylate, acide acrylique, vinyl pyridine, vinylalcoxysilane et 4-vinylbenzyle.

Un monomère de polyazacycloalcane préféré peut être choisi parmi le N-(4-vinylbenzyl)-cyclame et le N,N',N"-tris(2-éthoxycarbonyléthyl)-N'"-(4-vinylbenzyl)-cyclame.

De manière générale, la polymérisation est réalisée à une température de 80°C à 120°C, par exemple de 105°C, dans un solvant choisi parmi le DMF, le toluène, l'acétonitrile, et pendant une durée de 2 à 24 heures, par exemple de 13 heures.

Dans un second mode de réalisation du procédé selon l'invention dans lequel on prépare le matériau selon le second mode de réalisation du matériau décrit plus haut, on réalise un procédé de préparation d'un matériau constitué par un polyazacycloalcane greffé sur des fibres de polypropylène, ledit procédé comprenant les étapes successives suivantes :
a) - on effectue la polymérisation radicalaire en présence de fibres de polypropylène porteuses de fonctions peroxyde et/ou hydroperoxyde d'un ou plusieurs monomères polymérisables radicalairement, au moins l'un desdits monomères comprenant au moins une fonction capable de réagir avec une fonction amine libre d'un polyazacycloalcane ; moyennant quoi, l'on obtient un polymère comprenant lesdites fonctions capables de réagir avec une fonction amine libre d'un polyazacycloalcane, (ledit polymère étant) greffé sur le polypropylène ;
b) - on fait réagir ledit polymère avec un polyazacycloalcane,
c) éventuellement on effectue une fonctionnalisation de la ou des fonctions amines libres, éventuellement encore présentes, du polyazacycloalcane,
d) éventuellement on effectue une saponification, hydrolyse, des fonctions esters éventuellement portées par le polyazacycloalcane.

Ladite fonction amine libre est généralement une fonction amine secondaire -(NH)-faisant partie intégrante du cycle du polyazacycloalcane.

Lorsque l'on parle d'amine libre du polyazacycloalcane, il s'agit généralement des amines libres du cycle du polyazacycloalcane généralement considérées comme des amines secondaires.

La fonction susceptible de réagir avec la fonction amine libre du polyazacycloalcane est généralement choisis parmi les carbones électrophiles, par exemple les carbones porteurs de fonctions halogénure, OTs, OTf... ou les dérivés d'acide carboxyliques par exemple les halogénures d'acyle, les anhydrides, les esters...

Lesdits monomères seront ainsi choisis de préférence parmi les monomères vinyliques, styréniques, acryliques, ....

Des exemples de ces monomères sont le chlorométhylstyrène et l'anhydride maléique.

On peut procéder à la polymérisation radicalaire d'un seul monomère (homopolymérisation) tel que le chlorométhylstyrène moyennant quoi on obtient alors un homopolymère greffé généralement à la surface des fibres de PP.

Lorsqu'on effectue la polymérisation du seul chlorométhylstyrène, cette polymérisation est généralement réalisée dans un solvant choisi parmi le diméthylformamide (DMF), le toluène, l'eau, le mélange eau/méthanol ; à une température de 80 à 120°C ; à une concentration massique de chlorométhylstyrène dans le solvant de 30 à 55% ; et pendant une durée de 2 à 20 heures.

De préférence, cette polymérisation du chlorométhylstyrène est réalisée dans le solvant DMF pur, à une température de 80 à 115°C, de préférence de 115°C ; à une concentration massique du chlorométhylstyrène dans le DMF de 40% ; et pendant une durée de 10 heures.

Ou bien, on peut lors de l'étape a), effectuer la polymérisation de plusieurs monomères (copolymérisation). Par exemple on pourra effectuer la (co)polymérisation d'anhydride maléique et de chlorométhylstyrène, généralement à la surface du PP. Dans ce cas, la polymérisation est réalisée dans un solvant choisi parmi le toluène et l'acétone ; à une température de 75 à 95°C ; à une concentration massique des monomeres dans le solvant de 10% à 80% , par exemple 30 ; et pendant une durée de 4 à 30 heures.

Dans l'étape b), le polyazacycloalcane peut être choisi parmi les polyazacycloalcanes répondant à l'une des trois formules (V), (VI), (VII) suivantes : 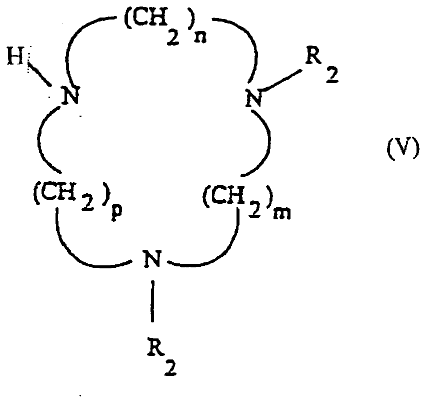 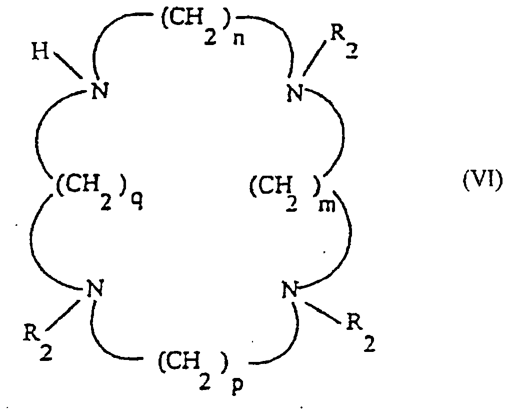 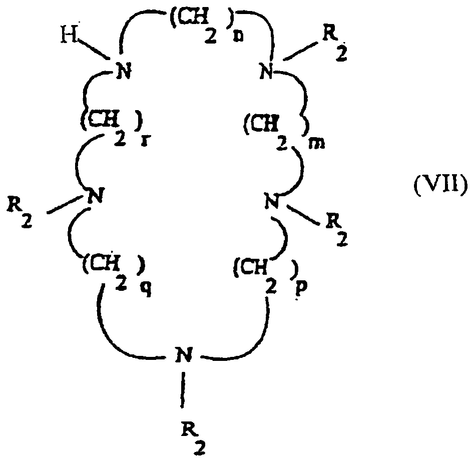 dans lesquelles n, m , p, q, r qui peuvent être identiques ou différents sont égaux à 2 ou 3 ; R₂ représente un atome d'hydrogène ou un groupe (CH₂)₂-R₃, R₃ étant un groupement choisi dans le groupe constitué par CONH₂, CH₂OH, CN ou COOR₄, R₄ représentant H, un cation tel que Na, un groupe alkyle de 1 à 10C ou benzyle ; ou R₂ représente le groupe - (CH₂)-R₅, R₅ représentant COOR₆ ou PO₃R₆, R₆ représentant un groupe alkyle de 1 à 10C, un atome d'hydrogène ou un cation tel que Na.

De préférence, ledit polyazacycloalcane est choisi parmi les composés suivants :

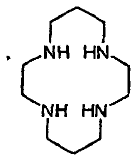

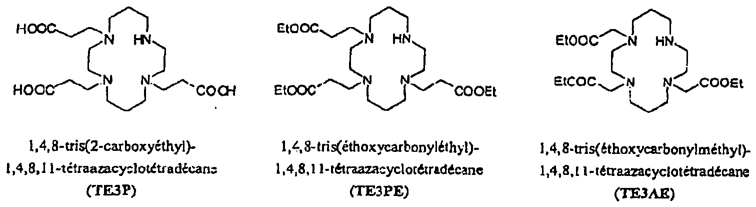

Les opérations de fonctionnalisation et d'hydrolyse/saponification ont déjà été décrites plus haut.

Quel que soit le procédé mis en oeuvre, les fibres de polypropylène peuvent se présenter sous la forme d'un non tissé.

Les fonctions peroxyde et/ou hydroperoxyde peuvent être préparées par irradiation électronique de fibres de polypropylène sous une atmosphère oxydante par exemple d'air ou d'oxygène.

En général, les fibres de polypropylène sont irradiées à une dose de 20 à 60 kGy, de préférence de 40 kGy.

L'invention concerne en outre un procédé d'élimination des cations métalliques contenus dans un liquide, dans lequel ledit liquide est mis en contact avec le matériau selon l'invention tel que décrit ci-dessus.

La mise en contact est généralement réalisée à une température de 20 à 60°C ; par exemple 50°C.

Ce procédé est avantageusement réalisé en continu, le matériau selon l'invention étant placé dans une colonne traversée par un courant du liquide à traiter.

Ce procédé comprend de préférence, en outre, une étape de régénération du matériau lorsque celui-ci est saturé par les métaux fixés.

Lesdits cations de métaux sont généralement choisis parmi les métaux de transition, les métaux lourds, les métaux du groupe IIIA du tableau périodique, les lanthanides, les actinides, et les métaux alcalino-terreux, en particulier parmi les cations U, Pu, Am, Ce, Eu, Al, Gd, Cr, Mn, Fe, Co, Ni, Cu, Zn, Ag, Cd, B, Au, Hg, Pb, As, Ca, Sr, Mg, Be, Ba et Ra.

Le liquide traité est notamment un liquide aqueux tel qu'un effluent aqueux radioactif de faible activité.

Un tel effluent est par exemple l'effluent aqueux de faible activité issu de l'évaporateur industriel d'une installation de traitement des effluents d'une installation nucléaire.

Comme on l'a précisé ci-dessus une des applications immédiates des matériaux selon l'invention, a savoir des ligands macrocycliques notamment tétraazotés greffés sur des fibres de polypropylène selon l'invention est leur mise en oeuvre dans un procédé d'extraction solide-liquide en vue du traitement d'effluents pollués par des métaux lourds ou des radioéléments.

Les propriétés des matériaux selon l'invention permettent leur intégration dans un procédé de traitement répondant à un besoin industriel et ne se limitant pas à des applications au laboratoire.

Un besoin est identifié au Commissariat à l'Energie Atomique (CEA) de Valduc pour la mise en oeuvre des nouveaux matériaux selon l'invention dans un procédé s'intégrant dans la station de traitement des effluents liquides de ce centre.

Le CEA de Valduc respecte des normes de rejet très faibles pour ses effluents liquides radioactifs ou non ; à titre d'exemple, l'activité totale des effluents radioactifs doit être inférieure à 5 Bq/m³ ou la norme en vigueur pour le rejet de cadmium des eaux usées non radioactives est de 5 ppb. Ces normes situent les techniques de traitement de l'eau dans le domaine de l'ultra purification. Les effluents de faible activité produits par le centre sont actuellement traités par évaporation sous pression réduite au sein d'un évaporateur industriel puis décontaminés de façon ultime par une unité de microfiltration. Cette dernière technique ne sépare que les particules solides suffisamment grosses et ne permet pas de traiter les quelques effluents particuliers pour lesquels les radioéléments se trouvent sous une forme soluble. Pour ces cas exceptionnels, les effluents incriminés sont réinjectés dans le circuit de traitement.

Un procédé d'extraction solide-liquide avec les matériaux séquestrants sélectifs selon l'invention est particulièrement adapté pour traiter ces effluents dans lesquels les éléments contaminants se trouvent sous une forme soluble. C'est une technique complémentaire de celles utilisées sur le centre de Valduc actuellement. Cette technique peut supplanter partiellement voire totalement l'évaporation qui est une technique relativement lourde à mettre en oeuvre et coûteuse en énergie. L'incinération possible du matériau selon l'invention en fin de durée de vie est également un atout déterminant dans la stratégie de réduction des déchets en cours dans les industries nucléaires.

Concernant la problématique du cadmium et plus globalement celle des métaux lourds, dans le cas du traitement d'eaux usées non radioactives contenant de tels métaux, notamment en cas de pollution accidentelle, l'intégration des nouveaux matériaux selon l'invention dans un procédé est une réponse à un cas de pollution, par exemple d'un bassin de rétention des eaux usées et constitue donc une nouvelle application immédiate pour l'emploi de ces matériaux.

Plus généralement, les applications possibles pour les matériaux selon l'invention sont leur utilisation pour le traitement d'effluents liquides industriels pollués par des métaux lourds, des lanthanides ou des actinides. La sélectivité envers les métaux ciblés est assurée en modulant la fonctionnalisation des ligands macrocycliques par exemple tétraazotés.

L'invention sera mieux comprise à la lecture de la description détaillée qui suit faite en relation avec les dessins joints, dans lesquels :

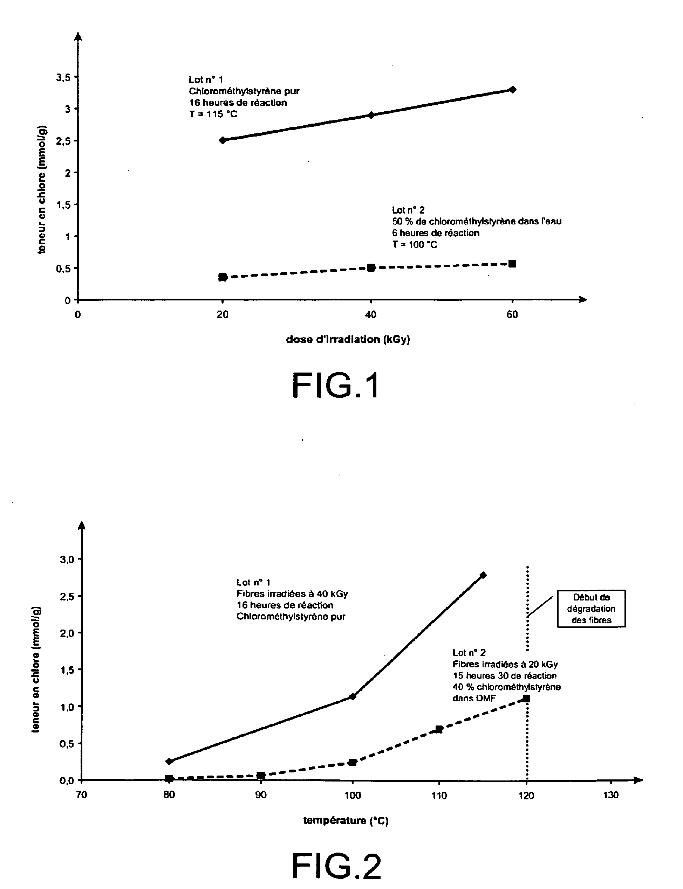

- la figure 1 est un graphique qui montre l'influence de la dose d'irradiation sur le greffage du polychlorométhylstyrène sur des fibres de polypropylène.

En ordonnée est portée la teneur en chlore (mmol/g) et en abscisse est portée la dose d'irradiation (en kGy).

La courbe du haut (Lot n°1) concerne le chlorométhylstyrène pur, avec 16 heures de réaction à une température de 115°C ; et la courbe du bas (Lot n°2) concerne du chlorométhylstyrène à 50% dans l'eau, avec 6 heures de réaction à une température de 100°C.
- la figure 2 est un graphique qui montre l'influence de la température sur le greffage du polychlorométhylstyrène sur des fibres de polypropylène.

En ordonnée est portée la teneur en chlore (mmol/g) et en abscisse est portée la température (en °C).

La courbe du haut (Lot n°1) concerne un procédé mis en oeuvre avec des fibres de PP irradiées à 40 KGy, avec une durée de réaction de 16 heures et du chlorométhylstyrène pur ; et la courbe du bas (Lot n°2) concerne un procédé mis en oeuvre avec des fibres irradiées à 20 kGy, avec une durée de réaction de 15h30 et du chlorométhylstyrène à 40% dans le DMF ; le trait vertical en pointillés indique le début de dégradation des fibres ;

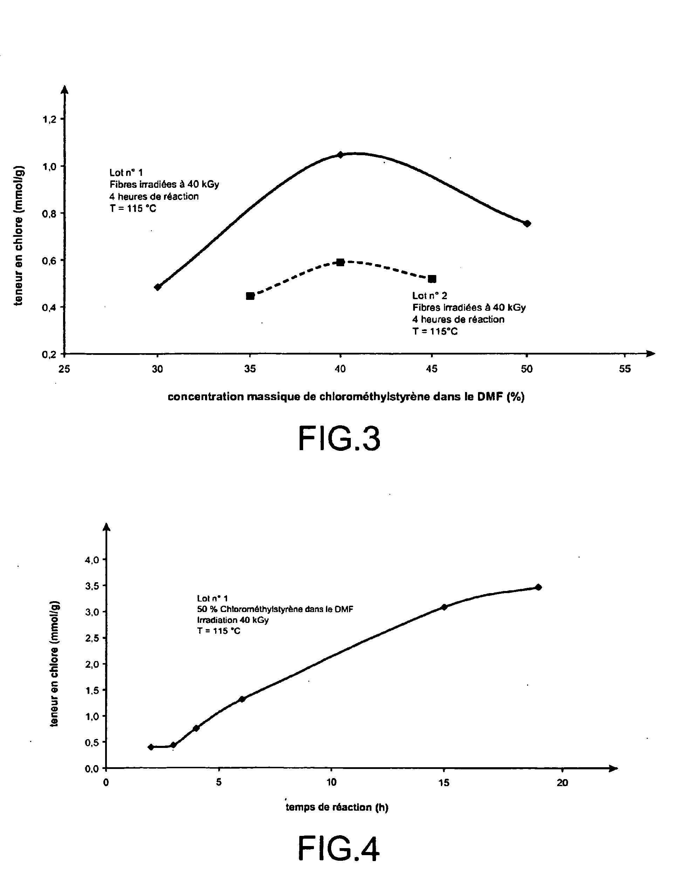

- la figure 3 est un graphique qui montre l'influence de la concentration massique (%) du chlorométhylstyrène en solution dans le DMF sur le greffage du polychlorométhylstyrène sur des fibres de polypropylène.

En ordonnée est portée la teneur en chlore (mmol/g) et en abscisse est portée la concentration massique du chlorométhylstyrène dans le DMF (%).

La courbe du haut concerne des fibres irradiées à 40 kGy (Lot n°1), avec un temps de réaction de 4 heures à une température de réaction de 115°C.

La courbe du bas concerne aussi des fibres irradiées à 40 kGy (Lot n°2), avec un temps de réaction de 4 heures à une température de 115°C.
- la figure 4 est un graphique qui montre l'influence du temps de réaction sur le greffage du polychlorométhylstyrène sur des fibres de polypropylène.

En ordonnée est portée la teneur en chlore (mmol/g) et en abscisse est portée le temps, ou durée de réaction (h).

La courbe présentée concerne un greffage réalisé avec des fibres de polypropylène irradiées à 40 kGy (Lot n°1), une solution à 50% de chlorométhylstyrène dans le DMF et à une température de 115°C.
- la figure 5 est l'éclaté du spectre RMN ¹H (500 MHz, (CD₃)CO) du complexomère entre l'anhydride maléique et le chlorométhylstyrène (formé à partir d'un mélange équimolaire des deux monomères portés au reflux de l'acétone deutéré pendant 1 heure).
- la figure 6 est une vue schématique latérale en coupe d'un dispositif expérimental utilisé puor les tests d'extraction solide-liquide à l'équilibre des matériaux selon l'invention et du matériau de référence.

La présente invention décrit le greffage de ligands polyazamacrocycliques, en particulier tétraazamacrocycliques sur des fibres de polypropylène.

Un des problèmes soulevés par l'utilisation d'un tel support est notamment son hydrophobie. Cette caractéristique peut diminuer la mouillabilité du support et défavoriser ainsi l'accessibilité du métal solubilisé dans le liquide vers la molécule tétraazamacrocyclique complexante greffée sur le support. Le procédé de greffage selon l'invention, permet notamment de contrecarrer cette hydrophobie du matériau en introduisant suffisamment de fonctions hydrophiles. Celles-ci sont concentrées à proximité des sites de réactions de complexation. Le procédé de greffage développé selon l'invention permet également de maîtriser le nombre de molécules macrocycliques accrochées à la surface du matériau, ce qui autorise une modulation du nombre de sites de fixation de polluants tels que les cations de métaux en fonction de l'application retenue pour le matériau.

Des exemples de matériaux selon l'invention sont du type suivant :

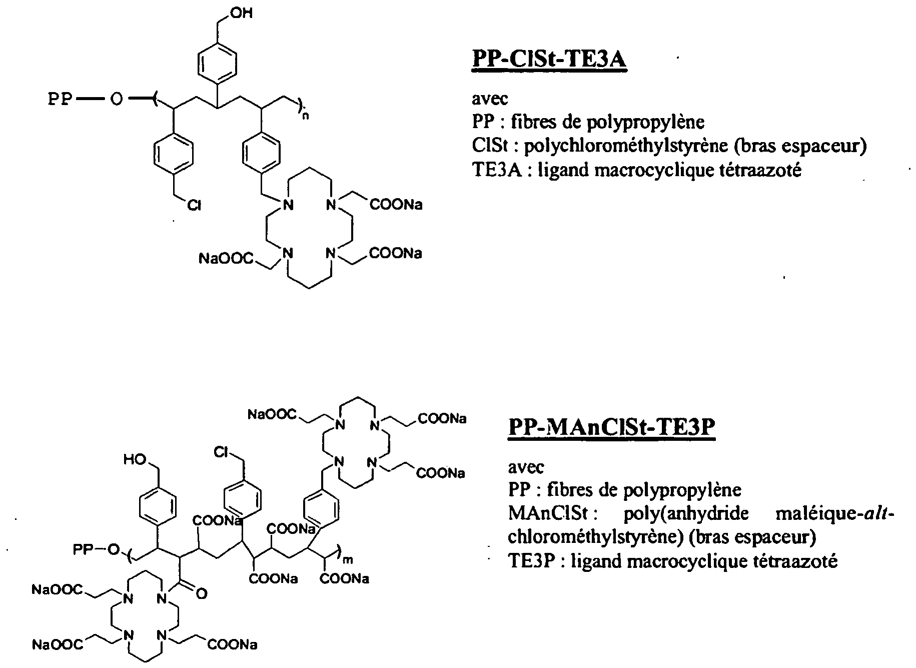

Dans ces formules, n et m sont des nombres entiers de 10 à 1000.

### Préparation des nouveaux matériaux

Le principe du greffage des molécules polyazamacrocycliques, en particulier tétraazamacrocycliques sur le polypropylène selon l'invention repose sur une réaction de polymérisation radicalaire à la surface du polypropylène.

La réaction de polymérisation est initiée par des radicaux, créés suite au chauffage des fibres de polypropylène préalablement irradiées. Le monomère employé pour préparer les matériaux selon l'invention aussi bien dans le premier mode de réalisation que dans le deuxième mode de réalisation, possède par exemple un motif de type styrène. Deux voies de fixation des polyazamacrocycles, par exemple des tétraazamacrocycles, sur le polypropylène correspondant aux premier et au deuxième modes de réalisation des matériaux et du procédé selon l'invention ont été développées :
- le **greffage** « **direct** » par polymérisation de l'entité, par exemple de type styrène porteuse d'un macrocycle par exemple tétraazoté
- le **greffage d'un bras espaceur** par polymérisation d'un monomère fonctionnel en présence du polypropylène suivi du couplage du polyazamacrocycle par exemple du tétraazamacrocycle sur la fonction réactive dudit monomère. Deux bras espaceurs de nature différente ont notamment été greffés.

Dans ce qui suit, les différentes opérations conduisant aux nouveaux matériaux élaborés selon l'invention sont reprises plus en détail.

Dans la description qui suit, on fait référence pour illustrer les matériaux et le procédé selon l'invention à des composés, fonctions réactives, conditions de réalisation, etc. particulières. Ces, composés (par exemple polyazacycloalcane) fonctions ou conditions ne sont donnés qu'à titre illustratif et ne limitent en aucune manière l'invention telle que décrite dans ce qui précède et dans les revendications.

L'homme du métier peut facilement à partir de la description qui suit appliquer l'invention à tous les composés, conditions, fonctions réactives, etc... possibles dont la plupart ont été définis plus haut.

### Technique de greffage

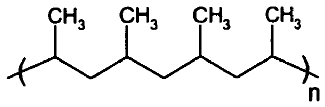

où n est généralement un nombre entier de 100 à 3000.

### Structure moléculaire du polypropylène (PP)

Les fibres de polypropylène utilisées comme matériau de base, se trouvent généralement sous la forme d'un non-tissé et ont été préalablement irradiés par exemple sur un accélérateur linéaire d'électrons sous une atmosphère d'air ou d'oxygène.

L'irradiation sous atmosphère d'air conduit à la formation de peroxydes et/ou d'hydroperoxydes, majoritairement sur le carbone tertiaire (voir ci-dessus la structure moléculaire du polypropylène). Il est bien évident que d'autres technique connues de l'homme du métier pourraient être utilisées pour pourvoir le polypropylène de ces fonctions peroxydes et/ou hydroperoxydes. Les hydroperoxydes et peroxydes sont dégradés thermiquement (au delà de 80 °C) et génèrent des oxy-radicaux sur la fibre, initiateurs, en présence d'un monomère polymérisable radicalairement, par exemple d'un monomère vinylique dans le milieu, d'une polymérisation en surface de la fibre. On sait que différents monomères polymérisant radicalairement ont été greffés par cette technique : acrylonitrile^{[17]}, acrylate^{[34]}, acide acrylique^{[35-38]}, vinylpyridine^{[39, 40]}, vinylalcoxysilane^{[41]}...

### Greffage direct

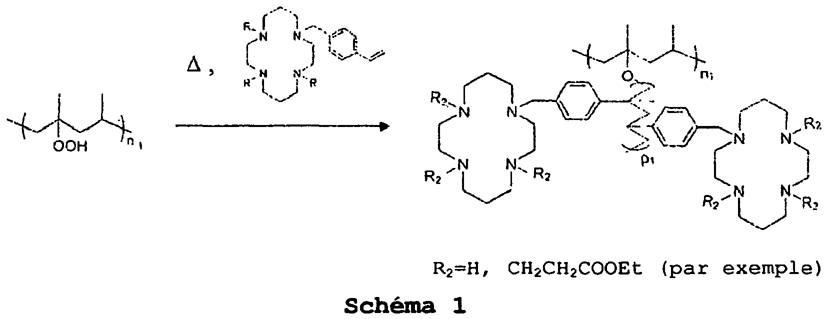

Deux monomères tétraazamacrocycliques : le N-(4-vinylbenzyl)-cyclame et le N,N',N" -tris-(2-éthoxycarbonyléthyl)-N"'-(4-vinylbenzyl)-cyclame ont été soumis dans des conditions rigoureusement identiques à une réaction de polymérisation en surface des fibres de polypropylène. La teneur en ligand macrocyclique greffé est donnée dans le tableau 1 ci-dessous.

**Tableau 1 : Résultats du greffage « direct » de ligands macrocycliques**

| | | |
|---|---|---|
| | 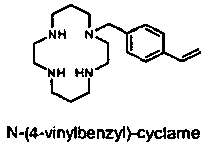 | 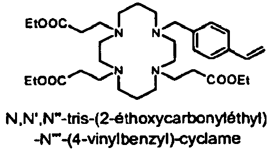 |
| Teneur en ligand (mmol/g) | 0,20 | <0,05 |

### Greffage d'un bras espaceur

### Greffage du polychlorométhylstyrène

La polymérisation du chlorométhylstyrène en surface du polypropylène, schématisée ci-dessous, conduit à un matériau composite fibreux nommé PP-ClSt.

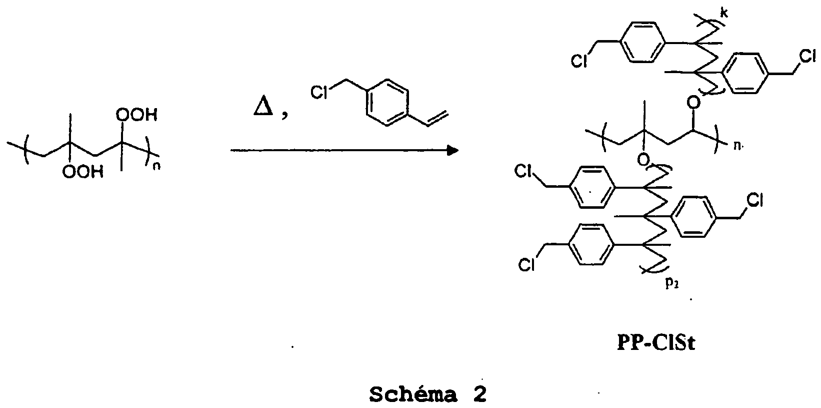

Dans le Schéma 2, n est un nombre entier de 100 à 3000 et k et p₂ sont des nombres entiers de 10 à 1000.

La fonction chlorométhyle de la fibre PP-ClSt est ensuite susceptible de réagir, en phase hétérogène, sur une fonction amine du ligand macrocyclique. La teneur en molécules macrocycliques greffées est donc principalement gouvernée par la réaction de polymérisation du chlorométhylstyrène généralement en surface du polypropylène. Celle-ci est influencée par les paramètres classiques intervenant dans une réaction de polymérisation : nature du solvant, température, concentration en monomère, durée de réaction, concentration de l'amorceur.

Un des avantages de ces matériaux (en général), notamment par rapport à ceux élaborés à partir de la silice, réside dans le fait qu'il est possible de définir et de moduler le nombre de sites réactionnels de complexation qui seront présents sur le matériau, ceci en maîtrisant le taux de polymérisation lors du greffage du bras espaceur.

L'influence des paramètres listés ci-dessus a été étudiée et les résultats obtenus sont reportés dans les exemples données plus loin (Exemple 1).

Des paramètres définis comme optimaux ont ainsi pu être distingués :
- le solvant DMF (Diméthyl Formamide),
- une dose d'irradiation de 40 kGy,
- une solution de monomère diluée à 40% dans le DMF,
- une température de 115 °C,
- une durée de réaction de 10 heures (pour une teneur en groupes chlorométhyle de l'ordre de 2 mmol/g).

Ces paramètres optimaux ont été déterminés pour garantir l'élaboration de matériaux présentant un bon compromis entre un bon taux de greffage et une conservation de l'intégrité et des propriétés des fibres de polypropylène.

Toutefois, la préparation des matériaux selon l'invention ne se restreint pas à l'application unique et impérieuse des paramètres mis en exergue ci-dessus.

### Greffage du poly(anhydride maléique-alt-chlorométhystyrène)

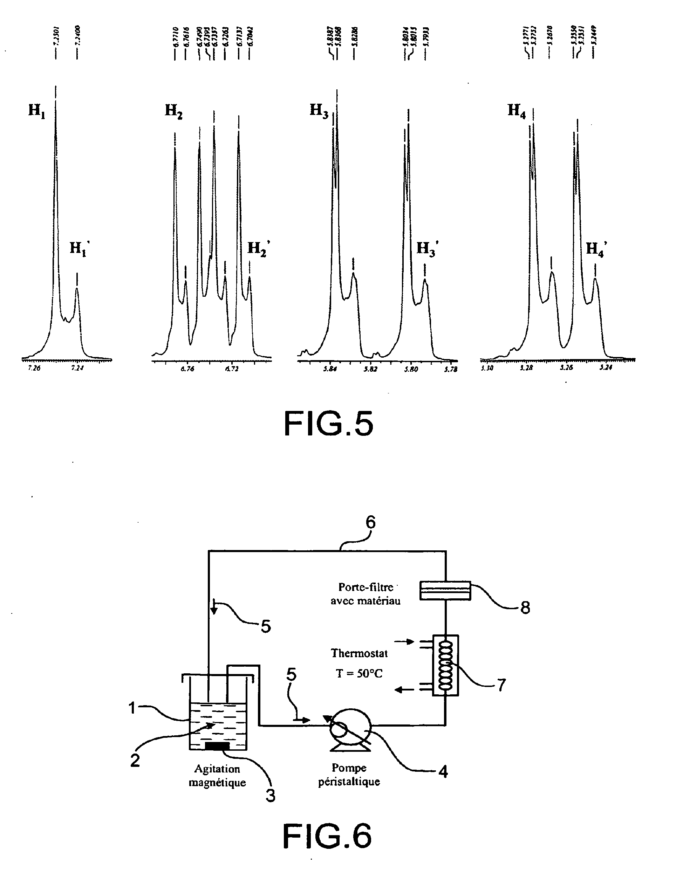

Afin d'introduire davantage de fonctions carboxylates, fonctions hydrophiles participant à la coordination des métaux lourds, lanthanides et actinides, la formation d'un copolymère alterné d'unités anhydride maléique et chlorométhylstyrène greffé à la surface des fibres de polypropylène a été réalisée. La régularité de l'alternance entre motif chlorométhylstyrène et motif anhydride maléique est assurée par la formation d'un complexe de transfert de charge entre ces deux monomères, dont la mise en évidence par spectroscopie RMN est reportée dans l'exemple 2 et la figure 5. Le complexe de transfert de charge a la propriété de polymériser plus facilement que les monomères isolés.

La formation d'un copolymère alterné d'unités anhydride maléique et styrène, est décrite à la fois en solution^{[42]} et sur divers supports polymériques : cellulose^{[43]}, film de polyéthylène^{[44]}, polyéthylène en milieu fondu^{[45]}. Des travaux ont été également réalisés sur le polypropylène par initiation chimique avec le peroxyde de benzoyle^{[46]} ou par une technique ionisante (ozonation et irradiation γ)^{[47]}. A partir de l'anhydride maléique, divers CTC ont été formés et mis en évidence par spectroscopie UV et RMN par ajout de styrène^{[48]}, de vinyltriéthoxysilane^{[49]} ou de 1,4-dioxène^{[50]}. En revanche, la formation d'un complexomère entre l'anhydride maléique et le chlorométhylstyrène n'a jamais été mentionnée à notre connaissance.

La copolymérisation de l'anhydride maléique et du chlorométhylstyrène en surface du polypropylène, schématisée ci-après, conduit à un matériau composite fibreux nommé PP-MAnClSt.

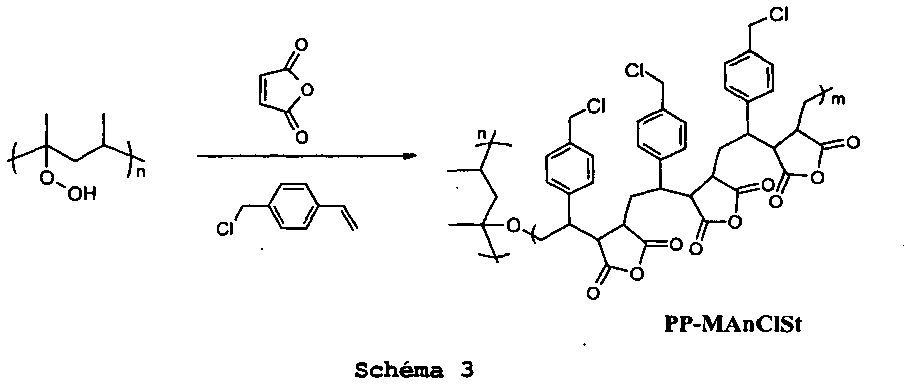

Dans le Schéma 3, n est un nombre entier de 10 à 3000 et m est un nombre entier de 10 à 1000.

L'influence sur le taux de greffage des paramètres solvant, température, temps de réaction a été étudiée et est reportée dans l'exemple 3. Il en est conclu que la réaction de greffage du poly(anhydride maléique-*alt*-chlorométhylstyrène) sur fibres de polypropylène est bien contrôlée en utilisant l'acétone comme solvant de la réaction, une température de 90°C (réaction sous pression), une composition totale en monomères égale à 30%. Le taux de greffage est alors maîtrisé par la durée de la réaction. La présence équimolaire des deux monomères en surface des fibres de polypropylène est également vérifiée.

### Couplage de ligands macrocycliques sur les matériaux précurseurs

### Synthèse des ligands

Deux types de ligands macrocycliques ont été synthétisés en vue du couplage sur les matériaux PP-ClSt et PP-MAnClSt :
- **les ligands non fonctionnalisés** Le cyclame a été préparé selon un protocole mis au point dans le brevet^{[51]}.

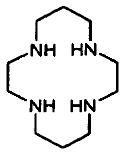

### Structure moléculaire du cyclame

- **les ligands de type acide**. Ils sont porteurs de fonctions acide carboxylique ou de fonctions ester. Les composés triester sont des « ligands intermédiaires » utilisés pour favoriser le couplage des ligands sur les matériaux. Après greffage, ils sont hydrolysés en acide carboxylique correspondant.

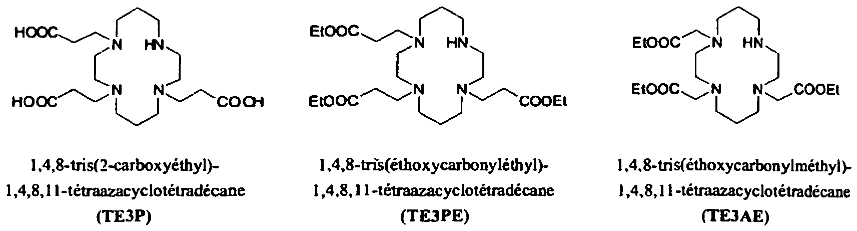

### Structures moléculaires des précurseurs macrocycliques (TE : tétradécane, 3 : nombre de bras, Pr : acide propionique, PE : propionate d'éthyle, AE : acétate d'éthyle).

Usuellement, les tétraazamacrocycles trisubstitués par des bras acide carboxylique sont préparés selon la stratégie : monoprotection du cyclame par un groupe benzyle, fonctionnalisation des trois amines secondaires restantes puis clivage du groupe benzyle^{[52]}. Cette synthèse impose plusieurs étapes successives et des étapes de purification associées.

Les matériaux décrits dans cette invention sont préparés avec un objectif d'une utilisation industrielle, c'est-à-dire qu'ils doivent être produits en quantité importante en limitant les opérations fastidieuses (par exemple de purification). Les nouvelles voies de synthèse des deux ligands macrocycliques développés répondent à ces critères puisque les molécules cibles sont obtenues avec un rendement correct, en une étape unique et sans opération délicate à industrialiser.

Ainsi, le cyclame trifonctionnalisé par des bras acétate 2 a été synthétisé avec un rendement de 48% à partir du cyclame, en mettant en jeu 3,2 équivalents de bromoacétate d'éthyle (Schéma 4). Le principal sous produit de la réaction, le composé tétrasubstitué 3, est séparé du mélange réactionnel par précipitation dans l'éthanol. Les autres produits secondaires, les composés mono-, disubstitués ou quaternisés, sont insolubles dans le pentane. Le triester attendu **2** est obtenu par simple extraction dans ce solvant.

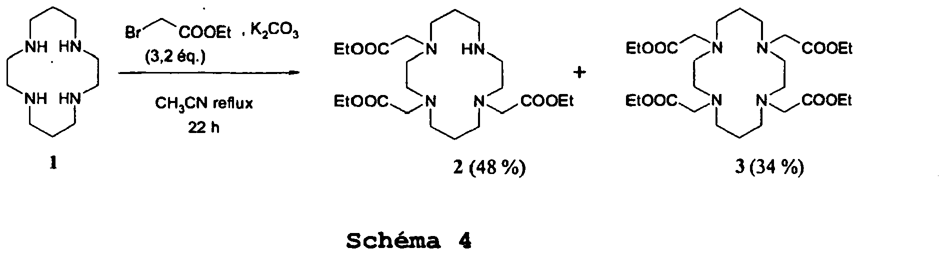

De même, le produit propionate ester correspondant **4** a été obtenu avec un rendement de 75 % par réaction du cyclame avec un excès d'acrylate d'éthyle dans le chloroforme (Schéma 5). La réaction s'arrête au composé trifonctionnalisé alors que la substitution est complète dans un solvant tel que l'acétonitrile.

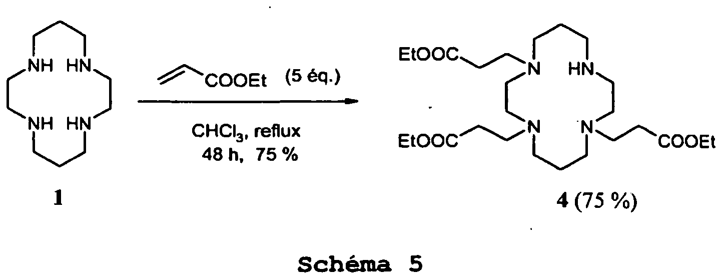

### Couplage sur PP-ClSt

L'immobilisation des molécules macrocycliques sur les fibres PP-ClSt procède par une réaction de substitution nucléophile entre les fonctions par exemple chlorométhyle du substrat et la fonction amine secondaire des ligands. Le rendement du greffage a été calculé à partir de la teneur en chlore du matériau précurseur et de la teneur de macrocycle fixé (analyse élémentaire de l'azote du matériau final). Il tient compte du gain en masse du matériau lors du couplage du ligand.

### Couplage d'un ligand non fonctionnalisé : le cyclame

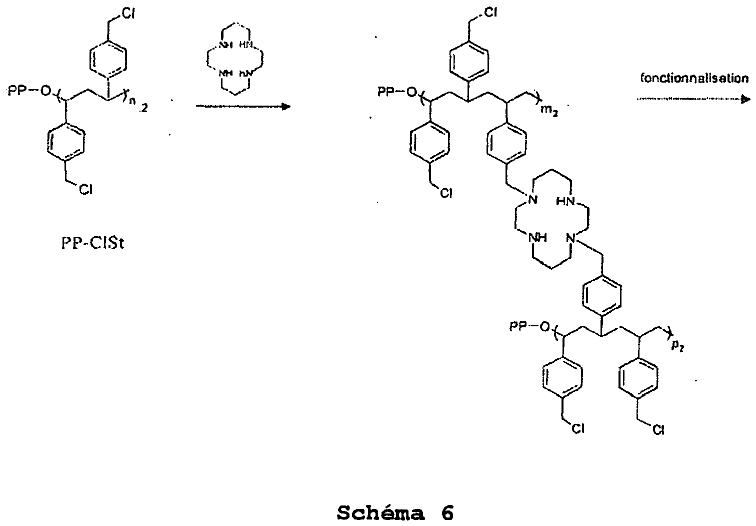

Dans le Schéma 6, n₂, p₂ et m₂ sont des nombres entiers de 10 à 1000.

Les matériaux élaborés possèdent une teneur en cyclame greffé variant entre 0,2 mmol/g et 1,1 mmol/g, cette valeur étant directement liée au degré de polymérisation du matériau PP-ClSt. Les résultats de couplage obtenus montrent qu'en moyenne le cyclame est lié au support solide par deux liaisons covalentes (Schéma 6). Ce schéma peut être bien sûr généralisé à tout polyazacycloalcane. Lors de l'étape de fonctionnalisation suivante, en moyenne une seule fonction coordinante (sur deux possibles) est introduite.

Dans cette étape de fonctionnalisation, on réalise par exemple la substitution d'une ou de plusieurs des fonctions amines libre par un groupe R₂ autre qu'un hydrogène défini plus haut.

Le matériau référence à base de silice est élaboré selon un schéma similaire avec une post-fonctionnalisation du ligand, après greffage sur le matériau. Dans ce cas également, seule une à deux fonctions carboxylates complexantes sont présentes par ligand.

### Couplage de ligands trifonctionnalisés

Le couplage de ligands trifonctionnalisés garantit au contraire que trois fonctions carboxylates coordinantes sont systématiquement présentes par molécule macrocyclique fixée sur le matériau, ce qui est un gage d'un piégeage des métaux lourds, lanthanides et actinides plus efficace.

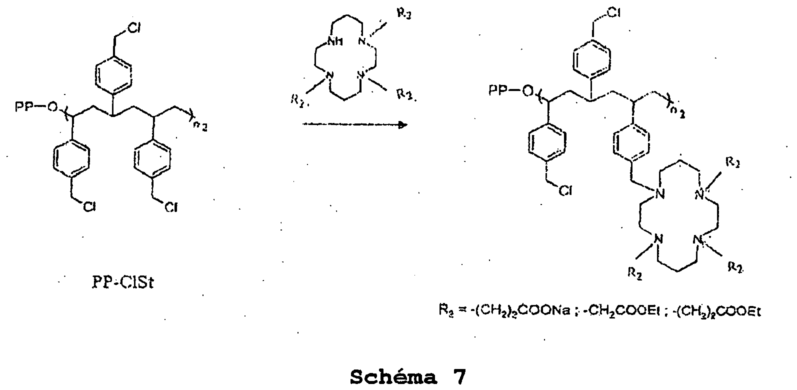

Dans le Schéma 7, n₂ est un nombre entier de 10 à 1000.

### Couplage du ligand N,N',N"-tris(2-sodiumoxycarbonyléthyl)-cyclame (R₂=(CH₂)₂COONa)

Cette réaction (Schéma 7) est réalisée dans l'eau et conduit à un greffage réel, bien que faible. Le couplage du cyclame dans un solvant organique (acétonitrile), dans des conditions opératoires identiques, est ainsi comparativement largement plus élevé (Tableau 2).

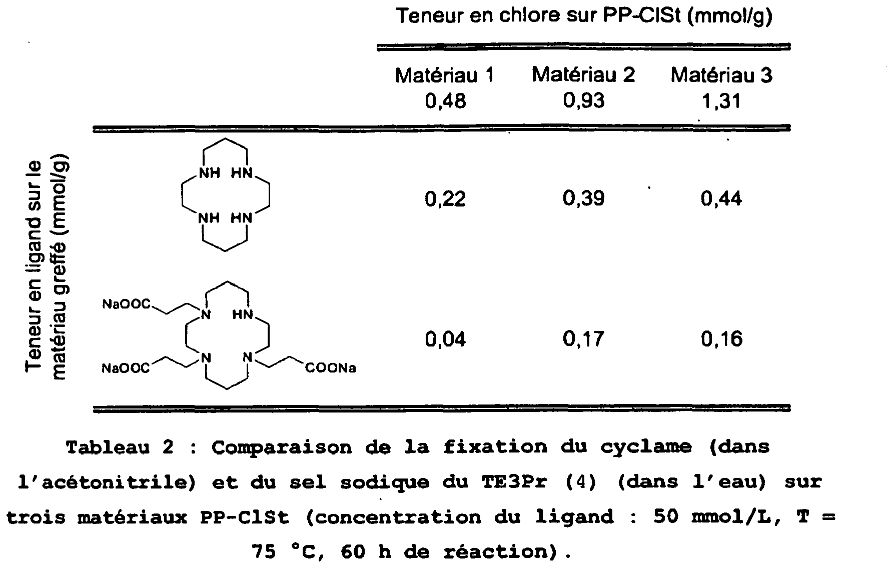

### Couplage des ligands N,N',N"-tris(méthoxycarbonyléthyl)-cyclame (TE3AE) (R₂=CH₂COOEt) et N,N',N"-tris(éthoxycarbonyléthyl)-cyclame (TE3PE) (R₂=(CH₂)₂COOEt)

Le couplage des triesters **TE3AE (2)** et **TE3PE (4)** sur PP-ClSt est réalisé en milieu organique, dans l'acétonitrile (Schéma 7). Ce schéma peut être généralisé à tout polyazacycloalcane. Les teneurs en ligand greffé sont dépendantes de la teneur en groupes chlorométhyle présents sur PP-ClSt mais également de l'excès de ligand utilisé pour la réaction de couplage (Tableau 3). Le rendement du greffage augmente avec l'excès de macrocycle employé pour la réaction. Cependant, une limite, attribuée à l'encombrement stérique, dans l'efficacité du couplage a été observée autour de 50%.

**Tableau 3 : Rendement du greffage de TE3AE et de TE3PE sur divers matériaux PP-ClSt.**

| | Teneur en fonctions chlorométhyle (mmol/g) | Teneur en ligand (mmol/g) | Rendement du greffage (%) | Excès ligand/ chlorométhylstyrène |
|---|---|---|---|---|
| 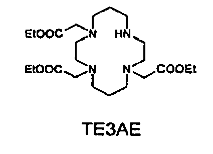 | 1,90 | 0,69 | 53 | 7 |
| | 1,31 | 0,46 | 43 | 6 |
| | 2,30 | 0,81 | 53 | 5 |
| | 2,30 | 0,54 | 33 | 4 |
| | 1,00 | 0,28 | 28 | 3 |
| | 0,60 | 0,14 | 24 | 3 |
| 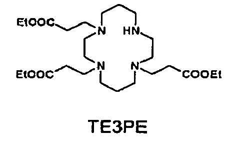 | 2,30 | 0,88 | 50 | 9 |
| | 1,90 | 0,81 | 63 | 7 |
| | 1,31 | 0,54 | 51 | 7 |
| | 1,73 | 0,53 | 40 | 6 |
| | 0,60 | 0,22 | 35 | 3 |
| | 0,75 | 0,25 | 38 | 3 |

Dans un second temps, les fonctions acide carboxylique coordinantes sont générées par saponification des groupes ester des ligands macrocycliques, en présence de soude dans un milieu eau/alcool. Cette étape conduit simultanément à l'hydroxylation d'une grande partie (environ 75%) des terminaisons chlorées résiduelles, augmentant ainsi fortement l'hydrophilie et la mouillabilité des fibres greffées. L'hydrophobie intrinsèque des fibres de polypropylène est donc contrebalancée par l'introduction d'un nombre conséquent de fonctions hydrophiles : les terminaisons hydroxyles et les fonctions carboxylates du ligand.

### Couplage sur PP-MAnClSt

Le greffage sur les matériaux PP-MAnClSt a été limité au couplage des ligands TE3PE et TE3AE. La teneur maximale en macrocyle greffé est de 0,6 mmol/g. Des deux réactions possibles pour coupler une amine secondaire sur le matériau PP-MAnClSt, c'est à dire une réaction de substitution nucléophile sur l'atome de carbone lié à l'atome de chlore ou une condensation sur l'anhydride maléique avec création d'une fonction amide, il a été montré que pour deux tiers le ligand est immobilisé par la seconde voie.

L'étape suivante de saponification des groupes ester du ligand immobilisé, est accompagnée, comme précédemment, de l'hydroxylation d'une grande partie (75%) des fonctions chlorométhyle résiduelles du matériau. Il convient de remarquer que les conditions opératoires employées (réaction à 40 °C pendant 18 h avec de la soude 0,5 N) permettent une hydrolyse complète des fonctions ester alors qu'une hydrolyse très partielle des fonctions amide est observée : le ligand macrocyclique reste fixé à 85%.

L'invention va maintenant être décrite en référence aux exemples suivants, donnés à titre illustratif et non limitatif.

### EXEMPLE 1: Influence de divers paramètres sur le greffage du polychlorométhylstyrène sur des fibres de polypropylène

Dans cet exemple, on étudie l'influence de divers paramètres sur le greffage du polychlorométhylstyrène sur des fibres de polypropylène.

Ces fibres de polypropylène sont sous forme de non-tissé et ont été fournies après irradiation par l'Institut Français du Textile et de L'Habillement.

Il est tout d'abord à noter que la qualité du greffage peut être évaluée soit par analyse élémentaire de l'atome de chlore, soit par détermination du gain en masse du matériau pendant le greffage. Ces deux évaluations sont concordantes lorsque la fibre n'est pas dégradée lors du greffage (perte de masse). Les résultats de greffage donnés ci-après sont exprimés, par choix, en fonction de la teneur en chlore.

### 1A.Choix du solvant

Divers travaux mentionnent l'utilisation de solvants tels que le méthanol^{[56]}, l'eau ^{[57, 58]} ou le mélange eau-méthanol (1-1)^{[39]} pour greffer le styrène sur le polypropylène.

En plus des solvants décrits ci-dessus pour la polymérisation du polystyrène sur le polypropylène, les solvants toluène et N,N-diméthylformamide (DMF) ont été testés pour la polymérisation du chlorométhylstyrène en surface de fibres de polypropylène.

Ce dernier solvant (DMF) conduit aux meilleurs résultats puisqu'il assure une bonne homogénéité dans le greffage, permet de solubiliser le produit secondaire à savoir l'homopolymère et ne favorise pas la dégradation du matériau.

Le DMF apparaît comme un solvant adéquat pour cette réaction.

### 1B.Influence de la dose d'irradiation

La dose d'irradiation traduit l'énergie du rayonnement reçue par le matériau.

Les fibres de polypropylène étudiées ont été irradiées à trois doses différentes : 20 kGy, 40 kGy et 60 kGy (1 Gy = 1 J.kg⁻¹).

Les résultats obtenus (figure 1) montrent une quantité supérieure de polychlorométhylstyrène greffé pour des doses d'irradiation élevées. Cependant, à 60 kGy, les fibres se dissolvent partiellement dans le milieu, conséquence du raccourcissement des chaînes de polypropylène, par réaction de scission. L'influence de l'irradiation, bien que décelable, reste toutefois limitée et est fortement atténuée après couplage ultérieur du macrocycle sur le matériau PP-ClSt.

Une dose d'irradiation à 40 kGy semble optimale pour conserver l'intégrité de la fibre tout en assurant un taux de greffage acceptable.

### 1C. Influence de la température

La température intervient sur la dégradation des liaisons peroxydiques en formant des oxo-radicaux. Son augmentation provoque un accroissement du nombre de sites d'amorçage de la polymérisation radicalaire et par conséquent induit une hausse de la quantité de polychlorométhylstyrène greffé (Figure 2)

Il existe cependant une limite en température imposée par le début de solubilisation du polypropylène dans le milieu rédactionnel. Jusqu'à 120 °C, la fibre n'est pas dégradée pour un temps de réaction de 16 h, lorsque le chlorométhylstyrène est dilué à 40% dans le DMF.

La température de réaction sera donc limitée à 115°C.

### 1D. Influence de la concentration en chlorométhylstyrène dans le DMF

L'étude de l'influence de la concentration en monomère, sur la gamme 30-50% de chlorométhylstyrène dans le DMF, a révélé un greffage optimum sur le polypropylène pour une concentration en chlorométhylstyrène voisine de 40% (Figure 3). Ce passage par un maximum est mentionné par de nombreuses équipes pour différents systèmes : le maximum est atteint à 55% pour l'acide acrylique dans l'eau^{[36]}, 40% pour le méthylméthacrylate dans le mélange méthanol-décaline^{[34]}, 40% pour le styrène dans l'eau^{[39]}, 25% pour le styrène dans le méthanol^{[56]}.

Une proportion de 40% de chlorométhylstyrène dans le DMF est donc optimale pour la réaction de polymérisation de ce monomère en surface du polypropylène.

### 1E. Influence de la durée de la réaction

Cette réaction est caractérisée par un temps de latence avant que la polymérisation ne débute. Il correspond à la période nécessaire de mise en température des fibres et consommation des stabilisants du monomère (Figure 4).

Le contrôle de la durée de réaction permet de maîtriser la quantité de groupes chlorométhyle fixés sur les fibres de polypropylène et par suite la teneur en ligands macrocycliques ancrés ultérieurement sur le matériau. L'objectif n'est pas d'atteindre l'immobilisation maximale de ligands macrocycliques car cela impose une forte modification de la structure du matériau et la perte des propriétés initiales des fibres.

Aussi, une durée de réaction d'environ 10 heures (autour de 2 mmol/g de fonctions chlorométhyle) paraît un bon compromis entre un greffage conséquent et une conservation des caractéristiques du support.

### EXEMPLE 2 : Formation d'un complexe de transfert de charge entre l'anhydride maléique et le chlorométhylstyrène

La formation en solution d'un complexe de transfert de charge entre l'anhydride maléique et le chlorométhylstyrène a été mise en évidence par spectroscopie RMN (Figure 5). Après agitation des deux réactifs pendant une heure au reflux de l'acétone, le spectre RMN du milieu réactionnel montre la présence de nouveaux signaux éthyléniques, blindés par rapport à ceux des monomères libres correspondants.

L'équilibre de cette réaction (schéma 8) est déplacé vers les monomères libres, cependant, la quantité non négligeable du complexomère ainsi que sa polymérisation privilégiée permet d'atteindre le greffage en surface du polypropylène d'un copolymère alterné.

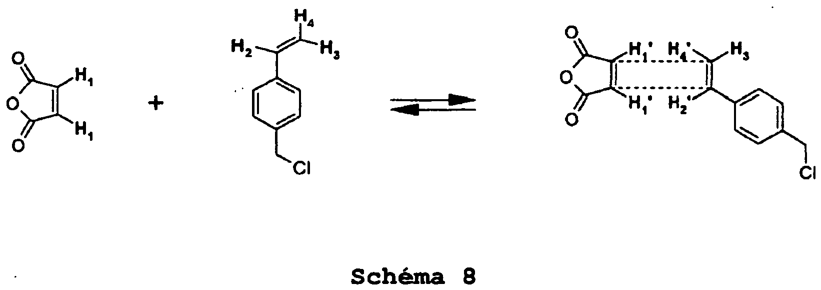

### EXEMPLE 3 : influence de divers paramètres sur le greffage du poly(anhydride maléique-alt-chlorométhylstyrène) sur des fibres de polypropylène

Dans cet exemple, on étudie l'influence de divers paramètres sur le greffage du poly(anhydride maléique-alt-chlorométhylstyrène) sur des fibres de polypropylène.

Ci-dessous sont décrits les résultats du greffage du poly(anhydride maléique-*alt-*chlorométhylstyrène), sur des fibres de polypropylène, exprimés en terme de gain en masse, pour différentes conditions opératoires.

**Tableau 4 : Etude du greffage du poly(anhydride maléique-alt-chlorométhylstyrène).**

| Solvant | Température (°C) | Temps de réaction (h) | Gain en masse (%) |
|---|---|---|---|
| Toluène | 90 | 14 | 82 |
| | 95 | 4 | 25 |
| Acétone | 75 | 14 | 1 |
| | 90 | 5,5 | 3 |
| | 90 | 17 | 32 |
| | 90 | 30 | 83 |

La polymérisation n'a pas lieu dans le DMF, elle est plus rapide dans le toluène que dans l'acétone. Cependant, comme l'acétone solubilise les deux monomères et l'homocopolymère, à la différence du toluène, il est préféré comme solvant de la réaction. L'homogénéité du greffage est alors garantie.

La fixation de chaque monomère sur le polypropylène est confirmée qualitativement par spectroscopie infrarouge et quantitativement par microanalyse des éléments chlore et oxygène. Pour un gain en masse de 32%, les quantités d'anhydride maléique et de chlorométhylstyrène greffés sont de 0,97 mmol/g chacune, en supposant l'enchaînement régulier des deux monomères (Tableau 5). Les résultats expérimentaux (1,03 mmol/g en anhydride maléique et 0,94 mmol/g en chlorométhylstyrène) confirment l'alternance des deux monomères dans le copolymère validant ainsi la polymérisation du complexe de transfert de charge à la surface du polypropylène.

**Tableau 5 : Quantité d'anhydride maléique et de chlorométhylstyrène greffés sur PP-MAnCISt, déterminée à partir du gain en masse et de l'analyse élémentaire du chlore et de l'oxygène.**

| | Quantité de monomères greffés (mmol/g) | |
|---|---|---|
| | Anhydride Maléique | Chlorométhylstyrène |
| Gain en masse 32 % | 0,97 | 0,97 |
| Analyse élémentaire % Cl = 3,65 | 1,03 | - |
| Analyse élémentaire % O = 4,52 | - | 0,94 |

Dans les exemples 4 et 5 qui suivent, on décrit la synthèse des ligands macrocycliques utilisés pour le greffage sur des fibres de polypropylène conformément à l'invention.

### EXEMPLE 4 : Préparation de ligands utilisés pour le greffage direct

### Exemple 4A : Préparation du 1-(4-vinylbenzyl)-1,4,8,11-tétraazacyclotétradécane

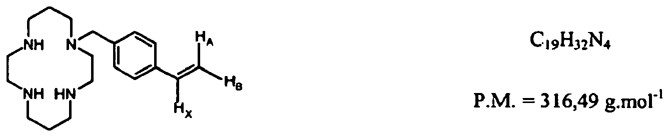

40 g de cyclame (1) (200 mmol) sont dissous dans un 1 L de DMF, à 70°C. 25 g (181 mmol) de carbonate de potassium sont ajoutés à la solution. Une solution de 5,9 g (38,7 mmol) de chlorométhylstyrène dans 500 mL de DMF est ajoutée par un lent goutte-à-goutte (9 heures) sous agitation. Le milieu réactionnel est agité à 70°C une heure supplémentaire. Après retour à température ambiante, l'excès de cyclame et de carbonate de potassium est éliminé par filtration. Le filtrat est évaporé puis repris dans l'éther diéthylique. Après évaporation du solvant, le composé est obtenu sous forme d'une huile jaune clair (11,2 g ; 35,4 mmol). Rendement : 91%.
*RMN ¹**H* (*200 MHz* ; *CDCl₃**)* δ *(ppm)* :
1,52 (m, 2H, CH₂-β) ; 1,69 (m, 2H, CH₂-β) ; 2,2-2,7 (massif, 16H, CH₂-α) ; 3,40 (s, 2H, CH₂-ϕ) ; 5,06 (d, J_{BX} = 11,0 Hz, 1H, H_{B}) ; 5,54 (d, J_{AX} = 17,6 Hz, 1H, H_{A}) ; 6,52 (dd, J_{BX} = 11,0 Hz, J_{AX} = 17,6 Hz, 1H, H_{X}) ; 7,1-7,2 (massif, 4H, H-Ar).
*RMN ¹³C (50 MHz ; CDCl₃**)* δ *(ppm) :*
26,3 ; 28,7 (CH₂-β) ; 47,5 ; 48,0 ; 49,0 ; 49,1 ; 49,3 ; 50,8 ; 53,2 ; 54,7 (CH₂-α) ; 57,5 (CH₂-ϕ) ; 113,3 (=CH₂) ; 126,0 ; 129,3 (CH-Ar) ; 136,2 (CAr) ; 136,7 (ϕ-CH=) ; 138,4 (C-Ar).

### Spectrométrie de masse (MALDI/TOF) : m/z = 316,88 (M^{+•})

Exemple 4B : Préparation du 1-(4-vinylbenzyl)-1,4,8-tris(éthoxycarbonyléthyl)-1,4,8,11-tétraazacyclotétradécane

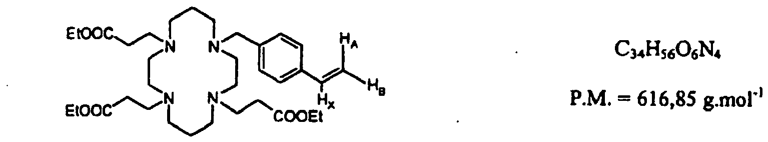

15,0 g (47,4 mmol) du composé préparé dans l'exemple 4A sont dissous dans 700 mL d'éthanol. 72,0 g (720 mmol) d'acrylate d'éthyle dans 400 mL d'éthanol sont ajoutés par un goutte-à-goutte rapide (durée de l'addition : 1 heure) sous agitation. Le milieu réactionnel est porté au reflux de l'éthanol pendant 43 heures. Après évaporation de l'éthanol, le résidu est repris dans 100 mL de pentane. Le solvant est évaporé et le composé est purifié sur colonne d'alumine (éluant acétate d'éthyle : hexane 50:50). Le composé est obtenu sous forme d'une huile jaune clair (25,1 g ; 40,7 mmol). Rendement : 86%.
*RMN ¹H (200 MHz ; CDCl₃**)* δ *(ppm) :*
1,18 (t, J = 7,1 Hz, 3H, CH₃-CH₂) ; 1,20 (t, J = 7,1 Hz, 3H, CH₃-CH₂) ; 1,22 (t, J = 7,1 Hz, 3H, CH-CH₂) ; 1,56 (m, 4H, CH₂-β) ; 2,3-2,5 (massif, 22H, CH₂-α) ; 2,6-2,8 (massif, 6H, CH₂-CO) ; 3,45 (s, 2H, CH₂-ϕ) ; 4,04 (q, J = 7,1 Hz, 2H, CH₃-CH₂) ; 4,06 (q, J = 7,1 Hz, 2H, CH₃-CH₂) ; 4,09 (q, J = 7,1 Hz, 2H, CH₃-CH₂) ; 5,16 (dd, 1H, J_{AB} = 1,0 Hz, J = 11,0 Hz, H_{B}) ; 5,68 (dd, 1H, J_{AB} = 1,0 Hz, J_{AX} = 17,6 Hz, H_{A}) ; 6,66 (dd, 1H, J_{BX} = 11,0 Hz, J_{AX} = 17,6 Hz, H_{X}) ; 7,2-7,3 (massif, 4H, H-Ar).
*RMM ¹³C (50 MHz ; CDCl₃**)* δ *(ppm) :*
14,3 (3C) (CH₃-CH₂) ; 23,7 ; 24,1 (CH₂-β) ; 32,6 ; 32,7 (2C) (CH₂-CO) ; 50,6 (4C) ; 51,2 (4C) ; 51,4 (3C) (CH₂-α) ; 59,4 (CH₂-ϕ) ; 60,4 (3C) (CH₃-CH₂) ; 113,3 (=CH₂) ; 129,0 ; 129,1 (CH-Ar) ; 136,2 (C-Ar) ; 136,8 (ϕ-CH=) ; 139,8 (C-Ar) ; 172,9 (3C) (C=O).
*Spectrométrie de masse (MALDI*/*TOF) :*
m/z = 616, 83 (M^{+•}).

| | | | |
|---|---|---|---|
| *Analyse élémentaire :* | | | |
| Calculée : | C : 66,23 ; | H : 9,09 ; | N : 9,09 |
| Trouvée : | C : 66,42 ; | H : 9,11 ; | N : 9,13. |

### EXEMPLE 5 : Préparation de ligands utilisés pour le greffage en deux étapes

Exemple 5A : Préparation du 1,4,8-tris (éthoxycarbonylméthyl)-1,4,8,11-tétraazacyclotétradécane 2

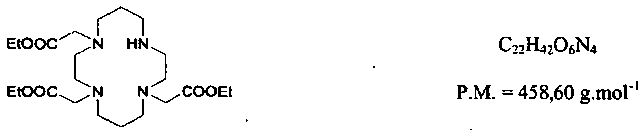

5 g (25 mmol) de cyclame sont dissous dans 400 mL d'acétonitrile en présence de 15 g (109 mmol) de carbonate de potassium. 8 g (80 mmol) de bromoacétate d'éthyle sont ajoutés par un rapide goutte-à-goutte. Le milieu réactionnel est porté au reflux de l'acétonitrile pendant 22 heures. L'excès de carbonate de potassium est filtré et le solvant évaporé. L'ajout de 100 mL d'éthanol au résidu fait précipiter un solide blanc. Après filtration et séchage, 4,57 g du composé **3** sont isolés. Le filtrat est évaporé puis repris dans 50 mL de pentane. Après évaporation du solvant, le composé 2 est obtenu sous forme d'une huile incolore (5,50 g ; 12,0 mmol). Rendement 48%.

Le produit peut être purifié sur colonne d'alumine (éluant dichlorométhane : méthanol de 99:1 vers 95:5)
*RMN ¹H (300 MHz ; CDCl₃**)* δ *(ppm) :*
1,17 (t, J = 7,1 Hz, 3H, CH₃-CH₂) ; 1,19 (t, J = 7,1 Hz, 3H, CH₃-CH₂) ; 1,20 (t, J = 7,1 Hz, 3H, CH₃-CH₂) ; 1,53 (m, 2H, CH₂-β) ; 1, 64 (m, 2H, CH₂-β) ; 2,5-2,8 (massif, 17H, CH₂-α et NH) ; 3,27 (s, 2H, CH₂-CO) ; 3,28 (s, 2H, CH₂-CO) ; 3,32 (s, 2H, CH₂-CO) ; 4,05 (q, J = 7,1 Hz, 2H, CH₃-CH₂) ; 4,06 (q, J = 7,1 Hz, 2H, CH₃-CH₂) ; 4,07 (q, J = 7,1 Hz, 2H, CH₃-CH₂).
*RMN ¹³C (75 MHz ; CDCl₃**)* δ *(ppm) :*
14,6 (3C) (CH₃-CH₂) ; 25,5 ; 26,3 (CH₂-β) ; 47,7 ; 47,8 ; 48,8 ; 50,0 ; 50,4 ; 51,8 ; 52,6 53,8 ; 53,9 ; 54,1 ; 55,6 (CH₂-α) ; 60,1 ; 60,2 (2C) (CH₃-CH₂) ; 171,5 ; 171,6 ; 171,7 (C=O).
*Spectroscopie IR (KBr,cm⁻¹) :*
1736 υ (C=O).
*Spectrométrie de masse (MALDI*/*TOF) :*
m/z = 457,95 (M^{+•}).

| | | | | |
|---|---|---|---|---|
| *Analyse élémentaire :* | | | | |
| **2,** 2H₂O | Calculée : | C : 53,64 ; | H : 9,00 ; | N : 11,37 |
| | Trouvée : | C : 53,48 ; | H : 8,81 ; | N : 11,40. |

### Exemple 5B : Préparation du 1,4,8,11-tétra(éthoxycarbonylméthyl)-1,4,8,11-tétraazacyclotétradécane 3

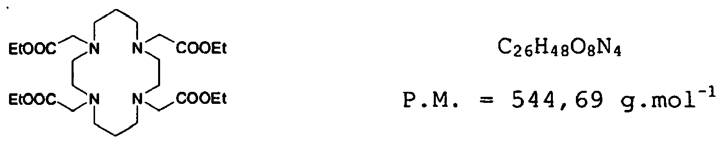

Ce composé est un produit secondaire de la synthèse du composé 2. Rendement 34%.
*RMN ¹H (500 MHz ; CDCl₃**)* δ *(ppm) :*
1,23 (t, J = 7,1 Hz, 12H, CH₃-CH₂) ; 1,59 (qt, 4H, J = 6,6 Hz, CH₂-β) ; 2,68 (t, 8H, J = 6,6 Hz, CH₂-α) ; 2,72 (s, 8H, CH₂-α) ; 3,34 (s, 8H, CH₂-CO) ; 4,12 (q, J = 7,1 Hz, 8H, CH₃-CH₂).
*RMN* ¹³*C (125 MHz ; CDCl₃**)* δ *(ppm) :*
14,8 (CH₃-CH₂) ; 25,8 (CH₂-β) ; 51,5 ; 51,6 (CH₂-α) ; 55,9 (CH₂-CO) ; 60,6 (CH₃-CH₂) ; 172,1 (C=O).
*Spectroscopie IR (KBr,cm⁻¹) :*
1729 υ (C=O).
*Spectrométrie de masse (MALDI*/*TOF) :*
m/z = 544, 99 (M^{+•}).

| | | | | |
|---|---|---|---|---|
| *Analyse élémentaire :*O | | | | |
| **3**, 2H₂ | Calculée : | C : 57,33 ; | H : 8,88 ; | N : 10,29 |
| | Trouvée : | C : 57,03 ; | H : 8,92 ; | N : 10,24. |

### Exemple 5C : 1,4,8-tris(éthoxycarbonyléthyl)-1,4,8,11-tétraazacyclotétradécane 4

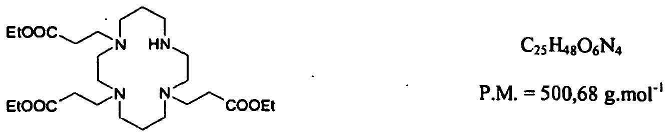

16,2 g (81 mmol) de cyclame (1) sont dissous dans 1,3 L de chloroforme au reflux. 40 g (400 mmol) d'acrylate d'éthyle sont ajoutés. Après 48 heures de reflux, le chloroforme est évaporé puis le résidu est repris dans 200 mL de pentane. L'évaporation conduit à l'obtention de 30,3 g (60,5 mmol) d'une huile légèrement jaune. Rendement brut 75%.
Le produit peut être purifié sur colonne de silice par élution progressive 89:1:10 vers 85:5:10 dichlorométhane : méthanol : triéthylamine. Rendement après colonne 65%.
*RMN ¹H (500 MHz ; CDCl₃**)* δ *(ppm) :*
1,15 (t, J = 7,1 Hz, 3H, CH₃-CH₂) ; 1,16 (t, J = 7,1 Hz, 3H, CH₃-CH₂) ; 1,17 (t, J = 7,1 Hz, 3H, CH₃-CH₂) ; 1,52 (m, 2H, CH2-β) ; 1,64 (m, 2H, CH₂-β) ; 2,3-2,6 (massif, 23H, CH₂-α et NH) ; 2,69 (t, J = 7,2 Hz, 2H, CH₂-CO) ; 2,70 (t, J = 7,2 Hz, 2H, CH₂-CO) ; 2,71 (t, J = 7,2 Hz , 2H, CH₂-CO) ; 4,01 (q, J = 7,1 Hz, 2H, CH₃-CH₂) ; 4,02 (q, J = 7,1 Hz, 2H, CH₃-CH₂) ; 4,03 (q, J = 7,1 Hz, 2H, CH₃-CH₂).
*RMN ¹³C (125 MHz ; CDCl₃**)* δ *(ppm) :*
14,6 (3C) (CH₃-CH₂) ; 25,3 ; 25,9 (CH₂-β) ; 31,5 ; 31,9 ; 31,9 (CH₂-CO) ; 47,4 ; 48,3 ; 49,1 ; 49,2 ; 49,4 ; 50,3 ; 50,7 ; 51,4 ; 52,0 ; 52,7 ; 53,6 (CH₂-α) ; 60,7 (3C) (CH₃-CH₂) ; 173,2 (C=O) (3C).
*Spectroscopie IR (KBr,cm⁻¹) :*
1729 υ (C=O).
*Spectrométrie de masse (MALDI*/*TOF) :*
m/z = 500,82 (M^{+•}).

| | | | |
|---|---|---|---|
| *Analyse élémentaire :* | | | |
| Calculée : | C : 59, 97 ; | H : 9, 66 ; | N : 11,03 |
| Trouvée : | C : 59,68 ; | H : 10,49 ; | N : 11,19. |

Dans les exemples qui suivent, on décrit la synthèse des matériaux selon l'invention.

### EXEMPLE 6 : Préparation d'un matériau selon l'invention par greffage direct sur des fibres de polypropylène

### Exemple 6A : Greffage de poly-N-(4-vinylbenzyl)-cyclame sur des fibres de polypropylène

1,2 g (3,8 mmol) du composé N-(4-vinylbenzyl)-cyclame sont dissous dans 8 g de DMF. Les fibres de polypropylène (109,5 mg), irradiées à 40 kGy, sont ajoutées à cette solution. Après bullage d'azote pendant 30 minutes, le milieu réactionnel est chauffé à 105°C pendant 13 heures. Les fibres sont lavées au toluène, à l'éthanol et à l'éther et enfin séchées sous vide. 115,9 mg de fibres sont obtenus.
*Analyse élémentaire :*
N : 1,10% soit 0,20 mmol/g de cyclame.

### EXEMPLE 7 : Préparation d'un matériau selon l'invention par greffage en deux étapes sur des fibres de polypropylène

NB : dans ce qui suit, les chiffres romains identifiant les composés ne font pas référence aux chiffres des formules déjà données plus haut et dans les revendications.

### 7A : PP-ClSt I

Une suspension de 2,47 g de fibres de polypropylène, irradiées à 40 kGy, dans une solution de 45 g (295 mmol) de chlorométhylstyrène dans 45 g de DMF est dégazée sous azote pendant 30 minutes. Le milieu réactionnel est ensuite porté à une température de 115°C sous atmosphère d'azote pendant 4 heures. Les fibres sont ensuite lavées au toluène, à l'éthanol puis à l'éther et enfin séchées sous vide. Le matériau PP-ClSt **I** est obtenu sous la forme d'un non-tissé (2,78 g). Gain en masse : 13%.
*Analyse élémentaire :* Cl : 2,75 % soit 0,77 mmol/g de fonctions chlorométhyle.

### 7B : PP-ClSt-cyclame II

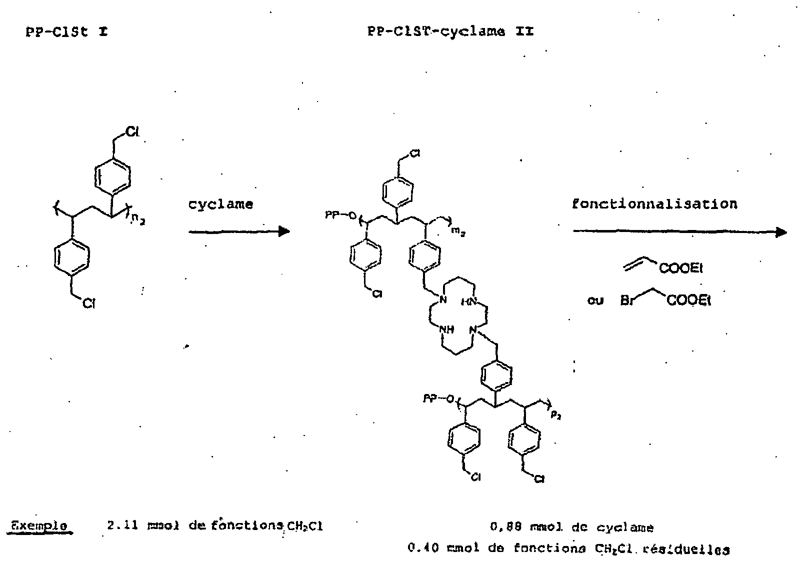

Dans les formules ci-dessus, n₂, m₂ et p₂ sont des nombres entiers de 10 à 1000.

Une suspension de 2,73 g du matériau PP-ClSt **I** et 3,5 g (24,3 mmol) de carbonate de potassium, dans une solution de 3,50 g (17,5 mmol) de cyclame (**1**) dans 300 mL d'acétonitrile, est chauffée à 60°C pendant 60 heures. Les fibres sont lavées par un mélange eau : éthanol jusqu'à retour à la neutralité des eaux de lavage, puis à l'éthanol, au toluène et enfin à l'éther. Après séchage sous vide, Le matériau PP-ClSt-cyclame **II** est obtenu sous la forme d'un non-tissé (2,84 g).

### Analyse élémentaire :

N : 1,72% soit 0,31 mmol/g de cyclame
Cl : 0,49% soit 0,14 mmol/g de fonctions chlorométhyle résiduelles.

### 7C : PP-ClSt III

Une suspension de fibres de polypropylène (1,39 g), irradiées à 40 kGy, dans une solution de 24 g (157 mmol) de chlorométhylstyrène dans 56 g de DMF est dégazée sous azote pendant 30 minutes. Le milieu réactionnel est ensuite porté à une température de 115°C sous atmosphère d'azote pendant 17 heures. Les fibres sont ensuite lavées au toluène, à l'éthanol puis à l'éther et enfin séchées sous vide. Le matériau PP-ClSt **III** est obtenu sous la forme d'un non-tissé (2,28 g). Gain en masse : 64%.
*Analyse élémentaire :*
Cl : 8,17% soit 2,30 mmol/g de fonctions chlorométhyle.
*Spectroscopie IR (KBr, cm⁻¹) :*
**3087 ; 3025** υ **(=C-H) ;** 2960 ; 2922 ; 2837 ; 1724 ; **1611 ; 1512** υ **(C=C) ;** 1451 ; 1377 **1264** δ **(CH₂) ;** 1167 ; 1110 ; 1020 ; 998 ; 872 ; 840 ; **809** υ **(C=C-H) ;** 708 ; 674.

### 7D : PP-ClSt-TE3AE IV

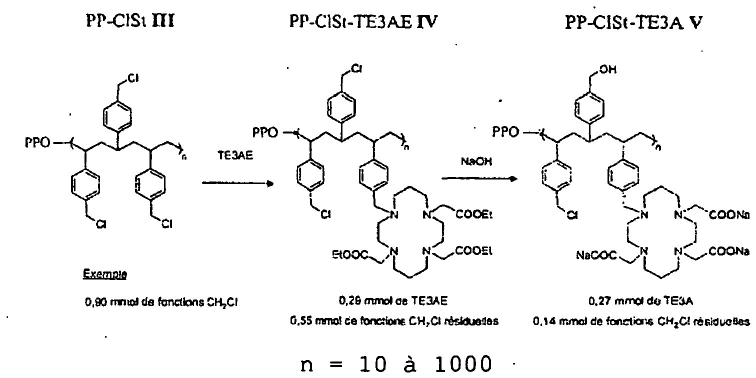

Une suspension de 0,39 g du matériau PP-ClSt **III** et 5,5 g (39,9 mmol) de carbonate de potassium dans une solution de 1,67 g (3,65 mmol) du triester **10** (TE3AE) dans 50 mL d'acétonitrile, est chauffée à 40°C pendant 70 heures. Les fibres sont lavées par un mélange eau : éthanol jusqu'à retour à la neutralité des eaux de lavage, puis à l'éthanol, au toluène et enfin à l'éther. Après séchage sous vide, le matériau PP-ClSt-TE3AE **IV** est obtenu sous la forme d'un non-tissé (0,54 g).
*Spectroscopie IR (KBr, cm⁻¹) :*
3453 ; 2961 ; 2924 ; 2837 ; **1727** υ **(C=O) ;** 1634 ; 1611 1511 ; 1499 ; 1376 ; 1261 ; 1153 ; 1111 ; 1028 ; 997 ; 971 ; 839 ; 807 ; 707 ; 671.

### Analyse élémentaire :

N : 3,02% soit 0,54 mmol/g de TE3AE
Cl : 3,59% soit 1,01 mmol/g de fonctions chlorométhyle résiduelles.

### 7E : PP-ClSt-TE3A V

Une solution de soude 1 M est préparée dans le mélange eau : éthanol, dans le rapport volumique 1:1. A 80 mL de cette solution est ajouté le matériau PP-ClSt-TE3AE **IV** (0,51 g). Le milieu réactionnel est agité vigoureusement pendant 30 heures. Les fibres sont lavées par un mélange eau : éthanol jusqu'à retour à la neutralité des eaux de lavage, puis à l'éthanol, au toluène et enfin à l'éther. Le matériau PP-ClSt-TE3A **V** est obtenu sous la forme d'un non-tissé (0,48 g).
*Spectroscopie IR (KBr, cm⁻¹) :*
3437 ; 2963 ; 2922 ; 2851 ; 1627 ; **1594** υ**ₐₛ (C=O) ;** 1511 ; 1452 ; **1419** υ**ₛ (C=O) ;** 1384 ; 1261 ; 1097 ; 997 ; 972 ; 840 ; 807 ; 708.
*Analyse élémentaire :*
N : 3,05% soit 0,54 mmol/g de TE3A
Cl : 1,03% soit 0,29 mmol/g de fonctions chlorométhyle résiduelles.

### 7F : PP-MAnClSt VI

Une suspension de fibres de polypropylène (2,44 g), irradiées à 40 kGy, dans une solution de 24 g (245 mmol) d'anhydride maléique et 36 g (236 mmol) de chlorométhylstyrène dans 94 mL d'acétone, est dégazée sous azote pendant 30 minutes dans un autoclave. Le milieu réactionnel est ensuite porté à une température de 90°C sous atmosphère d'azote pendant 20 heures. Les fibres sont ensuite lavées à l'acétone, au toluène puis à l'éther et enfin séchées sous vide. Le matériau PP-MAnClSt **VI** est obtenu sous la forme d'un non-tissé (3,28 g). Gain en masse : 35%.
*Spectroscopie IR (KBr, cm⁻¹) :*
3402 ; 2959 ; 2925 ; 2838 ; **1858** υ**ₐₛ (C=O) ; 1782** υ**ₛ (C=O) ;** 1710 ; 1454 ; 1377 ; **1262** δ **(CH₂) ;** 1222 ; 1167 ; **1093** υ **(C-O) ;** 998 ; 973 ; 841 ; **806** δ **(C=C-H) ;** 711.
*Analyse élémentaire :*
Cl : 3,53% soit 0,99 mmol/g de fonctions chlorométhyle
O : 4,63% soit 0,96 mmol/g de fonctions anhydride.

### 7G : PP-MAn-ClSt-TE3PE VII

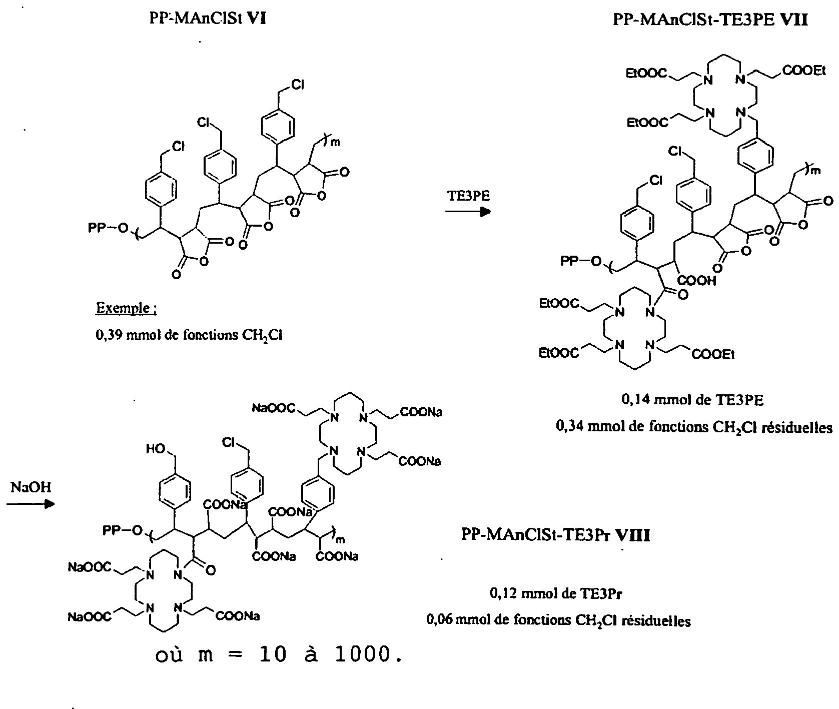

Une suspension de 0,40 g du matériau PP-MAnClSt **VI** et 2,8 g (20,3 mmol) de carbonate de potassium dans une solution de 7,2 g (14,4 mmol) de triester **11** (TE3PE) dans 350 mL d'acétonitrile, est chauffée à 50°C pendant 60 heures. Les fibres sont lavées par un mélange eau : éthanol jusqu'à retour à la neutralité des eaux de lavage, puis à l'éthanol, au toluène et enfin à l'éther. Après séchage sous vide, le matériau PP-MAnClSt-TE3PE **VII** est obtenu sous la forme d'un non-tissé (0,46 g).
*Spectroscopie IR (KBr, cm⁻¹) :*
3430 ; 2957 ; 2921 ; 2837 ; 1855 ; 1.781 ; **1733** υ **(C=O)ₑₛₜₑᵣ ; 1631** υ **(C=O)_{amide} ;** 1456 1377 ; 1256 ; 1167 ; 1100 ; 997 ; 972 ; 840 ; 808 ; 710.
*Analyse élémentaire :*
N : 1,74% soit 0,31 mmol/g de TE3PE
Cl : 2,59% soit 0,73 mmol/g de fonctions chlorométhyle résiduelles.

### 7H : PP-MAn-ClSt-TE3Pr VIII

Une solution de soude 0,5 M est préparée dans le mélange eau : éthanol, dans le rapport volumique 1:1. A 80 mL de cette solution est ajouté le matériau PP-MAnClSt-TE3PE **VII** (0,42 g). Le milieu réactionnel est agité vigoureusement à température ambiante pendant 18 heures puis à 40°C pendant 16 heures. Les fibres sont lavées par un mélange eau : éthanol jusqu'à retour à la neutralité des eaux de lavage, puis à l'éthanol, au toluène et enfin à l'éther. Après séchage sous vide, le matériau PP-MAnClSt-TE3Pr **VIII** est obtenu sous la forme d'un non-tissé (0,41 g).
*Spectroscopie IR (KBr, cm⁻¹) :*
3427 ; 2958 ; 2922 ; 2837 ; 1717 ; **1582** υ**ₐₛ (C=O) ;** 1456 ; **1407** υ**ₛ (C=O) ;** 1377 ; 1261 ; 1166 ; 1093 ; 997 ; 972 ; 841 ; 807 ; 709.
*Analyse élémentaire :*
N : 1,51% soit 0,27 mmol/g de TE3Pr
Cl : 0,46% soit 0,13 mmol/g de fonctions chlorométhyle résiduelles.

### EXEMPLE 8 : Propriétés extractives des matériaux

Dans cet exemple, on étudie les propriétés d'extraction des matériaux selon l'invention vis-à-vis de l'uranyle, du plutonium et du cadmium.

On compare également la capacité de piégeage des radioéléments des matériaux selon l'invention avec un matériau de référence qui est un matériau dans lequel un ligand TE3Pr est greffé sur de la silice, ce matériau est le matériau dénommé Si2323Pr (« voie 1 ») préparé dans le document [8] (WO-A-01/15806). On pourra se reporter notamment aux pages 22 à 24 de ce document.

Il sera montré dans ce qui suit que la capacité de piégeage des radioéléments par certains des matériaux élaborés selon l'invention est supérieure à celle du matériau de référence sur support silice.

Les propriétés extractantes des matériaux sont évaluées par la détermination de la quantité de métal fixé à l'équilibre par gramme de matériau. Cette valeur, déterminée pour chaque matériau dans des conditions rigoureusement identiques, est nommée qₑ et est exprimée en mmol/g. Le dispositif expérimental employé pour déterminer les valeurs qₑ est décrit sur la figure 6.

On sait que, expérimentalement, le principe des études d'extraction solide-liquide consiste à mettre en contact un matériau séquestrant avec une solution de concentration en métal connue c₀, dans des conditions bien déterminées, pendant une période permettant d'atteindre l'équilibre.

Afin de favoriser le contact entre la solution et le solide, le dispositif expérimental particulier comprend un récipient (1) contenant la solution (2), muni par exemple d'une agitation magnétique (3) ; une pompe péristaltique (4) pour mettre la solution en circulation (5) dans des canalisations (6) ; un serpentin (7) thermostaté par exemple à 50°C, et un porte-filtre (8) dans lequel se trouve placé le matériau. La solution métallique circule ainsi en boucle par exemple pendant 18 heures pour garantir l'obtention de l'équilibre.

### Exemple 8A : Extraction de l'uranyle et du plutonium

Sont données dans le Tableau 6 pour l'extraction de l'uranyle et dans le Tableau 7 pour l'extraction du plutonium, les quantités de métal piégé par le solide qₑ pour les différents matériaux fibreux élaborés mais également pour le matériau de référence à base de silice, utilisé dans le pilote semi-industriel^{[153]}, et dénommé « silice (voie 1) ».

**Tableau 6 : Capacités d'extraction de l'uranyle pour différents matériaux (conditions opératoires : [UO₂²⁺]₀ = 3,03 mmol/L; Tampon acide acétique/acétate 0,1 N de pH = 4,5 ;T = 50 °C, incertitudes : ± 0,04). Le taux d'occupation des sites macrocycliques est déterminé en supposant la formation de complexes de stoechiométrie ligand : métal 1 : 1.**

| Ligand | Matériau | Teneur en ligand (mmol/g) | qₑ (mmol/g) | Taux d'occupation des sites (%) |
|---|---|---|---|---|
| - | PP | 0 | 0 | - |
| | PP - MAnClSt | 0 | <0,01 | <1 |
| TE3A | PP - ClSt | 0,76 | 0,2 | 26 |
| | PP - ClSt | 0,82 | 0,27 | 33 |
| | PP - MAnClSt | 0,26 | 0.02 | 8 |
| TE3Pr | PP - ClSt | 0,83 | 0,33 | 40 |
| | PP - ClSt | 0.80 | 0,36 | 45 |
| | PP - MAnClSt | 0,17 | 0,03 | 18 |
| | Silice (voie 1) | 0.35 | 0,21 | - |

**Tableau 7 : Capacités d'extraction du plutonium pour différents matériaux (conditions opératoires : [Pu⁴⁺]₀ = 3,54 mmol/L; Tampon acide acétique/acétate 0,1 N de pH = 4,7 ; T = 50 °C, incertitudes : ± 0,03). Le taux d'occupation des sites macrocycliques a été déterminé en supposant la formation de complexes de stoechiométrie ligand : métal 1 : 1.**

| Ligand | Matériau | Teneur en ligand (mmol/g) | qₑ (mmol/g) | Taux d'occupation des sites (%) |
|---|---|---|---|---|
| | PP - ClSt | 0,37 | 0,28 | 76 |
| TE3A | PP - ClSt | 0,54 | 0,38 | 71 |
| | PP - MAnCISt | 0,60 | 0,20 | 33 |
| TE3Pr | PP - ClSt | 0,50 | 0,30 | 60 |
| | PP - ClSt | 0,80 | 0,46 | 58 |
| | PP - MAnCISt | 0,27 | 0,07 | 26 |
| | Silice (voie 1) | 0,35 | 0,08 | - |

Les tableaux 6 et 7 ci-dessus montrent que le polypropylène non greffé n'a aucune capacité de fixation de l'uranyle ni du plutonium (et plus généralement de tout élément métallique dissous), ce qui signifie que le piégeage de ces éléments est donc assurée uniquement par la complexation par les ligands macrocycliques.

La neutralité du support polypropylène dans le piégeage constitue une garantie que la sélectivité des molécules macrocycliques tétraazotées pour la séquestration des métaux ciblés est bien conservée. Par comparaison, il est connu que la silice non modifiée présente déjà un fort pouvoir adsorbant de la silice vis-à-vis de l'uranyle^{[54]} et une certaine capacité à fixer le plutonium^{[55]}.

Les matériaux élaborés à partir du bras espaceur chlorométhylstyrène, i.e les matériaux nommés PP-ClSt, présentent une capacité de fixation des radioéléments supérieure à celle du matériau de référence. Les meilleures performances de ces fibres organiques modifiées sont attribuées à une teneur en ligand supérieure et à une fonctionnalisation des macrocycles par trois bras coordinants. Globalement, les matériaux élaborés à partir du second bras espaceur, c'est-à-dire, les matériaux PP-MAnClSt, sont moins efficaces pour fixer ces deux radioéléments.

Le ligand TE3A possédant les bras les plus courts (acétate) présente une meilleure efficacité pour le piégeage de l'ion sphérique plutonium tandis que les bras propionate du ligand TE3Pr sont davantage adaptés à la complexation du « bâtonnet » d'uranyle.

Les matériaux selon l'invention possèdent la capacité de piéger sélectivement l'uranyle en présence compétitive d'ions calcium, potassium et sodium, qui sont les trois métaux cationiques majoritaires d'un effluent réel.

Dans un mélange équimolaire de chaque ion, seul l'uranyle est fixé sur le matériau et la quantité de radioélément piégée n'est pas diminuée par la présence des autres cations (Tableau 8).

**Tableau 8 : Capacités d'extraction de l'uranyle en présence d'ions sodium, potassium et calcium (conditions opératoires : [UO₂²⁺]₀ = 3,03 mmol/L ; [Na⁺]₀ = 3,33 mmol/L ; [K⁺]₀ = 3,13 mmol/L ; [Ca²⁺]₀ = 2,83 mmol/L, Tampon acide acétique/acétate 0,1 N de pH 4,7; T = 50 °C, incertitudes : ±0,04).**

| | | | | qₑ (mmol/g) | | |
|---|---|---|---|---|---|---|
| Ligand | Matériau | Teneur en ligand (mmol/g) | UO₂²⁺ | C²⁺ | K⁺ | Na⁺ |
| TE3A | PP - ClSt | 0,82 | 0,27 | - | - | - |
| | PP - ClSt | 0,82 | 0,25 | <0,0006 | <0,02 | <0,02 |
| TE3P | PP - ClSt | 0,80 | 0,36 | - | - | - |
| | PP - ClSt | 0,80 | 0,37 | <0,0006 | <0,02 | <0,02 |

### Exemple 8B : Extraction du cadmium

Les fibres de polypropylène modifiées par des ligands macrocycliques tétraazotés présentent des capacités réelles pour extraire l'élément cadmium. Celles-ci sont évaluées par la quantité de métal qₑ fixée sur le matériau à l'équilibre (Tableau 9).

**Tableau 9 : Capacités d'extraction du cadmium pour des matériaux PP-CISt-TE3A et PP-CISt-TE3Pr (conditions opératoires : T = 50 °C).**

| | Tampon pH = 4,4; [Cd]₀²⁺ = 2,97 mmoUL Tampon pH = 4,4 ; [Cd]₀²⁺ = 1,13 mmol/L Tampon pH = 6,6 ; [Cd]₀²⁺ = 1,13 mmol/L | | | | | | | | |
|---|---|---|---|---|---|---|---|---|---|
| | Teneur en ligand (mmol/g) | qₑ (mmol/g) | taux d'occupation des sites (%) | Teneur en ligand (mmol/g) | qₑ (mmol/g) | taux d'occupation des sites (%) | Teneur en ligand (mmol/g) | qₑ (mmol/g) | taux d'occupation des sites (%) |
| PP-ClSt-TE3A | 0,82 | 0,43 | 53 | 0,36 | 0,05 | 14 | 0,36 | 0,09 | 25 |
| PP-ClSt- TE3Pr | 0,80 | 0,04 | 5 | 0,50 | <0,01 | - | 0,50 | 0,06 | 12 |

Les expériences comparatives entre les deux fibres greffées montrent une fixation du cadmium très largement supérieure lorsque le ligand porteur de fonctions acétate TE3A est immobilisé.

### BIBLIOGRAPHIE

[1] J. S. Bradshaw, K. E. Krakowiak, B. J. Tarbet, R. L. Bruening, L. D. Griffin, D. E. Cash, T. D. Rasmussen, R. M. Izatta, Solvent Extraction Ion Exchange, 1989, 7 855-864.
[2] R. M. Izatt, Journal of Inclusion Phenomena and Molecular Recognition in Chemistry, 1997, 29, 197-220.
[3] R. L. Bruening, K. E. Krakowiak, Brevet US 6,232,265 B1 (11/06/1999).
[4] R. Guilard, F. Denat, O. Pernelet, R. Tripier, H. Ledon, C. Devos, Brevet FR 99/01499 (09/02/1999).
[5] R. Guilard, B. Roux-Fouillet, G. Lagrange, M. Meyer, A. T. Bucaille, Brevet WO 01/46202 (12/12/2000).
[6] R. Guilard, H. Chollet, P. Guiberteau, P. Cocolios, Brevet WO 96/11056 (04/10/1995).
[7] R. Guilard, H. Chollet, P. Guiberteau, M. Guerin, Brevet WO 96/11478 (04/10/1995).
[8] H. Chollet, J.-L. Babouhot, F. Barbette, R. Guilard, Brevet WO 01/15806 (25/08/2000).
[9] D. Woehrle, V. Nicolaus, Polymer Bulletin, 1986, 15, 185-192.
[10] V. Louvet, P. Appriou, H. Handel, Tetrahedron Letters, 1982, 23, 2445-2448.
[11] W. Szczepaniak, K. Kuczynski, Reactive Polymers, 1985,1101-106.
[12] C. Kavakli, N. Ozvatan, S. A. Tuncel, B. Salih, Analytica Chimica Acta, 2002, 464, 313-322.
[13] H. Handel, H. Chaumeil, Brevet EP 0 287 436 (07/04/1988).
[14] S. Amigoni-Gerbier, C. Larpent, Macromolecules, 1999, 32 9071-9073.
[15] B. Altava, M. I. Burguete, J. C. Frias, E. Garcia-Espana, S. V. Luis, J. F. Miravet, Industrial & Engineering Chemistry Research, 2000, 39, 3589-3595.
[16] S.-H. Choi, Y. C. Nho, Journal of Macromolecular Science, Pure and Applied Chemistry, 2000, A37, 1053-1068.
[17] N. Kabay, A. Katakai, T. Sugo, H. Egawa, Journal of Applied Polymer Science, 1993, 49 599-607.
[18] A. M. Dessouki, M. El-Tahawy, H. El-Boohy, S. A. El-Mongy, S. M. Badawy, Radiation. Physics and Chemistry, 1999, 54 627-635.
[19] R. Saliba, H. Gauthier, R. Gauthier, M. Petit-Ramel, Journal of Applied Polymer Science, 2000, 75, 1624-1631.
[20] H. J. Fischer, K. H. Lieser, Angewandte Makromolekulare Chemie, 1993, 208, 133-150.
[21] N. Nambu, O. Ito, N. Mihara, T. Doi, Brevet WO 00/04931 (20/07/1998).
[22] N. Nambu, O. Ito, T. Doi, Brevet JP 01/123381.
[23] N. Bicak, D. C. Sherrington, B. F. Senkal, Reactive & Functional Polymers, 1999, 41, 69-76.
[24] X. Chang, Y. Li, G. Zhan, X. Luo, W. Gao, Talanta, 1996, 43, 407-413.
[25] B. Gong, Talanta, 2002, 57 89-95.
[26] X. Chang, Q. Su, D. Liang, X. Wei, B. Wang, Talanta, 2002, 57, 253-261.
[27] S.-H. Choi, Y. C. Nho, Journal of Applied Polymer Science, 1999, 71, 999-1006.
[28] R. L. Bruening, K. E. Krakowiak, A. J. Dileo, T. Jiang, Brevet US 6,479,159 B1 (19/04/2001).
[29] P. Le Thuaut, B. Martel, G. Crini, U. Maschke, X. Coqueret, M. Morcellet, Journal of Applied Polymer Science, 2000, 77, 2118-2125.
[30] B. Martel. P. Le Thuaut, G. Crini, M. Morcellet, A.-M. Naggi, U. Maschke, S. Bertini. C. Vecchi, X. Coqueret, G. Torri, Journal of Applied Polymer Science, 2000, 78, 2166-2173.
[31] E. Buyuktuncel, S. Bektas, O. Gene, A. Denizli, Reactive & Functional Polymers, 2001, 47, 1-10.
[32] D. L. Cho, C. N. Choi, H. J. Kim, A. K. Kim, J.-H. Go, Journal of Applied Polymer Science, 2001, 82, 839-846.
[33] S. Degni, C.-E. Wilen, R. Leino, Organic Letters, 2001, 3, 2551-2554.
[34] L. C. Lopcrgolo, L. H. Catalani, L. D. B. Machado, P. R. Rela, A. B. Lugao, Radiation Physics and Chemistry, 2000, 57, 451-454.
[35] Y. Lu, Z. Zhang, H. Zeng, Journal of Applied Polymer Science, 1994, 53, 405-410.
[36] D. Chen, N. Shi, D. Xu, Journal of Applied Polymer Science, 1999, 73, 1357-1362.
[37] S. H. Choi, H. J. Kang, E. N. Ryu, K. P. Lee, Radiation Physics and Chemistry, 2001, 60, 495-502.
[38] Z. Xu, J. Wang, L. Shen, D. Men, Y. Xu, Journal of Membrane Science, 2002, 196, 221-229.
[39] I. Kaur, S. Kumar, B. N. Misra, Polymers & Polymer Composites, 1995, 3 375-383.
[40] S. Tan, G. Li, J. Shen, Journal of Applied Polymer Science, 2000, 77, 1861-1868.
[41] S. S. Ivanchev, M. Ratzsch, A. M. Mesh, S. Y. Khaikin, H. Bucka, A. Hesse, Vysokomolekulyarnye Soedineniya, Seriya A i Seriya B, 2001, 43 793-798.
[42] E. Tsuchida, T. Tomono, Makromolekulare Chemie, 1971, 141, 265-298.
[43] G. S. Chauhan, L. K. Guleria, B. N. Misra, I. Kaur, Journal of Polymer Science, Part A: Polymer Chemistry, 1999, 37, 1763-1769. [44] H. A. A. El-Rehim, E. A. Hegazy, A. E.-H. Ali, Reactive & Functional Polymers, 2000, 43, 105-116. [45] D. C. Clark, W. E. Baker, R. A. Whitney, Journal of Applied Polymer Science, 2000, 79, 96-107.
[46] D. Jia, Y. Luo, Y. Li, H. Lu, W. Fu, W. L. Cheung, Journal of Applied Polymer Science, 2000, 78, 2482-2487.
[47] P. Citovicky, V. Chrastova, M. Foldesova, European Polymer Journal, 1996, 32, 153-158.
[48] L. J. Andrews, R. M. Keefer, Journal of the American Chemical Society, 1953, 75, 3776-3779.
[49] Z. M. Rzaev, L. V. Bryksina, S. I. Sadykh-Zade, Journal of Polymer Science, 1973, 42, 519-529.
[50] S. Iwatsuki, Y. Yamashita, Makromol. Chem., 1965, 89 205-213.
[51] R. Guilard, I. Meunier, C. Jean, B. Boisselier-Cocolios, Brevet EP 0 427 595 (31/10/1990).
[52] P. Cocolios, R. Guilard, C. Gros, Brevet WO 96/11189 (05/10/1995).
[53] F. Barbette, Thèse de l'Université de Bourgogne, 1999.
[54] J. D. Prikryl, A. Jain, D. R. Turner, R. T. Pabalan, Journal of Contaminant Hydrology, 2001, 47, 241-253.
[55] H. Chollet, Thèse de l'Université de Bourgogne, 1994.
[56] Y. C. Nho, J. Chen, J. H. Jin, Radiation Physics and Chemistry, 1999, 54, 317-322.
[57] A. C. Patel, R. B. Brahmbhatt, P. V. C. Rao, K. V. Rao, S. Devi, European Polymer Journal, 2000, 36, 2477-2484.
[58] I. Kaur, S. Kumar, B. N. Misra, G. S. Chauhan, Materials Science & Engineering, A: Structural Materials: Properties, Microstructure and Processing, 1999, A270, 137-144.

## Revendications

1. Matériau comprenant un polyazacycloalcane greffé sur des fibres de polypropylène.

2. Matériau selon la revendication 1, qui est susceptible d'être préparé par polymérisation radicalaire d'un monomère de polyazacycloalcane porteur d'un groupement polymérisable radicalairement, en présence de fibres de polypropylène porteuses de fonctions peroxyde et/ou hydroperoxyde, éventuellement suivie d'une fonctionnalisation des éventuelles fonctions amine libres du polyazacycloalcane et/ou d'une saponification, hydrolyse, des fonctions esters éventuellement portées par le polyazacycloalcane.

3. Matériau selon la revendication 1 qui est susceptible d'être préparé par les étapes successives suivantes :
a) - on effectue la polymérisation radicalaire, en présence de fibres de polypropylène porteuses de fonctions peroxyde et/ou hydroperoxyde, d'un ou plusieurs monomères polymérisables radicalairement, au moins l'un desdits monomères comprenant au moins une fonction capable de réagir avec une fonction amine libre d'un polyazacycloalcane ; moyennant quoi l'on obtient un polymère comprenant lesdites fonctions capables de réagir avec une fonction amine libre d'un polyazacycloalcane, greffé sur le polypropylène ;
b) - on fait réagir ledit polymère avec un polyazacycloalcane ;
c) éventuellement on effectue une fonctionnalisation de la ou des fonctions amines libres, éventuellement encore présentes, du polyazacycloalcane ;
d) éventuellement on effectue une saponification, hydrolyse, des fonctions esters éventuellement portées par le polyazacycloalcane.

4. Matériau selon la revendication 2, dans lequel ledit monomère de polyazacycloalcane répond à l'une des trois formules (I), (II), (III) suivantes : 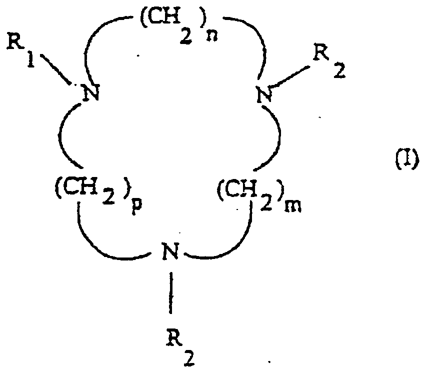 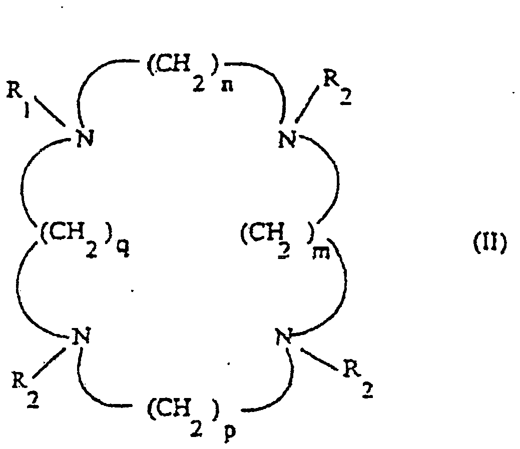 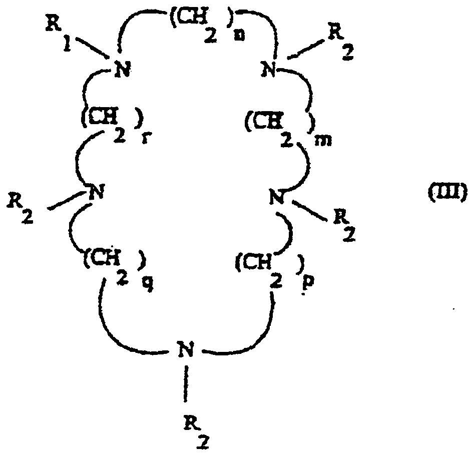 dans lesquelles n, m , p, q, r qui peuvent être identiques ou différents sont égaux à 2 ou 3 ; R₁ est un groupement polymérisable radicalairement, R₂ représente un atome d'hydrogène ou un groupe (CH₂)₂-R₃, R₃ étant un groupement choisi dans le groupe constitué par CONH₂, CH₂OH CN et COOR₄, R₄ représentant H, un cation tel que Na, ou un groupe alkyle de 1 à 10C ou benzyle ; ou R₂ représente le groupe -(CH₂) -R₅, R₅ représentant COOR₆ ou PO₃R₆, R₆ représentant un groupe alkyle de 1 à 10C, un atome d'hydrogène ou un cation tel que Na.

5. Matériau selon la revendication 2 ou 4, dans lequel ledit groupement polymérisable radicalairement est choisi parmi les groupements comprenant un groupe vinylique, styrénique, ou acrylique, de préférence ledit groupement polymérisable radicalairement est choisi parmi les groupements acrylonitrile, acrylate, acide acrylique, vinyl pyridine, vinylalcoxysilane et 4-vinylbenzyle.

6. Matériau selon l'une quelconque des revendications 2 et 4 à 5, dans lequel ledit monomère de polyazacycloalcane est choisi parmi le N-(4-vinylbenzyl) -cyclame et le N, N' , N" -tris (2-éthoxycarbonyléthyl)-N"'-(4-vinylbenzyl)-cyclame.

7. Matériau selon l'une quelconque des revendications 2 et 4 à 5, qui répond à la formule (IV) suivante : 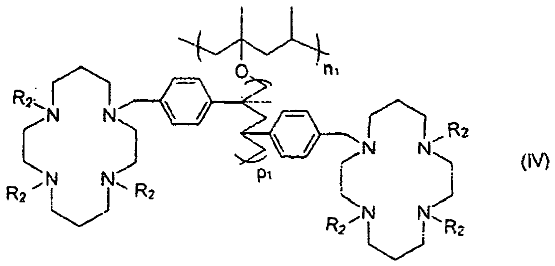 dans laquelle :
- R₂ a la signification déjà donnée dans la revendication 4 et représente de préférence H ou CH₂CH₂COOEt ou CH₂CH₂COOH ou CH₂CH₂COONa ou CH₂COOEt ou CH₂COOH ou CH₂COONa ;
- n₁ est un nombre entier de 100 à 3000 ;
- p₁ est un nombre entier de 10 à 1000.

8. Matériau selon la revendication 3, dans lequel la fonction susceptible de réagir avec la fonction amine du polyazacycloalcane est choisie parmi les carbones électrophiles, par exemple les carbones porteurs de fonctions halogénure, OTs, OTf... ou les dérivés d'acide carboxyliques par exemple les halogénures d'acyle, les anhydrides, les esters...

9. Matériau selon la revendication 3 ou 8, dans lequel lesdits monomères sont choisis parmi les monomères vinyliques, styréniques et acryliques, tels que le chlorométhylstyrène et l'anhydride maléique.

10. Matériau selon la revendication 9, dans lequel à l'issue de la première étape, on obtient un homopolymère de chlorométhylstyrène greffé sur les fibres de polypropylène, ou un copolymère alterné de chlorométhylstyrène et d'anhydride maléique : poly (anhydride maléique-alt-chlorométhylstyrène) greffé sur les fibres de polypropylène.

11. Matériau selon l'une quelconque des revendications 3 et 8 à 10, dans lequel ledit polyazacycloalcane est choisi parmi les polyazacycloalcanes correspondant à l'une des trois formules (V), (VI), (VII) suivantes : 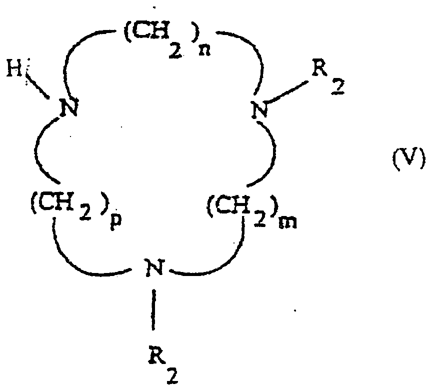 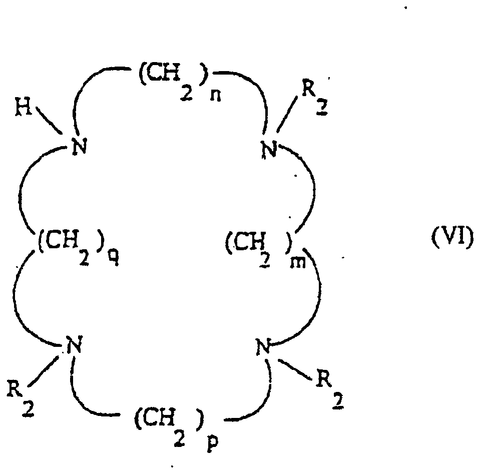 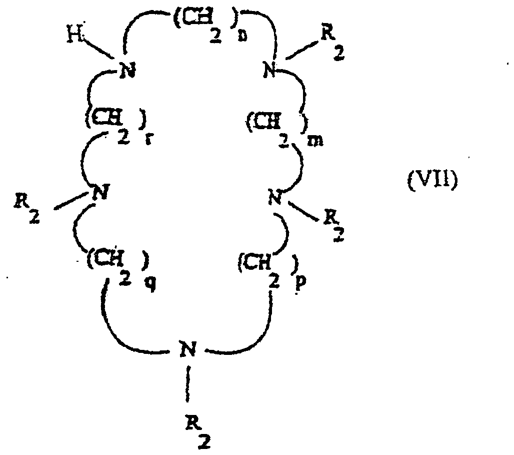 dans lesquelles n, m , p, q, r qui peuvent être identiques ou différents sont égaux à 2 ou 3 ; R₂ représente un atome d'hydrogène ou un groupe (CH₂)₂-R₃, R₃ étant un groupement choisi dans le groupe constitué par CONH₂, CH₂OH, CN et COOR₄, R₄ représentant H, un cation tel que Na, ou un groupe alkyle de 1 à 10C ou benzyle ; ou R₂ représente le groupe -(CH₂)-R₅, R₅ représentant COOR₆ ou PO₃R₆, R₆ représentant un groupe alkyle de 1 à 10C, un atome d'hydrogène ou un cation tel que Na ; de préférence ledit polyazacycloalcane est choisi parmi les composés suivants :

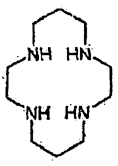

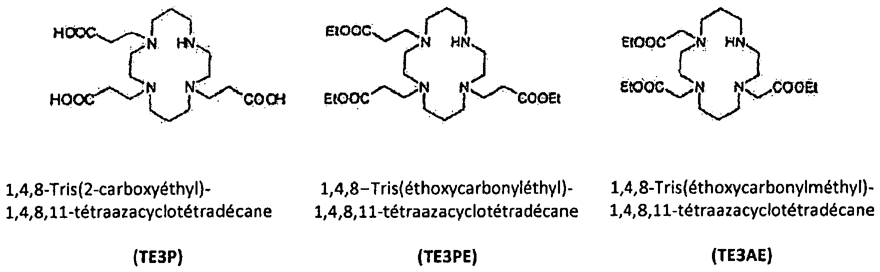

12. Matériau selon l'une quelconque des revendications 3 et 8 à 11, qui répond à la formule (VIII) ou (IX) suivante : 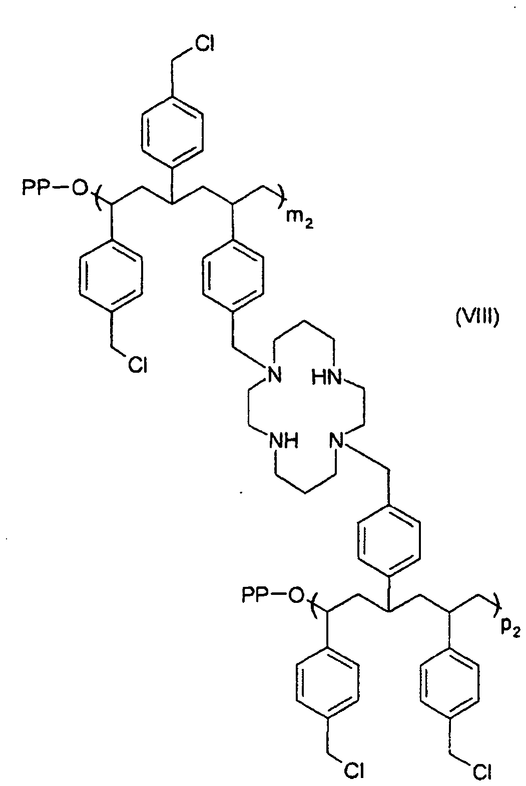 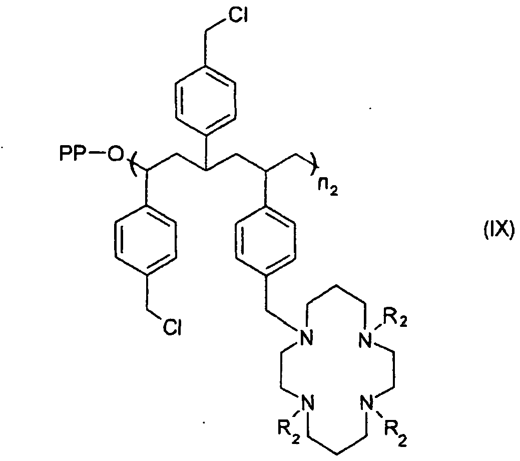 où :
- R₂ a la signification déjà donnée dans la revendication 4 ;
- m₂ est un nombre entier de 10 à 1000 ;
- n₂ est un nombre entier de 10 à 1000 ;
- p₂ est un nombre entier de 10 à 1000 ; de préférence dans les formules (VIII) et (IX) :
- R₂ représente (CH₂)₂ COONa, -CH₂ COOEt, -(CH₂)₂-COOEt, -(CH₂)₂-COOH, -CH₂-COOH, ou -CH₂-COONa.

13. Matériau selon l'une quelconque des revendications précédentes, dans lequel l'étape de fonctionnalisation éventuelle de la ou des fonctions amine libres du polyazacycloalcane est réalisée en faisant réagir la ou lesdites fonctions amine libres, avec un composé comprenant au moins une fonction capable de réagir avec une fonction amine libre d'un polyazacycloalcane et une autre fonction choisie parmi les groupes R₃ et R₅ tels que définis dans la revendication 4 ; de préférence ledit composé comprenant au moins une fonction capable de réagir avec une fonction amine libre d'un polyazacycloalcane et une autre fonction choisie parmi les groupes R₃ et R₅ est choisi parmi le bromoacétate d'éthyle et l'acrylate d'éthyle.

14. Matériau selon l'une quelconque des revendications précédentes, dans lequel la saponification hydrolyse, des fonctions esters est réalisée dans des conditions telles qu'elles permettent une hydrolyse complète des fonctions esters, par exemple à 40°C pendant 18 heures avec de la soude 0,5 N.

15. Matériau selon l'une quelconque des revendications précédents, dans lequel les fibres de polypropylene sont sous la forme d'un non-tissé.

16. Matériau selon l'une quelconque des revendications précédentes dans lequel les fibres de polypropylène porteuses de fonctions peroxyde et/ou hydroperoxyde sont préparées par irradiation électronique de fibres de polypropylène sous une atmosphère oxydante, par exemple d'air ou d'oxygène.

17. Procédé de préparation d'un matériau constitué par un polyazacycloalcane greffé sur des fibres de polypropylène, dans lequel on réalise la polymérisation radicalaire d'un monomère de polyazacycloalcane porteur d'un groupement polymérisable radicalairement, en présence de fibres de polypropylène porteuses de fonctions peroxydes et/ou hydroperoxyde, éventuellement suivie d'une fonctionnalisation des éventuelles fonctions amine libres du polyazacycloalcane et/ou d'une saponification, hydrolyse, des fonctions esters éventuellement portées par le polyazacycloalcane.

18. Procédé selon la revendication 17, dans lequel ledit monomère de polyazacycloalcane répond à l'une des trois formules (I), (II), (III) suivante 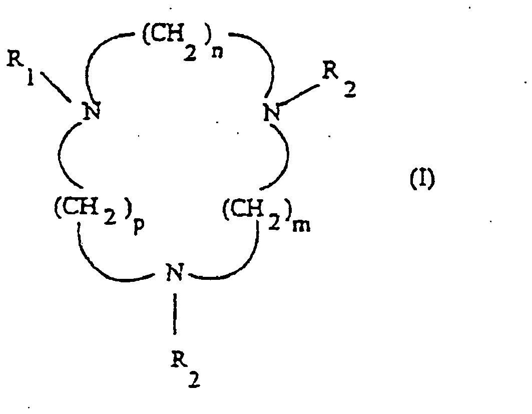 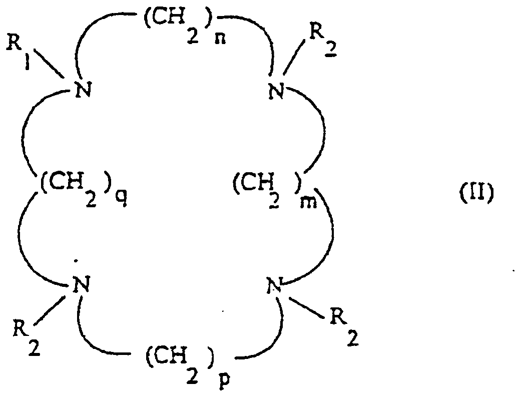 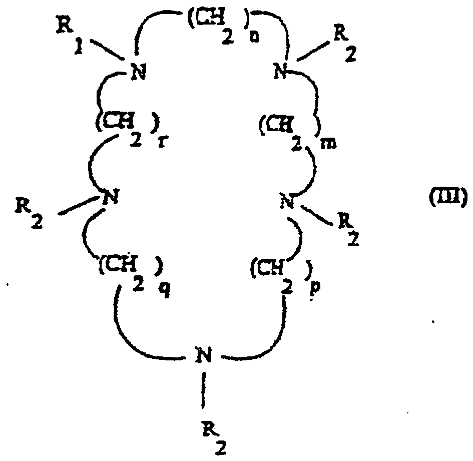 dans lesquelles n, m , p, q, r qui peuvent être identiques ou différents sont égaux à 2 ou 3, R₁ est un groupement polymérisable radicalairement ; R₂ représente un atome d'hydrogène ou un groupe (CH₂)₂-R₃, R₃ étant un groupement choisi dans le groupe constitué par CONH₂, CH₂OH, CN et COOR₄, R₄ représentant H, un cation tel que Na, ou un groupe alkyle de 1 à 10C ou benzyle, ou R₂ représente le groupe - (CH₂)-R₅, R₅ représentant COOR₆ ou PO₃R₆, R₆ représentant un groupe alkyle de 1 à 10C, un atome d'hydrogène ou un cation tel que Na.

19. Procédé selon la revendication 17 ou 18, dans lequel ledit groupement polymérisable radicalairement est choisi parmi les groupements comprenant un groupe vinylique, styrénique, acrylique, tels que les groupements acrylonitrile, acrylate, acide acrylique, vinyl pyridine, vinylalcoxysilane et 4-vinylbenzyle.

20. Procédé selon l'une quelconque des revendications 17 à 19, dans lequel ledit monomère de polyazacycloalcane est choisi parmi le N-(4-vinylbenzyl)-cyclame et le N,N',N"-tris(2-éthoxycarbonyléthyl)-N"'-(4-vinylbenzyl)-cyclame.

21. Procédé selon l'une quelconque des revendications 17 à 20, dans lequel la polymérisation est réalisée à une température de 80 °C à 120 °C, par exemple de 105 °C, dans un solvant choisi parmi le DMF, le toluène, l'acétonitrile, et pendant une durée de 2 à 24 heures, par exemple de 13 heures.

22. Procédé de préparation d'un matériau constitué par un polyazacycloalcane greffé sur des fibres de polypropylène, ledit procédé comprenant les étapes successives suivante :
a) - on effectue la polymérisation radicalaire en présence de fibres de polypropylène porteuses de fonctions peroxyde et/ou hydroperoxyde d'un ou plusieurs monomères polymérisables radicalairement, au moins l'un desdits monomères comprenant au moins une fonction capable de réagir avec une fonction amine libre d'un polyazacycloalcane choisie de préférence parmi les carbones électrophiles, par exemple les carbones porteurs de fonctions halogénure, OTs, OTf... ou les dérivés d'acide carboxyliques par exemple les halogénures d'acyle, les anhydrides, les esters... ; moyennant quoi, l'on obtient un polymère comprenant lesdites fonctions capables de réagir avec une fonction amine libre d'un polyazacycloalcane, greffé sur le polypropylène ;
b) - on fait réagir ledit polymère avec un polyazacycloalcane ;
c) éventuellement on effectue une fonctionnalisation de la ou des fonctions amines libres éventuellement encore présentes, du polyazacycloalcane ;
d) éventuellement on effectue une saponification, hydrolyse, des fonctions esters éventuellement portées par le polyazacycloalcane.

23. Procédé selon la revendication 22, dans lequel les monomères sont choisis parmi les monomères vinyliques, styréniques et acryliques, tels que le chlorométhylstyrène et l'anhydride maléique.

24. Procédé selon la revendication 23, dans lequel lors de l'étape a), on effectue la polymérisation radicalaire du seul chlorométhylstyrène.

25. Procédé selon la revendication 24, dans lequel la polymérisation de l'étape a) est réalisée dans un solvant choisi parmi le diméthylformamide (DMF), le toluène, l'eau, le mélange eau/méthanol ; à une température de 80 à 120°C ; à une concentration massique de chlorométhylstyrène dans le solvant de 30 à 55% ; et pendant une durée de 2 à 20 heures ; par exemple, la polymérisation de l'étape a) est réalisée dans le solvant DMF pur , à une température de 80 à 115°C, de préférence de 115°C ; à une concentration massique du chlorométhylstyrène dans le DMF de 40% ; et pendant une durée de 10 heures.

26. Procédé selon la revendication 23, dans lequel lors de l'étape a) on effectue la polymérisation radicalaire d'anhydride maléique et de chlorométhylstyrène.

27. Procédé selon la revendication 26, dans lequel la polymérisation est réalisée dans un solvant choisi parmi le toluène et l'acétone ; à une température de 75 à 95°C ; à une concentration massique des monomères dans le solvant de de 10% à 80%, par exemple 30% ; et pendant une durée de 4 à 30 heures.

28. Procédé selon l'une quelconque des revendications 22 à 27, dans lequel ledit polyazacycloalcane est choisi parmi les polyazacycloalcanes répondant à l'une des trois formules (V), (VI), (VII) suivantes : 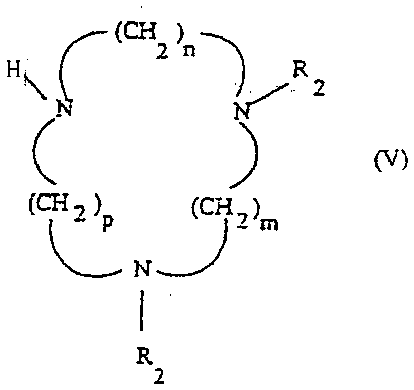 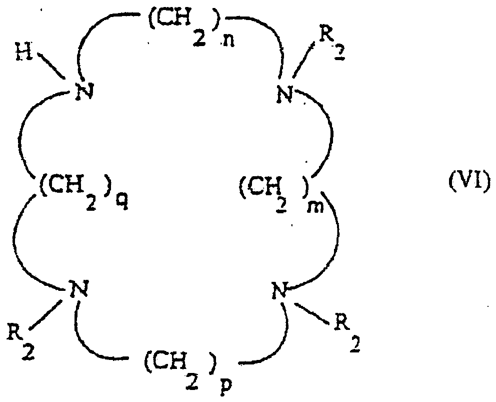 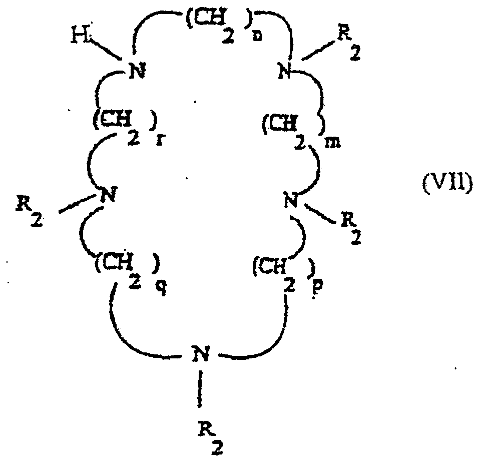 dans lesquelles n, m , p, q, r qui peuvent être identiques ou différents sont égaux à 2 ou 3 ; R₂ représente un atome d'hydrogène ou un groupe (CH₂)₂-R₃, R₃ étant un groupement choisi dans le groupe constitué par CONH₂, CH₂OH, CN et COOR₄, R₄ représentant H, un cation tel que Na, un groupe alkyle de 1 à 10C ou
benzyle ; ou R₂ représente le groupe -(CH₂)-R₅, R₅ représentant COOR₆ ou PO₃R₆, R₆ représentant un groupe alkyle de 1 à 10C, un atome d'hydrogène ou un cation tel que Na ; par exemple ledit polyazacycloalcane est choisi parmi les composés suivants :

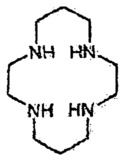

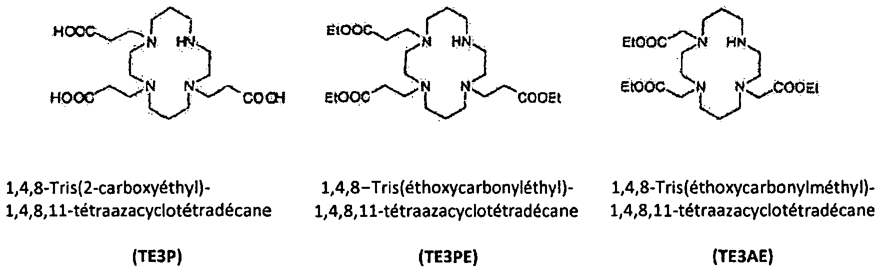

29. Procédé selon l'une quelconque des revendications 17 à 28, dans lequel l'étape de fonctionnalisation éventuelle de la ou des fonctions amine libres du polyazacycloalcane est réalisée en faisant réagir la ou lesdites fonctions amine libres avec un composé ayant au moins une fonction capable de réagir avec une fonction amine libre d'un polyazacycloalcane et une fonction choisie parmi les groupes R₃ et R₅ tels que définis dans la revendication 4, de préférence ledit composé comprenant au moins une fonction capable de réagir avec une fonction amine libre d'un polyazacycloalcane et une autre fonction choisie parmi les groupes R₃ et R₅, est choisi parmi le bromoacétate d'éthyle et l'acrylate d'éthyle.

30. Procédé selon l'une quelconque des revendications 17 à 29, dans lequel la saponification hydrolyse, des fonctions esters est réalisée dans des conditions telles qu'elles permettent une hydrolyse complète des fonctions esters, par exemple à 40°C pendant 18 heures avec de la soude 0,5 N.

31. Procédé selon l'une quelconque des revendications 17 à 30, dans lequel les fibres de polypropylene sont sous la forme d'un non-tissé.

32. Procédé selon l'une quelconque des revendications 17 à 31, dans lequel les fibres de polypropylène porteuses de fonctions peroxyde et/ou hydroperoxyde sont préparées par irradiation électronique de fibres de polypropylène par exemple à une dose de 20 à 60 kGy, de préférence de 40 kGy, sous une atmosphère oxydante par exemple d'air ou d'oxygène.

33. Procédé d'élimination des cations métalliques contenus dans un liquide, dans lequel ledit liquide est mis en contact, avec un matériau selon l'une quelconque des revendications 1 à 16.

34. Procédé selon la revendication 33, dans lequel la mise en contact est réalisée à une température de 20 à 60°C, par exemple 50°C.

35. Procédé selon la revendication 33, réalisé en continu, ledit matériau étant placée dans au moins une colonne traversée par un courant du liquide à traiter.

36. Procédé selon la revendication 33, comprenant, en outre, une étape de régénération dudit matériau, lorsque celui-ci est saturé par les métaux fixés.

37. Procédé selon la revendication 33, dans lequel lesdits cations de métaux sont des cations de métaux choisi parmi les métaux de transition, les métaux lourds, les métaux du groupe IIIA du tableau périodique, les lanthanides, les actinides, et les métaux alcalino-terreux, par exemple lesdits cations métalliques sont choisis parmi les cations U, Pu, Am, Ce, Eu, Al, Gd, Cr, Mn, Fe, Co, Ni, Cu, Zn, Ag, Cd, B, Au, Hg, Pb, As, Ca, Sr, Mg, Be, Ba et Ra.

38. Procédé selon l'une quelconque des revendications 33 à 37, dans lequel le liquide traité est un liquide aqueux, tel qu'un effluent aqueux radioactif de faible activité, comme l'effluent aqueux de faible activité issu de l'évaporateur industriel de l'installation de traitement des effluents d'une installation nucléaire.

## Claims

1. Material comprising a polyazacycloalkane grafted on polypropylene fibres.

2. Material according to Claim 1, which is capable of being prepared by radical polymerisation of a polyazacycloalkane monomer carrying a group which can be polymerised under radical conditions, in the presence of polypropylene fibres carrying peroxide and/or hydroperoxide functional groups, optionally followed by a functionalisation of the optional free amine functional groups of the polyazacycloalkane and/or by saponification or hydrolysis of the ester functional groups optionally carried by the polyazacycloalkane.

3. Material according to Claim 1, which is capable of being prepared by the following successive steps:
a) the radical polymerisation of one or more monomers which can be polymerised under radical conditions is carried out in the presence of polypropylene fibres carrying peroxide and/or hydroperoxide functional groups, at least one of the said monomers comprising at least one functional group capable of reacting with a free amine functional group of a polyazacycloalkane; by means of which a polymer is obtained which comprises said functional groups capable of reacting with a free amine functional group of a polyazacycloalkane, grafted on the polypropylene;
b) said polymer is reacted with a polyazacycloalkane;
c) optionally, the free amine functional group or groups, optionally still present, of the polyazacycloalkane are functionalised;
d) optionally, the ester functional groups optionally carried by the polyazacycloalkane are saponified, hydrolysed.

4. Material according to Claim 2, in which said polyazacycloalkane monomer corresponds to one of the following three formulae (I), (II) and (III): 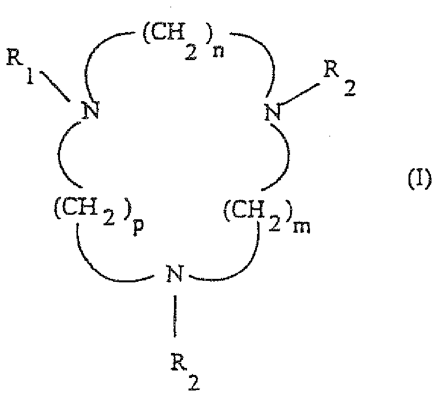 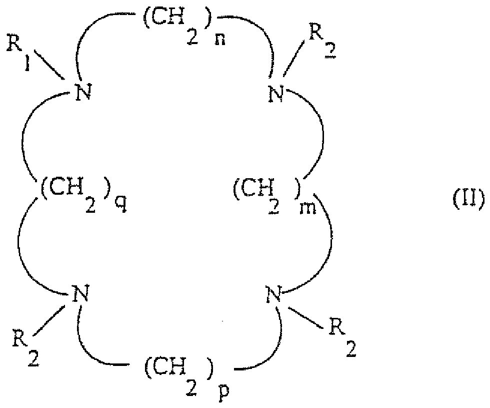 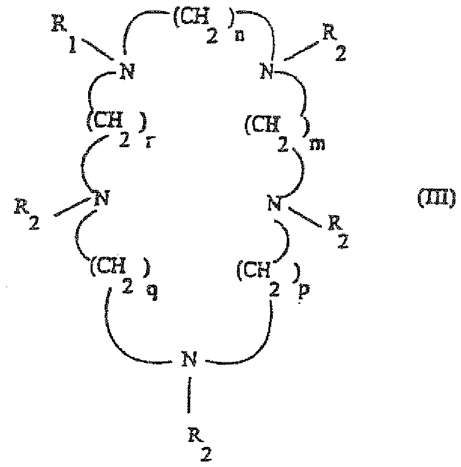 in which n, m, p, q and r, which may be identical or different, are equal to 2 or 3; R₁ is a group which can be polymerised under radical conditions; R₂ represents a hydrogen atom or a (CH₂)₂-R₃ group, R₃ being a group chosen from the group consisting of CONH₂, CH₂OH, CN and COOR₄, R₄ representing H, a cation, such as Na, an alkyl group of 1 to 10 carbon atoms or a benzyl group; or R₂ represents the -(CH₂)-R₅ group, R₅ representing COOR₆ or PO₃R₆, R₆ representing an alkyl group of 1 to 10 carbon atoms, a hydrogen atom or a cation, such as Na.

5. Material according to Claim 2 or 4, in which the said group which can be polymerised under radical conditions is chosen from the groups comprising a vinyl, styrene or acrylic group; preferably said group which can be polymerised under radical conditions is chosen from the acrylonitrile, acrylate, acrylic acid, vinylpyridine, vinylalkoxysilane and 4-vinylbenzyl groups.

6. Material according to any one of Claims 2 and 4 to 5, in which the said polyazacycloalkane monomer is chosen from N-(4-vinylbenzyl)cyclam and N, N', N"-tris(2-ethoxycarbonylethyl)-N"'-(4-vinylbenzyl)cyclam.

7. Material according to any one of Claims 2 and 4 to 5, which corresponds to the following formula (IV) : 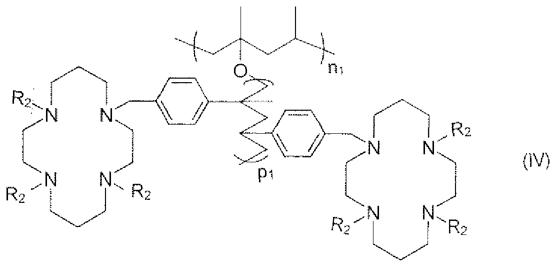 in which:
- R₂ has the meaning already given in Claim 4 and preferably represents H or CH₂CH₂COOEt or CH₂CH₂COOH or CH₂CH₂COONa or CH₂COOEt or CH₂COOH or CH₂COONa;
- n₁ is an integer from 100 to 3000;
- p₁ is an integer from 10 to 1000.

8. Material according to Claim 3, in which the functional group capable of reacting with the amine functional group of the polyazacycloalkane is chosen from electrophilic carbons, for example carbons carrying halide, OTs or OTf functional groups, and the like, or carboxylic acid derivatives, for example acyl halides, anhydrides, esters, and the like.

9. Material according to Claim 3 or 8, in which said monomers are chosen from vinyl, styrene and acrylic monomers, such as chloromethylstyrene and maleic anhydride.

10. Material according to Claim 9, in which, on conclusion of the first step, a chloromethylstyrene homopolymer grafted on polypropylene fibres or an alternating copolymer of chloromethylstyrene and maleic anhydride: poly(maleic anhydride-alt-chloromethylstyrene) grafted on polypropylene fibres, is obtained.

11. Material according to any one of Claims 3 and 8 to 10, in which said polyazacycloalkane is chosen from the polyazacycloalkanes which correspond to one of the three following formulae (V), (VI) and (VII): 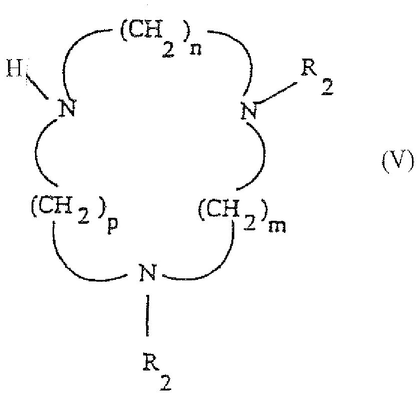 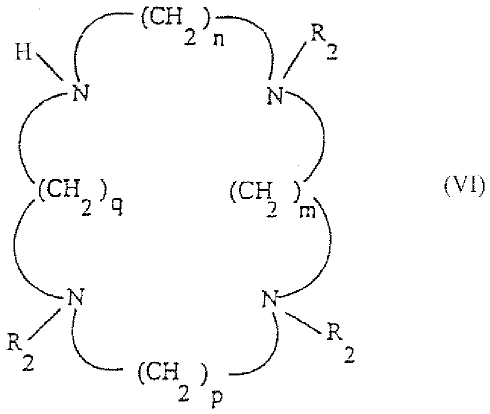 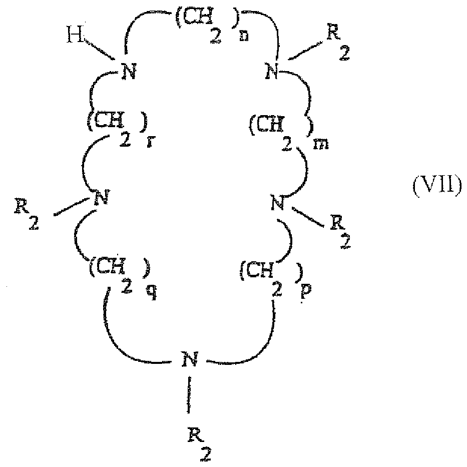 in which n, m, p, q and r, which may be identical or different, are equal to 2 or 3; R₂ represents a hydrogen atom or a (CH₂)₂-R₃ group, R₃ being a group chosen from the group consisting of CONH₂, CH₂OH, CN and COOR₄, R₄ representing H, a cation, such as Na, or an alkyl group of 1 to 10 carbon atoms or a benzyl group; or R₂ represents the -(CH₂)-R₅ group, R₅ representing COOR₆ or PO₃R₆, R₆ representing an alkyl group of 1 to 10 carbon atoms, a hydrogen atom or a cation, such as Na; preferably said polyazacycloalkane is chosen from the following compounds:

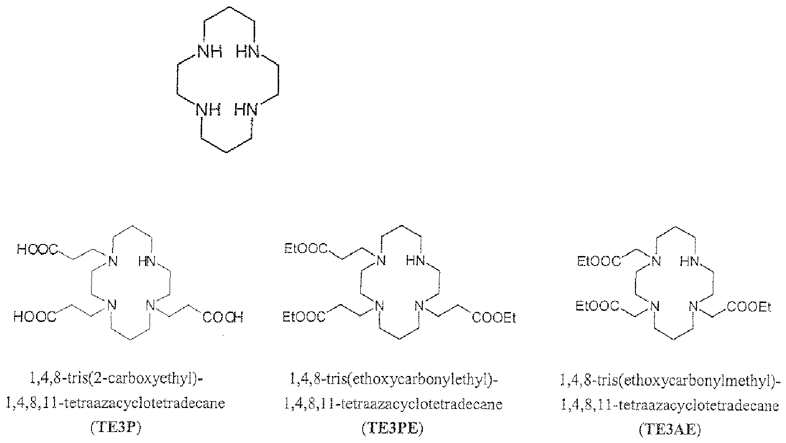

12. Material according to any one of Claims 3 and 8 to 11, which corresponds to the following formula (VIII) or (IX): 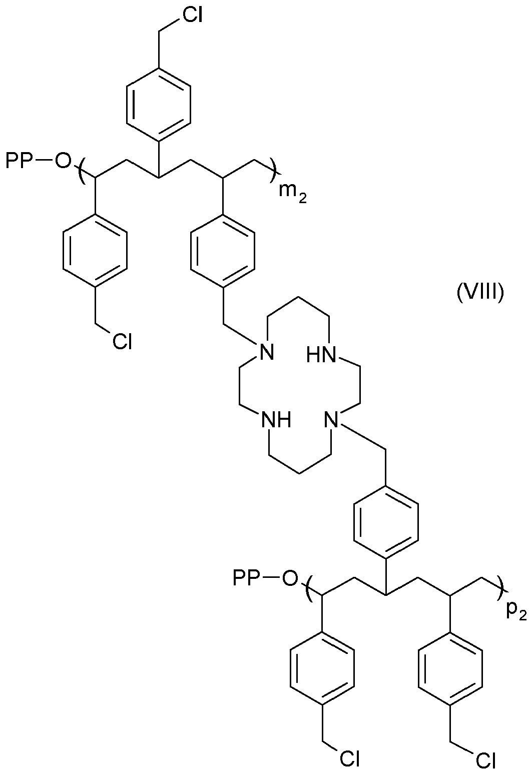 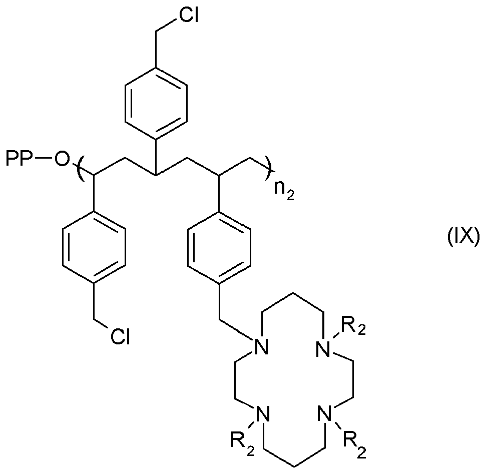 where:
- R₂ has the meaning already given in Claim 4;
- m₂ is an integer from 10 to 1000;
- n₂ is an integer from 10 to 1000;
- p₂ is an integer from 10 to 1000; preferably in the formulae (VIII) and (IX):
- R₂ represents -(CH₂)₂COONa, -CH₂COOEt; -(CH₂)₂-COOEt, -(CH₂)₂-COOH, -CH₂-COOH or -CH₂-COONa.

13. Material according to any one of the preceding claims, in which the step of optional functionalisation of the free amine functional group or groups of the polyazacycloalkane is carried out by reacting the said free amine functional group or groups with a compound comprising at least one functional group capable of reacting with a free amine functional group of a polyazacycloalkane and another functional group chosen from the R₃ and R₅ groups as defined in Claim 4; preferably said compound comprising at least one functional group capable of reacting with a free amine functional group of a polyazacycloalkane and another functional group chosen from the R₃ and R₅ groups is chosen from ethyl bromoacetate and ethyl acrylate.

14. Material according to any one of the preceding claims, in which the saponification, hydrolysis, of the ester functional groups is carried out under conditions that allow complete hydrolysis of the ester functional groups; for example at 40°C for 18 hours with 0.5N sodium hydroxide.

15. Material according to any one of the preceding claims, in which the polypropylene fibres are in the form of a nonwoven.

16. Material according to any one of the preceding claims, in which the polypropylene fibres carrying peroxide and/or hydroperoxide functional groups are prepared by irradiation of polypropylene fibres by electrons under an oxidising atmosphere, for example of air or of oxygen.

17. Process for the preparation of a material composed of a polyazacycloalkane grafted on polypropylene fibres, in which the radical polymerisation of a polyazacycloalkane monomer carrying a group which can be polymerised under radical conditions is carried out in the presence of polypropylene fibres carrying peroxide and/or hydroperoxide functional groups, optionally followed by a functionalisation of the optional free amine functional groups of the polyazacycloalkane and/or by a saponification, hydrolysis of the ester functional groups optionally carried by the polyazacycloalkane.

18. Process according to Claim 17, in which said polyazacycloalkane monomer corresponds to one of the following three formulae (I), (II) and (III): 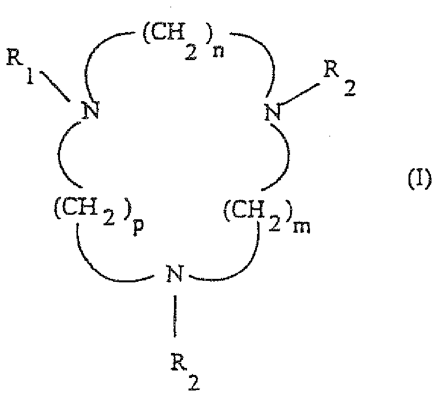 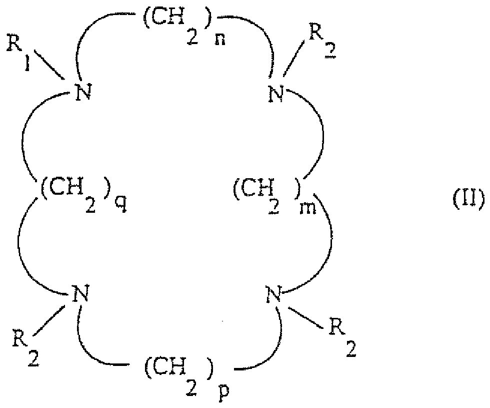 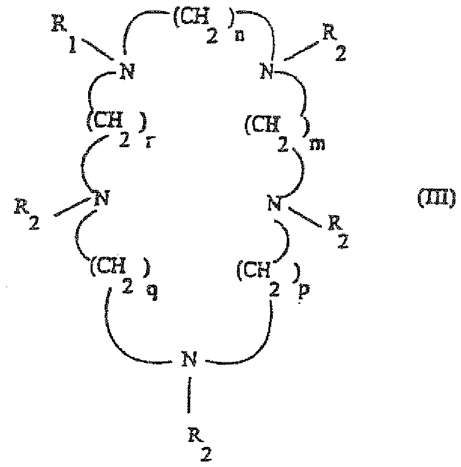 in which n, m, p, q and r, which may be identical or different, are equal to 2 or 3; R₁ is a group which can be polymerised under radical conditions; R₂ represents a hydrogen atom or a (CH₂)₂-R₃ group, R₃ being a group chosen from the group consisting of CONH₂, CH₂OH, CN and COOR₄, R₄ representing H, a cation, such as Na, an alkyl group of 1 to 10 carbon atoms or a benzyl group, or R₂ represents the -(CH₂)-R₅ group, R₅ representing COOR₆ or PO₃R₆, R₆ representing an alkyl group of 1 to 10 carbon atoms, a hydrogen atom or a cation, such as Na.

19. Process according to Claim 17 or 18, in which said group which can be polymerised under radical conditions is chosen from the groups comprising a vinyl, styrene or acrylic group such as acrylonitrile, acrylate, acrylic acid, vinylpyridine, vinylalkoxysilane and 4-vinylbenzyl groups.

20. Process according to any one of Claims 17 to 19, in which said polyazacycloalkane monomer is chosen from N-(4-vinylbenzyl)cyclam and N,N',N"-tris(2-ethoxycarbonylethyl)-N"'-(4-vinylbenzyl)cyclam.

21. Process according to any one of Claims 17 to 20, in which the polymerisation is carried out at a temperature of 80°C to 120°C, for example of 105°C, in a solvent chosen from DMF, toluene, acetonitrile, and for a time of 2 to 24 hours, for example of 13 hours.

22. Process for the preparation of a material composed of a polyazacycloalkane grafted on polypropylene fibres, said process comprising the following successive steps:
a) the radical polymerisation of one or more monomers which can be polymerised under radical conditions is carried out in the presence of polypropylene fibres carrying peroxide and/or hydroperoxide functional groups, at least one of said monomers comprising at least one functional group capable of reacting with a free amine functional group of a polyazacycloalkane; said functional group being preferably chosen from electrophilic carbons, for example carbons carrying halide, OTs or OTf functional groups, and the like, or carboxylic acid derivatives, for example acyl halides, anhydrides, esters, and the like; by means of which a polymer is obtained which comprises the said functional groups capable of reacting with a free amine functional group of a polyazacycloalcane, grafted on the polypropylene;
b) said polymer is reacted with a polyazacycloalkane;
c) optionally, the free amine functional group or groups, still present, of the polyazacycloalkane are functionalised;
d) optionally, the ester functional groups optionally carried by the polyazacycloalkane are saponified, hydrolysed.

23. Process according to Claim 22, wherein the monomers are chosen from vinyl, styrene and acrylic monomers, such as chloromethylstyrene and maleic anhydride.

24. Process according to Claim 23, in which, during stage a), the radical polymerisation of chloromethylstyrene alone is carried out.

25. Process according to Claim 24, in which the polymerisation of step a) is carried out in a solvent chosen from dimethylformamide (DMF), toluene, water or the water/methanol mixture; at a temperature of 80 to 120°C; at a concentration by weight of chloromethylstyrene in the solvent of 30 to 55%; and for a time of 2 to 20 hours; for example the polymerisation of step a) is carried out in the solvent pure DMF; at a temperature of 80 to 115°C, preferably of 115°C; at a concentration by weight of the chloromethylstyrene in the DMF of 40%; and for a time of 10 hours.

26. Process according to Claim 23, in which, during stage a), the radical polymerisation of maleic anhydride and chloromethylstyrene is carried out.

27. Process according to Claim 26, in which the polymerisation is carried out in a solvent chosen from toluene and acetone; at a temperature of 75 to 95°C; at a concentration by weight of the monomers in the solvent of 10% to 80%, for example 30%; and for a time of 4 to 30 hours.

28. Process according to any one of Claims 22 to 27, in which said polyazacycloalkane is chosen from the polyazacycloalkanes corresponding to one of the three following formulae (V), (VI) and (VII): 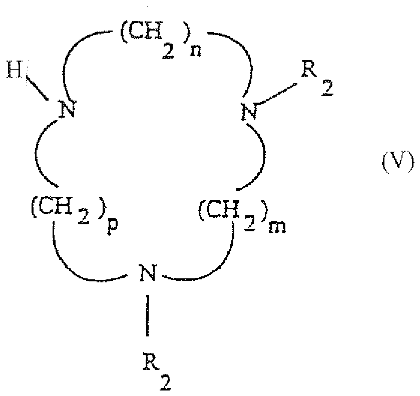 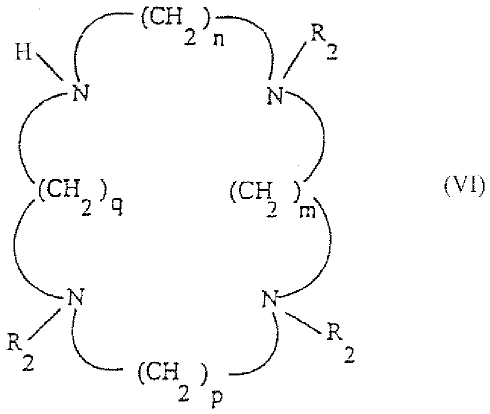 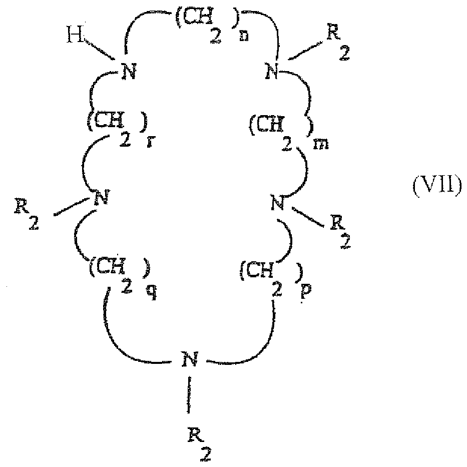 in which n, m, p, q and r, which may be identical or different, are equal to 2 or 3; R₂ represents a hydrogen atom or a (CH₂)₂-R₃ group, R₃ being a group chosen from the group consisting of CONH₂, CH₂OH, CN and COOR₄, R₄ representing H, a cation, such as Na, an alkyl group of 1 to 10 carbon atoms or a benzyl group; or R₂ represents the -(CH₂)-R₅ group, R₅ representing COOR₆ or PO₃R₆, R₆ representing an alkyl group of 1 to 10 carbon atoms, a hydrogen atom or a cation, such as Na; for example said polyazacycloalkane is chosen from the following compounds:

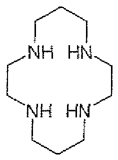

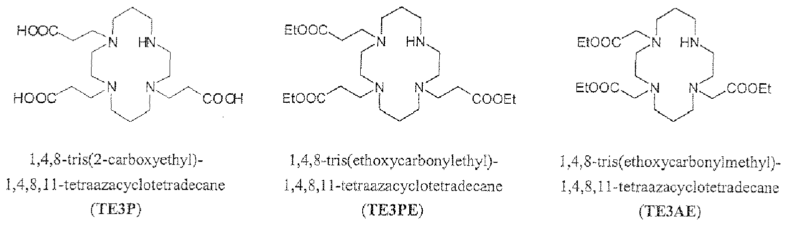

29. Process according to any one of Claims 17 to 28, in which the step of optional functionalisation of the free amine functional group or groups of the polyazacycloalkane is carried out by reacting said free amine functional group or groups with a compound having at least one functional group capable of reacting with a free amine functional group of a polyazacycloalkane and a functional group chosen from the R₃ and R₅ groups as defined in Claim 4; preferably said compound comprising at least one functional group capable of reacting with a free amine functional group of a polyazacycloalkane and another functional group chosen from the R₃ and R₅ groups is chosen from ethyl bromoacetate and ethyl acrylate.

30. Process according to any one of Claims 24 to 41, in which the saponification, hydrolysis, of the ester functional groups is carried out under conditions that allow complete hydrolysis of the ester functional groups; for example at 40°C for 18 hours with 0.5N sodium hydroxide.

31. Process according to any one of Claims 17 to 30, in which the polypropylene fibres are in the form of a nonwoven.

32. Process according to any one of Claims 17 to 31, in which the polypropylene fibres carrying peroxide and/or hydroperoxide functional groups are prepared by irradiation of polypropylene fibres by electrons; for example at a dose of 20 to 60 kGy, preferably of 40 kGy, under an oxidising atmosphere, for example of air or of oxygen.

33. Process for removing metal cations present in a liquid, in which the said liquid is brought into contact with a material according to any one of Claims 1 to 16.

34. Process according to Claim 33, in which the contacting operation is carried out at a temperature of 20 to 60°C, for example 50°C.

35. Process according to Claim 33, which is carried out continuously, said material being placed in at least one column through which a stream of the liquid to be treated passes.

36. Process according to Claim 33, additionally comprising a stage of regeneration of the said material when the latter is saturated with the fixed metals.

37. Process according to Claim 33, in which said metal cations are cations of metals chosen from transition metals, heavy metals, metals from Group IIIA of the Periodic Table, lanthanides, actinides and alkaline earth metals; for example said metal cations are chosen from the U, Pu, Am, Ce, Eu, Al, Gd, Cr, Mn, Fe, Co, Ni, Cu, Zn, Ag, Cd, B, Au, Hg, Pb, As, Ca, Sr, Mg, Be, Ba and Ra cations.

38. Process according to any one of Claims 33 to 37, in which the treated liquid is an aqueous liquid, such as a radioactive aqueous effluent of low activity, like the aqueous effluent of low activity resulting from the industrial evaporator of the plant for the treatment of the effluents from a nuclear installation.

## Patentansprüche

1. Material, umfassend ein auf Polypropylenfasern gepfropftes Polyazacycloalkan.

2. Material nach Anspruch 1, welches hergestellt werden kann durch Radikalpolymerisation eines Polyazacycloalkanmonomers, das eine radikalisch polymerisierbare Gruppe trägt, in Gegenwart von Polypropylenfasern, die Peroxid- und/oder Hydroperoxidfunktionen tragen, gegebenenfalls gefolgt von einer Funktionalisierung von gegebenenfalls vorhandenen freien Aminfunktionen des Polyazacycloalkans und/oder einer Verseifung, Hydrolyse, der Esterfunktionen, die das Polyazacycloalkan gegebenenfalls trägt.

3. Material nach Anspruch 1, welches hergestellt werden kann durch die folgenden aufeinanderfolgenden Schritte:
a) - man bewirkt die Radikalpolymerisation von einem oder mehreren radikalisch polymerisierbaren Monomeren in Gegenwart von Polypropylenfasern, die Peroxid- und/oder Hydroperoxidfunktionen tragen, wobei wenigstens eines der besagten Monomere wenigstens eine Funktion umfasst, die mit einer freien Aminfunktion eines Polyazacycloalkans reagieren kann; wodurch man ein auf das Polypropylen gepfropftes Polymer enthält, welches die besagten Funktionen, die mit einer freien Aminfunktion eines Polyazacycloalkans reagieren können, umfasst;
b) - man lässt das Polymer mit einem Polyazacycloalkan reagieren;
c) - man bewirkt gegebenenfalls eine Funktionalisierung der freien Aminfunktion(en) des Polyazacycloalkans, die gegebenenfalls noch vorhanden ist (sind);
d) - man bewirkt gegebenenfalls eine Verseifung, Hydrolyse, der Esterfunktionen, die das Polyazacycloalkan gegebenenfalls trägt.

4. Material nach Anspruch 2, in welchem das Polyazacycloalkanmonomer einer der folgenden drei Formeln (I), (II), (III) entspricht: 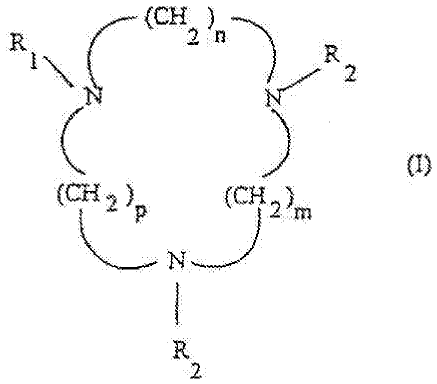 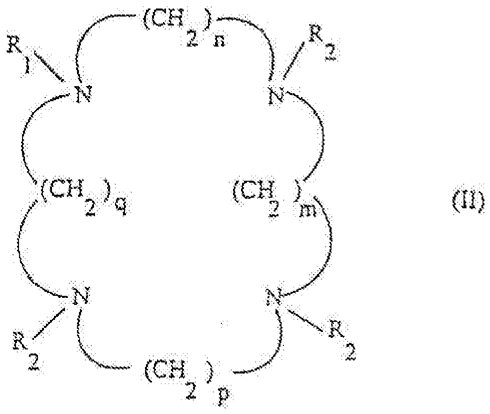 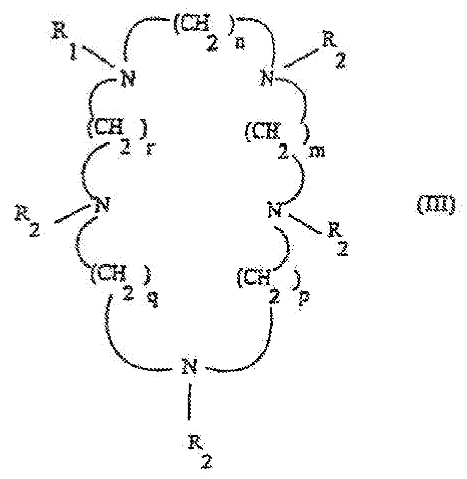 in welchen n, m, p, q, r, welche gleich oder verschieden sein können, 2 oder 3 betragen; R₁ eine radikalisch polymerisierbare Gruppe ist; R₂ ein Wasserstoffatom oder eine Gruppe (CH₂)₂-R₃ bedeutet, wobei R₃ eine Gruppe ist, die ausgewählt ist aus der Gruppe bestehend aus CONH₂, CH₂OH, CN und COOR₄, wobei R₄ H, ein Kation wie Na oder eine Alkylgruppe mit 1 bis 10C oder Benzyl bedeutet; oder R₂ die Gruppe -(CH₂)-R₅ bedeutet, wobei R₅ COOR₆ oder PO₃R₆ bedeutet, wobei R₆ eine Alkylgruppe mit 1 bis 10C, ein Wasserstoffatom oder ein Kation wie Na bedeutet.

5. Material nach Anspruch 2 oder 4, in welchem die radikalisch polymerisierbare Gruppe ausgewählt ist aus den Gruppen, die eine Vinylgruppe, Styrolgruppe oder Acrylgruppe umfassen, vorzugsweise ist die radikalisch polymerisierbare Gruppe ausgewählt aus Acrylnitril-, Acrylat-, Acrylsäure-, Vinylpyridin-, Vinylalkoxysilan- und 4-Vinylbenzylgruppen.

6. Material nach einem der Ansprüche 2 und 4 bis 5, in welchem das Polyazacycloalkanmonomer ausgewählt ist aus N-(4-Vinylbenzyl)-cyclam und N,N',N"-Tris(2-ethoxycarbonylethyl)-N"'-(4-vinylbenzyl)-cyclam.

7. Material nach einem der Ansprüche 2 und 4 bis 5, welches der folgenden Formel (IV) entspricht: 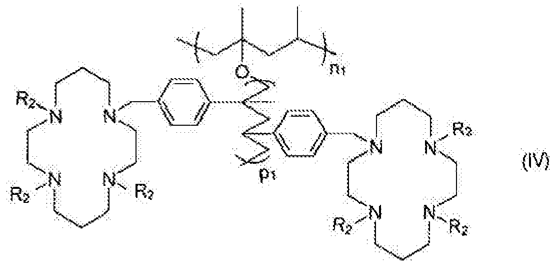 in welcher:
- R₂ die bereits in Anspruch 4 angegebene Bedeutung hat und vorzugsweise H oder CH₂CH₂COOEt oder CH₂CH₂COOH oder CH₂CH₂COONa oder CH₂COOEt oder CH₂COOH oder CH₂COONa bedeutet;
- n₁ eine ganze Zahl von 100 bis 3000 ist;
- p₁ eine ganze Zahl von 10 bis 1000 ist.

8. Material nach Anspruch 3, in welchem die Funktion, die mit der Aminfunktion des Polyazacycloalkans reagieren kann, ausgewählt ist aus elektrophilen Kohlenstoffen, z. B. Kohlenstoffen, die Halogenid, OTs, OTf ...-Funktionen tragen, oder Carbonsäurederivaten z. B. Acylhalogeniden, Anhydriden, Estern ....

9. Material nach Anspruch 3 oder 8, in welchem die besagten Monomere ausgewählt sind aus Vinylmonomeren, Styrolmonomeren und Acrylmonomeren wie etwa Chlormethylstyrol und Maleinsäureanhydrid.

10. Material nach Anspruch 9, in welchem man am Ende des ersten Schritts ein auf Polypropylenfasern gepfropfes Homopolymer von Chlormethylstyrol oder ein auf Propylenfasern gepfropfes alternierendes Copolymer von Chlormethylstyrol und Maleinsäureanhydrid: Poly(maleinsäureanhydrid-alt-chlormethylstyrol) erhält.

11. Material nach einem der Ansprüche 3 und 8 bis 10, in welchem das Polyazacycloalkan ausgewählt ist aus Polyazacycloalkanen, die eine der folgenden drei Formeln (V), (VI), (VII) entsprechen: 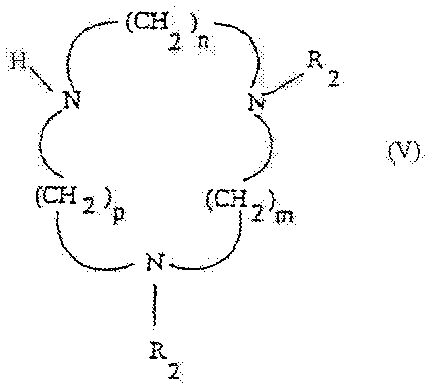 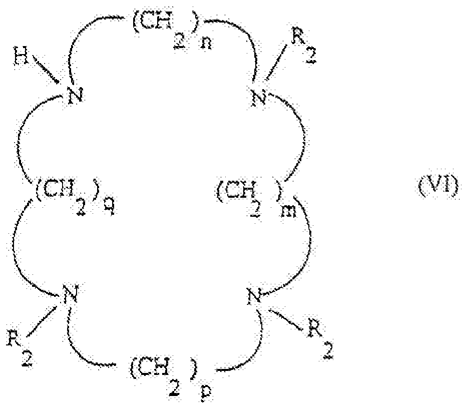 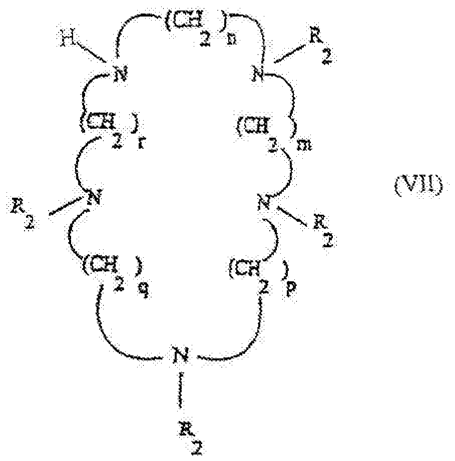 in welchen n, m, p, q, r, welche gleich oder verschieden sein können, 2 oder 3 betragen; R₂ ein Wasserstoffatom oder eine Gruppe (CH₂)₂-R₃ bedeutet, wobei R₃ eine Gruppe ist, die ausgewählt ist aus der Gruppe bestehend aus CONH₂, CH₂OH, CN und COOR₄, wobei R₄ H, ein Kation wie Na oder eine Alkylgruppe mit 1 bis 10C oder Benzyl bedeutet; oder R₂ die Gruppe -(CH₂)-R₅ bedeutet, wobei R₅ COOR₆ oder PO₃R₆ bedeutet, wobei R₆ eine Alkylgruppe mit 1 bis 10C, ein Wasserstoffatom oder ein Kation wie Na bedeutet; vorzugsweise ist das Polyazacycloalkan ausgewählt aus den folgenden Verbindungen:

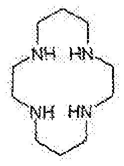

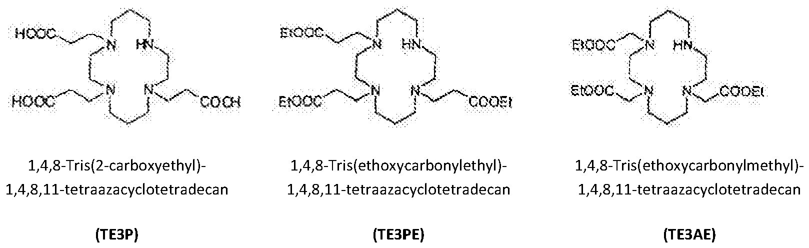

12. Material nach einem der Ansprüche 3 und 8 bis 11, welches der folgenden Formel (VIII) oder (IX) entspricht: 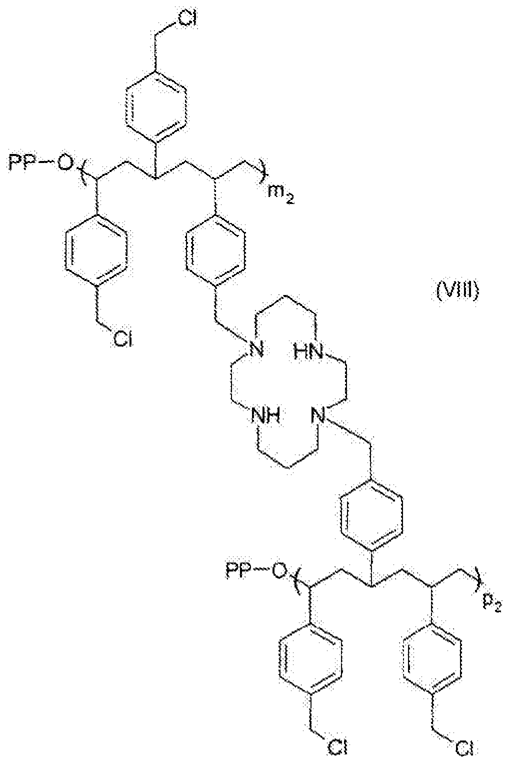 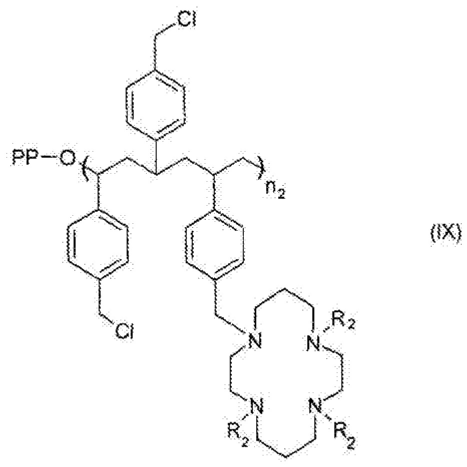 wobei:
- R₂ die bereits in Anspruch 4 angegebene Bedeutung hat;
- m₂ eine ganze Zahl von 10 bis 1000 ist;
- n₂ eine ganze Zahl von 10 bis 1000 ist;
- p₂ eine ganze Zahl von 10 bis 1000 ist;
vorzugsweise bedeutet in den Formeln (VIII) und (IX)
- R₂: (CH₂)₂COONa, -CH₂COOEt, -(CH₂)₂-COOEt, -(CH₂)₂-COOH, -CH₂-COOH oder -CH₂-COONa.

13. Material nach einem der vorangehenden Ansprüche, in welchem der optionale Schritt der Funktionalisierung der freien Aminfunktion(en) des Polyazacycloalkans ausgeführt wird, indem man die freie(n) Aminfunktion(en) mit einer Verbindung reagieren lässt, die wenigstens eine Funktion, die mit einer freien Aminfunktion eines Polyazacycloalkans reagieren kann, und eine andere Funktion, ausgewählt aus den Gruppen R₃ und R₅, wie sie in Anspruch 4 definiert sind, umfasst; vorzugsweise ist die Verbindung, die wenigstens eine Funktion, die mit einer freien Aminfunktion eines Polyazacycloalkans reagieren kann, und eine andere Funktion, ausgewählt aus den Gruppen R₃ und R₅, umfasst, ausgewählt aus Ethylbromacetat und Ethylacrylat.

14. Material nach einem der vorangehenden Ansprüche, in welchem die Verseifung, Hydrolyse, der Esterfunktionen unter Bedingungen durchgeführt wird, die eine vollständige Hydrolyse der Esterfunktionen ermöglichen, z. B. bei 40 °C während 18 Stunden mit 0,5 N Natriumcarbonat (soude).

15. Material nach einem der vorangehenden Ansprüche, in welchem die Polypropylenfasern in Form eines Faservlieses vorliegen.

16. Material nach einem der vorangehenden Ansprüche, in welchem die Polypropylenfasern, die Peroxid- und/oder Hydroperoxidfunktionen tragen, durch Elektronenbestrahlung von Polypropylenfasern unter einer oxidierenden Atmosphäre, z. B. von Luft oder Sauerstoff, hergestellt werden.

17. Verfahren zur Herstellung eines Materials, das aus einem auf Polypropylenfasern gepfropften Po-Iyazacycloalkan besteht, in welchem man die Radikalpolymerisation eines Polyazacycloalkanmonomers, das eine radikalisch polymerisierbare Gruppe trägt, in Gegenwart von Polypropylenfasern, die Peroxid- und/oder Hydroperoxidfunktionen tragen, durchführt, gegebenenfalls gefolgt von einer Funktionalisierung von gegebenenfalls vorhandenen freien Aminfunktionen des Polyazacycloalkans und/oder einer Verseifung, Hydrolyse, von Esterfunktionen, die das Polyazacycloalkan gegebenenfalls trägt.

18. Verfahren nach Anspruch 17, in welchem das Polyazacycloalkanmonomer einer der folgenden drei Formeln (I), (II), (III) entspricht: 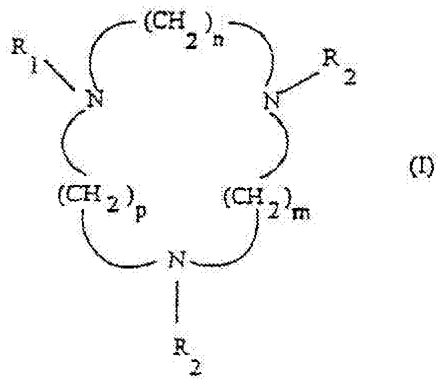 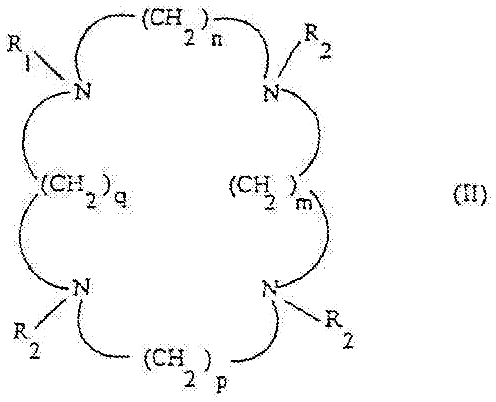 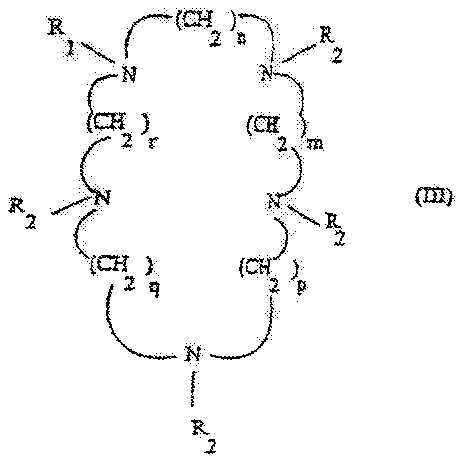 in welchen n, m, p, q, r, welche gleich oder verschieden sein können, 2 oder 3 betragen; R₁ eine radikalisch polymerisierbare Gruppe ist; R₂ ein Wasserstoffatom oder eine Gruppe (CH₂)₂-R₃ bedeutet, wobei R₃ eine Gruppe ist, die ausgewählt ist aus der Gruppe bestehend aus CONH₂, CH₂OH, CN und COOR₄, wobei R₄ H, ein Kation wie Na oder eine Alkylgruppe mit 1 bis 10C oder Benzyl bedeutet; oder R₂ die Gruppe -(CH₂)-R₅ bedeutet, wobei R₅ COOR₆ oder PO₃R₆ bedeutet, wobei R₆ eine Alkylgruppe mit 1 bis 10C, ein Wasserstoffatom oder ein Kation wie Na bedeutet.

19. Verfahren nach Anspruch 17 oder 18, in welchem die radikalisch polymerisierbare Gruppe ausgewählt ist aus den Gruppen, umfassend eine Vinylgruppe, Styrolgruppe, Acrylgruppe, wie Acrylnitril-, Acrylat-, Acrylsäure-, Vinylpyridin-, Vinylalkoxysilan- und 4-Vinylbenzylgruppen.

20. Verfahren nach einem der Ansprüche 17 bis 19, in welchem das Polyazacycloalkanmonomer ausgewählt ist aus N-(4-Vinylbenzyl)-cyclam und N,N',N"-Tris(2-ethoxycarbonylethyl)-N"'-(4-vinylbenzyl)-cyclam.

21. Verfahren nach einem der Ansprüche 17 bis 20, in welchem die Polymerisation bei einer Temperatur von 80 °C bis 120 °C, z. B. bei 105 °C, in einem Lösungsmittel ausgewählt aus DMF, Toluol, Acetonitril, und während einer Dauer von 2 bis 24 Stunden, z. B. 13 Stunden, durchgeführt wird.

22. Verfahren zur Herstellung eines Materials, das aus einem auf Polypropylenfasern gepfropften Polyazacycloalkan besteht, wobei das Verfahren die folgenden aufeinanderfolgenden Schritte umfasst:
a) - man bewirkt die Radikalpolymerisation von einem oder mehreren radikalisch polymerisierbaren Monomeren in Gegenwart von Polypropylenfasern, die Peroxid- und/oder Hydroperoxidfunktionen tragen, wobei wenigstens eines der besagten Monomere wenigstens eine Funktion umfasst, die mit einer freien Aminfunktion eines Polyazacycloalkans reagieren kann, vorzugsweise ausgewählt aus elektrophilen Kohlenstoffen, z. B. Kohlenstoffen, die Halogenid, OTs, OTf ... -Funktionen tragen, oder Carbonsäurederivaten, z. B. Acylhalogeniden, Anhydriden, Estern ...; wodurch man ein auf das Polypropylen gepfropftes Polymer erhält, das die besagten Funktionen, die mit einer freien Aminfunktion eines Polyazacycloalkans reagieren können, umfasst;
b) - man lässt das Polymer mit einem Polyazacycloalkan reagieren;
c) - man bewirkt gegebenenfalls eine Funktionalisierung der freien Aminfunktion(en) des Polyazacycloalkans, die gegebenenfalls noch vorhanden ist (sind);
d) - man bewirkt gegebenenfalls eine Verseifung, Hydrolyse, der Esterfunktionen, die das Polyazacycloalkan gegebenenfalls trägt.

23. Verfahren nach Anspruch 22, in welchem die Monomere ausgewählt sind aus Vinylmonomeren, Styrolmonomeren und Acrylmonomeren, wie etwa Chlormethylstyrol und Maleinsäureanhydrid.

24. Verfahren nach Anspruch 23, in welchem man bei dem Schritt a) eine Radikalpolymerisation von Chlormethylstyrol allein bewirkt.

25. Verfahren nach Anspruch 24, in welchem die Polymerisation von Schritt a) in einem Lösungsmittel, ausgewählt aus Dimethylformamid (DMF), Toluol, Wasser, einem Wasser/Methanol-Gemisch; bei einer Temperatur von 80 bis 120 °C; bei einer Massenkonzentration von Chlormethylstyrol in dem Lösungsmittel von 30 bis 55 %; und während einer Dauer von 2 bis 20 Stunden durchgeführt wird; z. B. wird die Polymerisation von Schritt a) in einem reinen DMF-Lösungsmittel bei einer Temperatur von 80 bis 115 °C, vorzugsweise bei 115 °C; bei einer Massenkonzentration von Chlormethylstyrol in DMF von 40 %; und während einer Dauer von 10 Stunden durchgeführt.

26. Verfahren nach Anspruch 23, in welchem man bei dem Schritt a) eine Radikalpolymerisation von Maleinsäureanhydrid und Chlormethylstyrol bewirkt.

27. Verfahren nach Anspruch 26, in welchem die Polymerisation in einem Lösungsmittel, ausgewählt aus Toluol und Aceton; bei einer Temperatur von 75 bis 95 °C; bei einer Massenkonzentration der Monomere in dem Lösungsmittel von 10 % bis 80 %, z. B. 30 %; und während einer Dauer von 4 bis 30 Stunden durchgeführt wird.

28. Verfahren nach einem der Ansprüche 22 bis 27, in welchem das Polyazacycloalkan ausgewählt ist aus den Polyazacycloalkanen, die einer der folgenden drei Formeln (V), (VI), (VII) entsprechen: 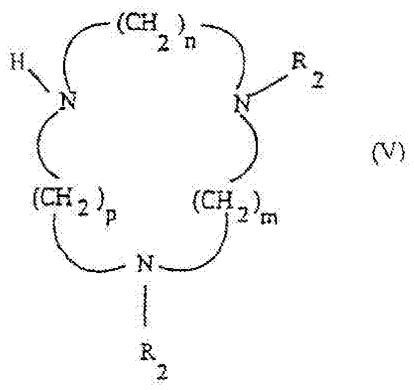 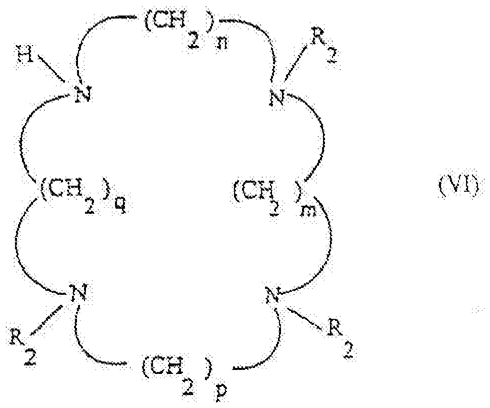 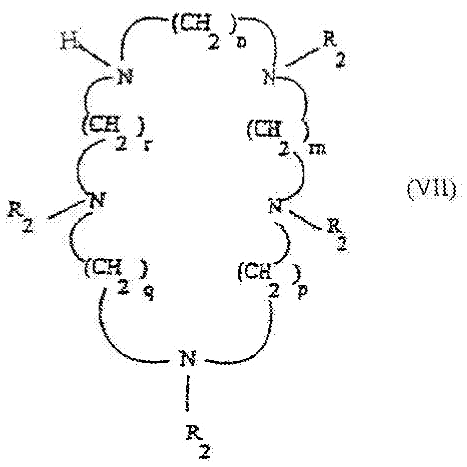 in welchen n, m, p, q, r, welche gleich oder verschieden sein können, 2 oder 3 betragen; R₂ ein Wasserstoffatom oder eine Gruppe (CH₂)₂-R₃ bedeutet, wobei R₃ eine Gruppe ist, die ausgewählt ist aus der Gruppe bestehend aus CONH₂, CH₂OH, CN und COOR₄, wobei R₄ H, ein Kation wie Na, eine Alkylgruppe mit 1 bis 10C oder Benzyl bedeutet; oder R₂ die Gruppe -(CH₂)-R₅ bedeutet, wobei R₅ COOR₆ oder PO₃R₆ bedeutet, wobei R₆ eine Alkylgruppe mit 1 bis 10C, ein Wasserstoffatom oder ein Kation wie Na bedeutet; z. B. ist das Polyazacycloalkan ausgewählt aus den folgenden Verbindungen:

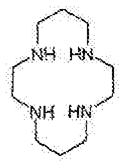

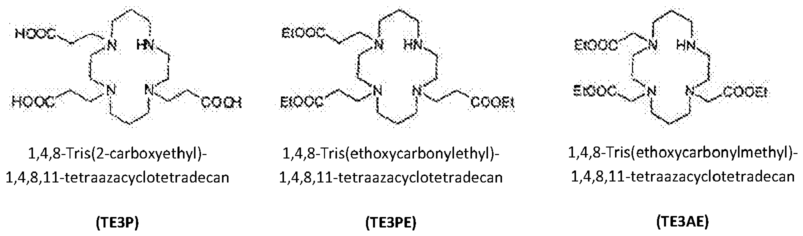

29. Verfahren nach einem der Ansprüche 17 bis 28, in welchem der optionale Schritt der Funktionalisierung der freien Aminfunktion(en) des Polyazacycloalkans ausgeführt wird, indem man die freie(n) Aminfunktion(en) mit einer Verbindung reagieren lässt, die wenigstens eine Funktion, die mit einer freien Aminfunktion eines Polyazacycloalkans reagieren kann, und eine Funktion, ausgewählt aus den Gruppen R₃ und R₅, wie sie in Anspruch 4 definiert sind, aufweist, vorzugsweise ist die Verbindung, die wenigstens eine Funktion, die mit einer freien Aminfunktion eines Polyazacycloalkans reagieren kann, und eine andere Funktion, ausgewählt aus den Gruppen R₃ und R₅, umfasst, ausgewählt aus Ethylbromacetat und Ethylacrylat.

30. Verfahren nach einem der Ansprüche 17 bis 29, in welchem die Verseifung, Hydrolyse, der Esterfunktionen unter Bedingungen durchgeführt wird, die eine vollständige Hydrolyse der Esterfunktionen ermöglichen, z. B. bei 40 °C während 18 Stunden mit 0,5 N Natriumhydroxid.

31. Verfahren nach einem der Ansprüche 17 bis 30, in welchem die Polypropylenfasern in Form eines Faservlieses vorliegen.

32. Verfahren nach einem der Ansprüche 17 bis 31, in welchem die Polypropylenfasern, die Peroxid- und/oder Hydroperoxidfunktionen tragen, durch Elektronenbestrahlung von Polypropylenfasern z. B. mit einer Dosis von 20 bis 60 kGy, vorzugsweise 40 kGy, unter einer oxidierenden Atmosphäre z. B. von Luft oder Sauerstoff hergestellt werden.

33. Verfahren zur Eliminierung von Metallkationen, die in einer Flüssigkeit enthalten sind, wobei die Flüssigkeit mit einem Material nach einem der Ansprüche 1 bis 16 in Kontakt gebracht wird.

34. Verfahren nach Anspruch 33, in welchem das Inkontaktbringen bei einer Temperatur von 20 bis 60 °C, z. B. bei 50 °C, erfolgt.

35. Verfahren nach Anspruch 33, das kontinuierlich durchgeführt wird, wobei das Material in wenigstens einer Säule platziert wird, die von einem Strom der zu behandelnden Flüssigkeit durchströmt wird.

36. Verfahren nach Anspruch 33, außerdem umfassend einen Schritt der Regeneration des Materials, wenn dieses mit den fixierten Metallen gesättigt ist.

37. Verfahren nach Anspruch 33, in welchem die Metallkationen Kationen von Metallen sind, die ausgewählt sind aus Übergangsmetallen, Schwermetallen, Metallen der Gruppe IIIA des Periodensystems, Lanthanoiden, Actinoiden, Erdalkalimetallen, z. B. die Metallkationen ausgewählt sind aus den Kationen U, Pu, Am, Ce, Eu, Al, Gd, Cr, Mn, Fe, Co, Ni, Cu, Zn, Ag, Cd, B, Au, Hg, Pb, As, Ca, Sr, Mg, Be, Ba und Ra.

38. Verfahren nach einem der Ansprüche 33 bis 37, in welchem die behandelte Flüssigkeit eine wässrige Flüssigkeit wie z. B. ein radioaktives Abwasser mit geringer Aktivität ist, wie etwa das Abwasser mit geringer Aktivität, das von dem industriellen Verdampfer der Einrichtung zur Abwasserbehandlung einer Nuklearanlage abgegeben wird.
